# EUROPÄISCHE PATENTSCHRIFT

(11) **EP 4 025 388 B1**
(45) Veröffentlichungstag und Bekanntmachung des Hinweises auf die Patenterteilung: **09.12.2026**
(21) Anmeldenummer: 20765254.6
(22) Anmeldetag: 01.09.2020
(51) Int. Cl.: B25F 5/00, B23Q 17/24, B27G 19/00, B27G 21/00

(54) **WERKZEUGMASCHINENVORRICHTUNG**
MACHINE TOOL DEVICE
DISPOSITIF MACHINE OUTIL

(30) Priorität: 02.09.2019 DE 102019213216; 29.05.2020 DE 102020206756
(43) Veröffentlichungstag der Anmeldung: 13.07.2022
(73) Patentinhaber: Robert Bosch GmbH, 70442 Stuttgart (DE)
(72) Erfinder: RIGGENMANN, Simon, 70563 Stuttgart (DE); DENNIS, Daniel, 72622 Nuertingen (DE); WIKER, Juergen, 70374 Stuttgart (DE); ESENWEIN, Florian, 70771 Leinfelden-Echterdingen (DE)
(86) Internationale Anmeldenummer: PCT/EP2020/074289
(87) Internationale Veröffentlichungsnummer: WO 2021/043740

(56) Entgegenhaltungen:
- WO-A1-2018/177932
- DE-A1- 102010 041 726
- DE-A1- 102015 223 743

## Beschreibung

### Stand der Technik

Es ist bereits eine Werkzeugmaschinenvorrichtung mit zumindest einem motorisch antreibbaren Bearbeitungswerkzeug, mit zumindest einer, insbesondere kapazitiven, Sensoreinheit, die dazu eingerichtet ist, zumindest einen Fremdkörper in zumindest einem Detektionsbereich um das Bearbeitungswerkzeug zu erfassen, und mit zumindest einer Steuer- und/oder Regeleinheit, die dazu eingerichtet ist, in Abhängigkeit von zumindest einem Signal der Sensoreinheit zumindest eine Aktion auszulösen, vorgeschlagen worden. DE 10 2010 041726 A1 offenbart eine Werkzeugmaschinenvorrichtung gemäß der Präambel von Anspruch 1.

### Offenbarung der Erfindung

Die Erfindung geht aus von einer Werkzeugmaschinenvorrichtung mit zumindest einem motorisch antreibbaren Bearbeitungswerkzeug, mit zumindest einer, insbesondere kapazitiven, Sensoreinheit, die dazu eingerichtet ist, zumindest einen Fremdkörper in zumindest einem Detektionsbereich um das Bearbeitungswerkzeug zu erfassen, und mit zumindest einer Steuer- und/oder Regeleinheit, die dazu eingerichtet ist, in Abhängigkeit von zumindest einem Signal der Sensoreinheit zumindest eine Aktion auszulösen.

Es wird vorgeschlagen, dass die Sensoreinheit zumindest eine Antenne umfasst, die dazu eingerichtet ist, zumindest ein elektrisches und/oder magnetisches Feld auszustrahlen, das den zumindest einen Detektionsbereich definiert, und/oder den zumindest einen Fremdkörper in Abhängigkeit von zumindest einer Änderung zumindest eines elektrischen und/oder magnetischen Felds zu erfassen.

Vorzugsweise umfasst eine Werkzeugmaschine die Werkzeugmaschinenvorrichtung. Vorzugsweise ist die Werkzeugmaschinenvorrichtung als eine Handwerkzeugmaschinenvorrichtung ausgebildet. Insbesondere ist die Werkzeugmaschine, die die Werkzeugmaschinenvorrichtung umfasst, als eine Handwerkzeugmaschine ausgebildet. Bevorzugt ist die Werkzeugmaschinenvorrichtung als eine elektrisch betriebene Werkzeugmaschinenvorrichtung ausgebildet. Insbesondere ist die Werkzeugmaschine als eine Elektrowerkzeugmaschine ausgebildet. Insbesondere ist das Bearbeitungswerkzeug von zumindest einem Elektromotor der Werkzeugmaschinenvorrichtung antreibbar. Vorzugsweise umfasst die Werkzeugmaschinenvorrichtung zumindest eine elektrische Energiespeichereinheit, insbesondere einen Akkumulator, zu einer Energieversorgung zumindest des Elektromotors. Alternativ ist denkbar, dass die Werkzeugmaschinenvorrichtung als eine pneumatisch betriebene Werkzeugmaschinenvorrichtung, als eine Benzin-betriebene Werkzeugmaschinenvorrichtung o. dgl. ausgebildet ist. Vorzugsweise ist die Werkzeugmaschinenvorrichtung zu einer schneidenden, zu einer sägenden, zu einer hobelnden, zu einer schleifenden, zu einer fräsenden, zu einer nagelnden, zu einer bohrenden oder zu einer anderen, einem Fachmann als sinnvoll erscheinenden Bearbeitung eines Werkstücks vorgesehen. Insbesondere kann die Werkzeugmaschine als eine Säge, insbesondere als eine Stichsäge, als eine Säbelsäge, als eine Kettensäge o. dgl., als eine Nagelpistole, als eine Heckenschere, als eine Gartenschere, als eine Fräse, insbesondere als eine Oberfräse oder als eine Kantenfräse, o. dgl. ausgebildet sein. Alternativ ist vorstellbar, dass die Werkzeugmaschine als eine Tauchsäge, als ein Tacker, als ein Fuchsschwanz, als eine Schaumstoffsäge, als ein Trockenwandschneider, als eine Flachdübelfräse, als ein Bandschleifer, als ein Rotationswerkzeug, als ein Multischneider, als ein, insbesondere autonomer, Rasenmäher, als eine Bohrmaschine, als ein Schlaghammer, als ein Trockenbauschrauber, als eine Heißluftpistole, als ein Freischneider, als ein Häcksler oder als eine andere, einem Fachmann als sinnvoll erscheinende Werkzeugmaschine ausgebildet ist. Insbesondere ist das Bearbeitungswerkzeug als ein Sägeblatt, insbesondere als ein Stichsägeblatt oder als ein Säbelsägeblatt, als eine Sägekette, als ein Nagel, als eine Klinge, als ein Fräswerkzeug oder als ein anderes, einem Fachmann als sinnvoll erscheinendes Bearbeitungswerkzeug ausgebildet. Unter "vorgesehen" soll insbesondere speziell ausgestattet und/oder speziell eingerichtet verstanden werden. Unter "eingerichtet" soll insbesondere speziell programmiert und/oder speziell ausgelegt verstanden werden. Darunter, dass ein Objekt zu einer bestimmten Funktion vorgesehen oder eingerichtet ist, soll insbesondere verstanden werden, dass das Objekt diese bestimmte Funktion in zumindest einem Anwendungs- und/oder Betriebszustand erfüllt und/oder ausführt.

Die Sensoreinheit ist vorzugsweise als eine elektrische, insbesondere als eine kapazitive, Sensoreinheit ausgebildet. Insbesondere ist die Sensoreinheit verschieden von einer optischen, einer akustischen, einer haptischen o. dgl. Sensoreinheit ausgebildet. Insbesondere ist die Sensoreinheit zu einer Annäherungsdetektion eingerichtet. Vorzugsweise ist die Sensoreinheit dazu eingerichtet, den Fremdkörper vor einem Kontakt mit dem Bearbeitungswerkzeug zu erfassen. Insbesondere ist die Sensoreinheit dazu eingerichtet, den Fremdkörper in zumindest einem bestimmten Abstand von dem Bearbeitungswerkzeug, insbesondere innerhalb des Detektionsbereichs um das Bearbeitungswerkzeug, zu erfassen. Der Detektionsbereich ist insbesondere ein sich um das Bearbeitungswerkzeug erstreckender Bereich, in dem die Sensoreinheit dazu in der Lage und dazu eingestellt ist, den Fremdkörper zu detektieren. Vorzugsweise erstreckt sich der Detektionsbereich asymmetrisch um das Bearbeitungswerkzeug. Bevorzugt weist der Detektionsbereich um für einen Bediener der Werkzeugmaschinenvorrichtung gefährlichen Stellen des Bearbeitungswerkzeugs, insbesondere entlang einer Schneidkante des Bearbeitungswerkzeugs, eine größere Erstreckung auf als an anderen Stellen des Bearbeitungswerkzeugs. Alternativ ist denkbar, dass der Detektionsbereich sich symmetrisch, insbesondere sphärisch, um das Bearbeitungswerkzeug erstreckt.

Unter einem "Fremdkörper" soll insbesondere ein in dem Detektionsbereich befindliches oder sich in den Detektionsbereich bewegendes Objekt verstanden werden, das insbesondere einen Bearbeitungsvorgang behindert. Der Fremdkörper kann insbesondere als ein lebendiges Objekt, insbesondere als zumindest ein Körperteil des Bedieners, beispielsweise eine Hand, ein Finger, ein Bein o. dgl., als ein Tier oder als ein anderes, einem Fachmann als sinnvoll erscheinendes lebendiges Objekt ausgebildet sein. Der Fremdkörper kann insbesondere als ein lebloses Objekt, insbesondere als ein an dem Werkstück angeordnetes und/oder in einem Nahbereich des Werkstücks verlaufendes Störobjekt, beispielhaft als ein Nagel, als eine Stromleitung, als eine Wasserleitung o. dgl., ausgebildet sein.

Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Vorzugsweise ist die Steuer- und/oder Regeleinheit signalübertragungstechnisch mit der Sensoreinheit verbunden, insbesondere über zumindest eine Signalleitung. Alternativ oder zusätzlich ist denkbar, dass die Steuer- und/oder Regeleinheit über eine drahtlose Signalverbindung signalübertragungstechnisch mit der Sensoreinheit verbunden ist. Vorzugsweise ist die Steuer- und/oder Regeleinheit dazu eingerichtet, die Sensoreinheit anzusteuern. Die Sensoreinheit ist insbesondere dazu eingerichtet, der Steuer- und/oder Regeleinheit das zumindest eine Signal, bevorzugt eine Mehrzahl von Signalen, bereitzustellen, insbesondere in Abhängigkeit von einer Erfassung von dem zumindest einen Fremdkörper in dem Detektionsbereich. Vorzugsweise ist die Steuer- und/oder Regeleinheit dazu eingerichtet, das zumindest eine von der Sensoreinheit empfangene Signal auszuwerten. Insbesondere ist die Steuer- und/oder Regeleinheit dazu eingerichtet, in Abhängigkeit von einer Auswertung des zumindest einen Signals der Sensoreinheit die zumindest eine Aktion auszulösen.

Die zumindest eine Aktion ist vorzugsweise als eine Sicherheitsfunktion, insbesondere zu einer Verhinderung oder zumindest zu einer Verminderung einer Verletzung des Bedieners, und/oder als eine Komfortfunktion, insbesondere zu einer Erleichterung einer Bedienung der Werkzeugmaschinenvorrichtung für den Bediener, ausgebildet. Die zumindest eine Aktion kann insbesondere als eine Bremsung des Bearbeitungswerkzeugs, als ein Wegbewegen des Bearbeitungswerkzeugs aus einem Gefahrenbereich, als ein Abschirmen des Bearbeitungswerkzeugs, als ein Ausgeben von zumindest einer, insbesondere optischen, akustischen und/oder haptischen, Warnmeldung, als ein Absetzen eines Notrufs oder als eine andere, einem Fachmann als sinnvoll erscheinende Aktion ausgebildet sein. Insbesondere kann die Steuer- und/oder Regeleinheit dazu eingerichtet sein, eine Mehrzahl von, insbesondere unterschiedlichen, Aktionen auszulösen. Vorzugsweise kann die Steuer- und/oder Regeleinheit dazu eingerichtet sein, in Abhängigkeit von unterschiedlichen Signalen der Sensoreinheit unterschiedliche Aktionen auszulösen. Insbesondere ist die Steuer- und/oder Regeleinheit dazu eingerichtet, in Abhängigkeit von dem zumindest einen Signal der Sensoreinheit, insbesondere zu einer Auslösung der zumindest einen Aktion, zumindest eine Reaktionseinheit der Werkzeugmaschinenvorrichtung, die dazu vorgesehen ist, die zumindest eine Aktion durchzuführen, anzusteuern. Die zumindest eine Reaktionseinheit kann insbesondere als eine Bremseinheit, als eine Abdeckeinheit, als eine Schwenkeinheit, als eine Blockiereinheit, als eine Signalausgabeeinheit, als eine Kommunikationseinheit oder als eine andere, einem Fachmann als sinnvoll erscheinende Einheit ausgebildet sein.

Die zumindest eine Antenne ist vorzugsweise dazu eingerichtet, elektrischen Strom zu leiten. Insbesondere ist die zumindest eine Antenne zylinderförmig, insbesondere kreiszylinderförmig, ausgebildet. Insbesondere ist die zumindest eine Antenne dazu eingerichtet, ein radialsymmetrisch um eine Längsachse der Antenne verteiltes elektrisches Feld auszustrahlen und/oder ein konzentrisch um die Längsachse der Antenne verteiltes magnetisches Feld auszustrahlen. Unter einer "Längsachse" eines, insbesondere kreiszylinderförmigen, Objekts soll insbesondere eine Achse verstanden werden, welche senkrecht zu einer durch Quererstreckungen, insbesondere Zylinderradien, des Objekts aufgespannten Querschnittsfläche des Objekts ausgerichtet ist. Der Ausdruck "senkrecht" soll insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Vorzugsweise ist die zumindest eine Antenne als ein Kabel, insbesondere als ein Koaxialkabel, als ein Draht o. dgl. ausgebildet. Es ist auch denkbar, dass die Antenne aus mehreren Elektroden gebildet ist. Es kann hierdurch vorteilhaft eine Einflusszone des erzeugten elektrischen und/oder magnetischen Felds kontrolliert werden. Alternativ oder zusätzlich ist denkbar, dass das Bearbeitungswerkzeug und/oder eine Abtriebswelle, auf der das Bearbeitungswerkzeug gelagert ist, die zumindest eine Antenne ausbilden/ausbildet und/oder dass die zumindest eine Antenne dazu eingerichtet ist, elektrisch mit dem Bearbeitungswerkzeug und/oder mit der Abtriebswelle zu koppeln. Bevorzugt ist das Bearbeitungswerkzeug als die zumindest eine Antenne ausgebildet, wobei die Sensoreinheit zumindest eine weitere Antenne aufweist, die getrennt von dem Bearbeitungswerkzeug ausgebildet ist. Alternativ oder zusätzlich ist vorstellbar, dass die zumindest eine Antenne getrennt von der Werkzeugmaschinenvorrichtung ausgebildet ist, insbesondere an dem Bediener, beispielsweise an einem Handschuh oder an einer Schutzbrille des Bedieners, angeordnet ist.

Insbesondere ist die zumindest eine Antenne dazu eingerichtet, zumindest ein elektromagnetisches Feld auszustrahlen. Insbesondere ist das elektrische und/oder magnetische, insbesondere elektromagnetische, Feld der zumindest einen Antenne, insbesondere eine Feldstärke und/oder eine maximale Erstreckung des elektrischen und/oder magnetischen Felds der zumindest einen Antenne, abhängig von einer an der zumindest einen Antenne anliegenden elektrischen Spannung und/oder von einem die zumindest eine Antenne durchfließenden elektrischen Strom. Insbesondere weist der Detektionsbereich zumindest im Wesentlichen eine gleiche Form auf wie das elektrische und/oder magnetische, insbesondere elektromagnetische, Feld der zumindest einen Antenne. Insbesondere ist eine Grenze des Detektionsbereichs definiert durch eine Summe aller Abstände um die zumindest eine Antenne, die eine gleiche minimale, insbesondere vorgegebene, Feldstärke des elektrischen und/oder magnetischen Felds der zumindest einen Antenne aufweisen. Vorzugsweise ist die zumindest eine Antenne in einem Nahbereich des Bearbeitungswerkzeugs angeordnet. Insbesondere kann die Sensoreinheit eine Mehrzahl von Antennen aufweisen, insbesondere zu einer Realisierung einer vollständigen Abdeckung des Bearbeitungswerkzeugs mit einem Detektionsbereich. Insbesondere kann die Sensoreinheit zumindest zwei Antennen, bevorzugt zumindest vier Antennen, besonders bevorzugt zumindest sechs Antennen und ganz besonders bevorzugt zumindest 8 Antennen aufweisen.

Vorzugsweise ist die zumindest eine Antenne dazu eingerichtet, den Fremdkörper in Abhängigkeit von einer Änderung des von der zumindest einen Antenne ausgestrahlten elektrischen und/oder magnetischen Felds zu erfassen. Alternativ oder zusätzlich ist vorstellbar, dass die zumindest eine Antenne dazu eingerichtet ist, den Fremdkörper in Abhängigkeit von einer Änderung eines weiteren, insbesondere von einer anderen Antenne ausgestrahlten, elektrischen und/oder magnetischen Felds zu erfassen. Insbesondere kann die Sensoreinheit zumindest zwei Antennen umfassen, wobei eine erste Antenne dazu eingerichtet ist, ein elektrisches und/oder magnetisches Feld auszustrahlen und wobei eine zweite Antenne dazu eingerichtet ist, den Fremdkörper in Abhängigkeit von einer Änderung des elektrischen und/oder magnetischen Felds der ersten Antenne zu erfassen. Insbesondere ändert der in dem Detektionsbereich angeordnete Fremdkörper, insbesondere in Abhängigkeit von elektrischen und/oder magnetischen Eigenschaften des Fremdkörpers, das elektrische und/oder magnetische Feld, insbesondere Kenngrößen des elektrischen und/oder magnetischen Felds. Bevorzugt ist die zumindest eine Antenne dazu eingerichtet, den Fremdkörper kapazitiv, insbesondere in Abhängigkeit von einer von dem Fremdkörper bewirkten Kapazitätsänderung des elektrischen und/oder magnetischen Felds, zu erfassen. Alternativ oder zusätzlich ist vorstellbar, dass die zumindest eine Antenne dazu eingerichtet ist, den Fremdkörper induktiv, insbesondere in Abhängigkeit von einer von dem Fremdkörper bewirkten Induktivitätsänderung des elektrischen und/oder magnetischen Felds, zu erfassen.

Die Sensoreinheit kann vorzugsweise, insbesondere in zumindest einem Ausführungsbeispiel, einen Abstimmkreis umfassen, der mit der Antenne verbunden ist. Der Abstimmkreis ist insbesondere zumindest dazu vorgesehen, durch ein Zusammenwirken mit der Antenne ein elektrisches und/oder magnetisches Feld zu erzeugen. Der Abstimmkreis ist vorzugsweise zumindest aus einem Schwingkreis, insbesondere einem RLC-Schwingkreis, und einer Phasenstabilisierungsschaltung gebildet. Bevorzugt ist eine Arbeitsfrequenz des Abstimmkreises kleiner als 5 MHz. Es ist jedoch alternativ auch denkbar, dass die Arbeitsfrequenz des Abstimmkreises größer ist als 5 MHz. Der Abstimmkreis weist insbesondere zumindest einen Verstärker auf, der beispielsweise von einem Feldeffekttransistor, einem Bipolartransistor, einem Operationsverstärker oder dergleichen gebildet ist. Ferner sind verschiedene Verstärkertopologien denkbar, beispielsweise eine teleskopische Topologie, eine zweistufige Verstärkertopologie, eine Kaskodentopologie oder dergleichen. Der Abstimmkreis ist vorzugsweise mit einer Signalaufbereitungseinheit, insbesondere einem Analog-Digital-Wandler, verbunden, wobei die Signalaufbereitungseinheit zu einer Signalübertragung zumindest mit der Steuer- und/oder Regeleinheit verbindbar ist. Die Signalaufbereitungseinheit umfasst vorzugsweise zumindest einen Komparator, insbesondere einen Schmitt-Trigger, der zur Wandlung eines analogen Signals, bevorzugt von der Antenne, in ein digitales Signal einsetzbar ist.

Durch die erfindungsgemäße Ausgestaltung der Werkzeugmaschinenvorrichtung kann vorteilhaft eine zuverlässige Erfassung von zumindest einem Fremdobjekt in einem Detektionsbereich ermöglicht werden. Vorteilhaft kann das Fremdobjekt präventiv, insbesondere vor einem Kontakt mit einem Bearbeitungswerkzeug, erfasst werden. Vorteilhaft kann durch die Erfassung genügend Zeit zur Durchführung zumindest einer Aktion bereitgestellt werden. Vorteilhaft kann eine Verletzungsgefahr für einen Bediener gering gehalten werden. Vorteilhaft kann auf kostenintensive, komplexe und/oder das Bearbeitungswerkzeug beschädigende Hochgeschwindigkeitsreaktionssysteme verzichtet werden. Vorteilhaft kann eine bedienersichere und bedienerkomfortable sowie verschleißarme Werkzeugmaschinenvorrichtung bereitgestellt werden.

Weiterhin wird vorgeschlagen, dass die Sensoreinheit zumindest ein, insbesondere einteilig mit der Antenne ausgebildetes, Feldabschirmelement umfasst, welches dazu eingerichtet ist, ein von der Antenne ausgestrahltes elektrisches und/oder magnetisches Feld entlang von zumindest einer Ausstrahlungsrichtung abzuschirmen. Vorzugsweise umschließt das Feldabschirmelement die Antenne zumindest abschnittsweise. Das Feldabschirmelement ist insbesondere aus einem für elektromagnetische Strahlung, vorzugsweise für elektrische und/oder magnetische Felder, intransparenten Material, insbesondere aus einem Metall, beispielhaft aus einem Blei, aus einem Eisen, aus einem Stahl o.dgl., ausgebildet. Es ist auch denkbar, dass die Antenne zumindest teilweise von einem Koaxialkabel gebildet ist, wobei das Koaxialkabel das Feldabschirmelement bildet. Insbesondere ist das Feldabschirmelement dazu vorgesehen, das elektrische und/oder magnetische Feld der zumindest einen Antenne entlang von der zumindest einen Ausstrahlungsrichtung zu absorbieren und/oder zu reflektieren. Zusätzlich ist denkbar, dass das Feldabschirmelement dazu eingerichtet ist, das elektrische und/oder magnetische Feld der zumindest einen Antenne entlang von zumindest einer abschirmungsfreien Ausstrahlungsrichtung zu fokussieren. Insbesondere ist die zumindest eine Antenne entlang von zumindest einer Ausstrahlungsrichtung betrachtet abschirmungsfrei angeordnet. Insbesondere ist entlang der zumindest einen Ausstrahlungsrichtung, entlang von der betrachtet die zumindest eine Antenne abschirmungsfrei angeordnet ist, zumindest ein Gefährdungsbereich des Bearbeitungswerkzeugs, beispielhaft eine Schneidkante des Bearbeitungswerkzeugs, angeordnet. Vorteilhaft kann eine Ausrichtung des elektrischen und/oder magnetischen Felds der zumindest einen Antenne ermöglicht werden. Vorteilhaft kann ein elektrisches und/oder magnetisches Feld auf einen gewünschten Bereich gerichtet werden, in dem Fremdkörper erfasst werden sollen.

Ferner wird vorgeschlagen, dass die Sensoreinheit, insbesondere in zumindest einem Ausführungsbeispiel, zumindest eine elektrische oder elektronische Abschirmschaltung umfasst, die dazu eingerichtet ist, ein von der Antenne ausgestrahltes elektrisches und/oder magnetisches Feld entlang von zumindest einer Ausstrahlungsrichtung abzuschirmen. Mittels der Abschirmschaltung ist insbesondere eine Ausstrahlungsrichtung der Antenne einstellbar. Die Abschirmschaltung ist vorzugsweise als eine hochohmige Schaltung ausgebildet. Die Abschirmschaltung umfasst bevorzugt zumindest ein hochohmiges elektrisches Bauelement. Insbesondere sind/ist die Antenne und/oder der Abstimmkreis der Sensoreinheit an einem Eingang der Abschirmschaltung angeschlossen. Vorzugsweise ist zumindest ein Ausgang der Abschirmschaltung geerdet. Bevorzugt weist die Abschirmschaltung am Eingang der Abschirmschaltung eine höhere Impedanz auf als am Ausgang der Abschirmschaltung. Beispielsweise liegt eine Größenordnung der Impedanz am Eingang der Abschirmschaltung bei 100 MΩ und eine Größenordnung der Impedanz am Ausgang der Abschirmschaltung bei 10 MΩ oder kleiner. Es kann damit vorteilhaft erreicht werden, dass die Feldlinien des elektrischen und/oder magnetischen Felds zumindest im Wesentlichen entlang einer Ausstrahlungsrichtung von der Antenne ausgestrahlt werden. Es ist jedoch grundsätzlich auch denkbar, dass die Größenordnungen am Eingang und Ausgang verschieden sind von den oben genannten Werten. Vorteilhaft kann eine Ausrichtung des elektrischen und/oder magnetischen Felds der zumindest einen Antenne ermöglicht werden. Vorteilhaft kann ein elektrisches und/oder magnetisches Feld auf einen gewünschten Bereich gerichtet werden, in dem Fremdkörper erfasst werden sollen. Es kann vorteilhaft eine Ausrichtung des elektrischen und/oder magnetischen Felds besonders einfach angepasst werden.

Des Weiteren wird vorgeschlagen, dass die Steuer- und/oder Regeleinheit dazu eingerichtet ist, in Abhängigkeit von dem zumindest einen Signal der Sensoreinheit zumindest eine Bewegungskenngröße des zumindest einen Fremdkörpers und/oder zumindest einen Abstand des zumindest einen Fremdkörpers von dem Bearbeitungswerkzeug zu ermitteln. Vorzugsweise ist die Steuer- und/oder Regeleinheit dazu eingerichtet, in Abhängigkeit von der zumindest einen ermittelten Bewegungskenngröße des zumindest einen Fremdkörpers und/oder in Abhängigkeit von dem zumindest einen ermittelten Abstand des zumindest einen Fremdkörpers von dem Bearbeitungswerkzeug die zumindest eine Aktion auszulösen. Insbesondere ist die Steuer- und/oder Regeleinheit dazu eingerichtet, die zumindest eine ermittelte Bewegungskenngröße des zumindest einen Fremdkörpers und/oder den zumindest einen ermittelten Abstand des zumindest einen Fremdkörpers von dem Bearbeitungswerkzeug auszuwerten und insbesondere in Abhängigkeit von einem Ergebnis der Auswertung die zumindest eine Aktion auszulösen. Die zumindest eine Bewegungskenngröße des Fremdkörpers ist vorzugsweise als eine Bewegungsgeschwindigkeit des Fremdkörpers, insbesondere als eine Annäherungsgeschwindigkeit des Fremdkörpers an das Bearbeitungswerkzeug, als eine Bewegungsbeschleunigung des Fremdkörpers, insbesondere als eine Annäherungsbeschleunigung des Fremdkörpers an das Bearbeitungswerkzeug, als eine Bewegungsrichtung des Fremdkörpers oder als eine andere, einem Fachmann als sinnvoll erscheinende Bewegungskenngröße ausgebildet. Insbesondere ist die Steuer- und/oder Regeleinheit dazu eingerichtet, in Abhängigkeit von dem zumindest einen Signal der Sensoreinheit den Abstand des Fremdkörpers von dem Bearbeitungswerkzeug, insbesondere eine Position des Fremdkörpers zumindest relativ zu dem Bearbeitungswerkzeug, zu ermitteln. Vorzugsweise ist die Steuer- und/oder Regeleinheit dazu eingerichtet, die zumindest eine Bewegungskenngröße des Fremdkörpers in Abhängigkeit von einer Mehrzahl von, insbesondere zeitlich versetzt erfassten, Signalen der Sensoreinheit zu ermitteln. Insbesondere ist die Steuer- und/oder Regeleinheit dazu eingerichtet, in Abhängigkeit von einer verstrichenen Zeitdauer zwischen Erfassungen und/oder Ermittlungen des Fremdkörpers in zwei unterschiedlichen Abständen von dem Bearbeitungswerkzeug, insbesondere an zwei unterschiedlichen Positionen, und in Abhängigkeit von einem räumlichen Unterschied zwischen den zwei unterschiedlichen Abständen von dem Bearbeitungswerkzeug, insbesondere zwischen den zwei unterschiedlichen Positionen, die Bewegungsgeschwindigkeit des Fremdkörpers, insbesondere die Annäherungsgeschwindigkeit des Fremdkörpers an das Bearbeitungswerkzeug, zu ermitteln. Vorzugsweise ist die Steuer- und/oder Regeleinheit dazu eingerichtet, in Abhängigkeit von unterschiedlichen ermittelten Bewegungsgeschwindigkeiten des Fremdkörpers in unterschiedlichen Abständen von dem Bearbeitungswerkzeug, insbesondere an unterschiedlichen Positionen, die Bewegungsbeschleunigung des Fremdkörpers, insbesondere die Annäherungsbeschleunigung des Fremdkörpers an das Bearbeitungswerkzeug, zu ermitteln.

Vorzugsweise ist die Steuer- und/oder Regeleinheit dazu eingerichtet, den Abstand des Fremdkörpers von dem Bearbeitungswerkzeug, insbesondere die Position des Fremdkörpers zumindest relativ zu dem Bearbeitungswerkzeug, in Abhängigkeit von einer Signalstärke des von der Sensoreinheit erfassten Signals, insbesondere in Abhängigkeit von einer Höhe der Änderung des elektrischen und/oder magnetischen Felds der zumindest einen Antenne, zu ermitteln. Alternativ oder zusätzlich ist vorstellbar, dass die Sensoreinheit dazu eingerichtet ist, eine Mehrzahl von Detektionsbereichen unterschiedlicher Radien um das Bearbeitungswerkzeug bereitzustellen, wobei die Steuer- und/oder Regeleinheit insbesondere dazu eingerichtet ist, in Abhängigkeit von einer Erfassung des Fremdkörpers in einem bestimmten Detektionsbereich den Abstand des Fremdkörpers von dem Bearbeitungswerkzeug, insbesondere die Position des Fremdkörpers, zu ermitteln. Vorzugsweise ist die zumindest eine Antenne dazu eingerichtet, die Mehrzahl von Detektionsbereichen unterschiedlicher Radien um das Bearbeitungswerkzeug bereitzustellen. Alternativ oder zusätzlich ist denkbar, dass die Sensoreinheit eine Mehrzahl von Antennen, insbesondere eine Anzahl von Antennen entsprechend einer Anzahl von bereitzustellenden Detektionsbereichen, umfasst, wobei insbesondere jeweils eine Antenne dazu eingerichtet ist, zumindest einen der Mehrzahl von Detektionsbereichen bereitzustellen. Unter einem "Radius eines Detektionsbereichs um das Bearbeitungswerkzeug" soll insbesondere eine maximale Erstreckung des Detektionsbereichs von dem Bearbeitungswerkzeug verstanden werden, in der die Sensoreinheit noch zu einer Erfassung des Fremdkörpers eingerichtet ist. Vorzugsweise sind die Detektionsbereiche schichtförmig oder schalenförmig, insbesondere zylinderschalenförmig, kugelschalenförmig o. dgl., ausgebildet. Insbesondere weisen die Detektionsbereiche entlang der Radien der Detektionsbereiche betrachtet äquidistante Erstreckungen zwischeneinander auf. Alternativ ist vorstellbar, dass die Detektionsbereiche entlang der Radien der Detektionsbereiche betrachtet voneinander abweichende Erstreckungen zwischeneinander aufweisen. Vorteilhaft kann eine Bedienersicherheit der Werkzeugmaschinenvorrichtung durch eine besonders präzise Erfassung und Verfolgung des Fremdkörpers erhöht werden.

Ferner wird vorgeschlagen, dass die Steuer- und/oder Regeleinheit dazu eingerichtet ist, in Abhängigkeit von unterschiedlichen ermittelten Bewegungskenngrößen des zumindest einen Fremdkörpers und/oder in Abhängigkeit von unterschiedlichen ermittelten Abständen des zumindest einen Fremdkörpers von dem Bearbeitungswerkzeug unterschiedliche Aktionen auszulösen. Insbesondere können in der Speichereinheit der Steuer- und/oder Regeleinheit eine Mehrzahl von unterschiedlichen Bewegungskenngrößen des zumindest einen Fremdkörpers und/oder von unterschiedlichen Abständen des zumindest einen Fremdkörpers von dem Bearbeitungswerkzeug und eine Mehrzahl von den unterschiedlichen Bewegungskenngrößen und/oder den unterschiedlichen Abständen des Fremdkörpers zugeordneten auszulösenden Aktionen hinterlegt sein. Vorzugsweise ist die Steuer- und/oder Regeleinheit dazu eingerichtet, die ermittelte Bewegungskenngröße des Fremdkörpers und/oder den ermittelten Abstand des Fremdkörpers mit den in der Speichereinheit hinterlegten Bewegungskenngrößen und/oder Abständen des Fremdkörpers zu vergleichen. Insbesondere ist die Steuer- und/oder Regeleinheit dazu eingerichtet, in Abhängigkeit von dem Vergleich, die zumindest eine, der ermittelten Bewegungskenngröße und/oder dem ermittelten Abstand des Fremdkörpers zugeordnete Aktion auszulösen.

Beispielhaft ist denkbar, dass die Steuer- und/oder Regeleinheit dazu eingerichtet ist, in Abhängigkeit von einer ermittelten ersten Bewegungsgeschwindigkeit des Fremdkörpers und/oder in Abhängigkeit von einem ermittelten ersten Abstand des Fremdkörpers von dem Bearbeitungswerkzeug eine Ausgabe eines Warnsignals auszulösen. Beispielhaft ist denkbar, dass die Steuer- und/oder Regeleinheit dazu eingerichtet ist, in Abhängigkeit von einer ermittelten zweiten Bewegungsgeschwindigkeit des Fremdkörpers, die schneller ist als die erste Bewegungsgeschwindigkeit des Fremdkörpers, und/oder in Abhängigkeit von einem ermittelten zweiten Abstand des Fremdkörpers von dem Bearbeitungswerkzeug, der geringer ist als der ermittelte erste Abstand des Fremdkörpers von dem Bearbeitungswerkzeug, eine Drehzahlreduzierung eines das Bearbeitungswerkzeug antreibenden Motors auszulösen. Beispielhaft ist denkbar, dass die Steuer- und/oder Regeleinheit dazu eingerichtet ist, in Abhängigkeit von einer ermittelten dritten Bewegungsgeschwindigkeit des Fremdkörpers, die schneller ist als die zweite Bewegungsgeschwindigkeit des Fremdkörpers, und/oder in Abhängigkeit von einem ermittelten dritten Abstand des Fremdkörpers von dem Bearbeitungswerkzeug, der geringer ist als der ermittelte zweite Abstand des Fremdkörpers von dem Bearbeitungswerkzeug, eine Bremsung des das Bearbeitungswerkzeug antreibenden Motors und/oder des Bearbeitungswerkzeugs auszulösen. Vorteilhaft kann ein hoher Bedienerkomfort und eine hohe Bedienersicherheit durch eine Abstimmung von Aktionen auf unterschiedliche Bewegungskenngrößen des Fremdkörpers und/oder Abstände des Fremdkörpers von dem Bearbeitungswerkzeug erreicht werden.

Weiterhin wird vorgeschlagen, dass die Steuer- und/oder Regeleinheit dazu eingerichtet ist, in Abhängigkeit von der zumindest einen Bewegungskenngröße des zumindest einen Fremdkörpers und/oder von dem zumindest einen Abstand des zumindest einen Fremdkörpers von dem Bearbeitungswerkzeug und in Abhängigkeit von einer minimalen Stillstandbremszeit des Bearbeitungswerkzeugs eine Berührungswahrscheinlichkeit des zumindest einen Fremdkörpers mit dem sich bewegenden Bearbeitungswerkzeug zu ermitteln. Insbesondere ist die Steuer- und/oder Regeleinheit dazu eingerichtet, die zumindest eine Bewegungskenngröße des zumindest einen Fremdkörpers und/oder den zumindest einen Abstand des zumindest einen Fremdkörpers von dem Bearbeitungswerkzeug und die minimale Stillstandbremszeit des Bearbeitungswerkzeugs zu einer Ermittlung der Berührungswahrscheinlichkeit des zumindest einen Fremdkörpers mit dem sich bewegenden Bearbeitungswerkzeug auszuwerten. Unter einer "minimalen Stillstandbremszeit des Bearbeitungswerkzeugs" soll insbesondere eine kürzeste Zeitdauer verstanden werden, in der das Bearbeitungswerkzeug aus einem Betrieb, insbesondere aus einer Bewegung, bis zu einem Stillstand abbremsbar ist.

Insbesondere ist die Steuer- und/oder Regeleinheit dazu eingerichtet, die minimale Stillstandbremszeit des Bearbeitungswerkzeugs zu ermitteln, insbesondere in Abhängigkeit von Kenngrößen des Bearbeitungswerkzeugs, wie beispielsweise einer Massenträgheit des Bearbeitungswerkzeugs, einer Drehzahl des Bearbeitungswerkzeugs, einer Bewegungsgeschwindigkeit des Bearbeitungswerkzeugs o. dgl., und in Abhängigkeit von zur Verfügung stehenden Bremsmöglichkeiten zur Stillstandbremsung des Bearbeitungswerkzeugs, wie beispielsweise eine maximale Bremskraft einer Bremseinheit der Werkzeugmaschinenvorrichtung, eine minimale Aktivierungsdauer der Bremseinheit, eine minimale Zeitdauer bis zu einem Eingriff der Bremseinheit o. dgl. Insbesondere kann die Werkzeugmaschinenvorrichtung zumindest eine Erfassungseinheit aufweisen, die dazu eingerichtet ist, die Kenngrößen des Bearbeitungswerkzeugs und die zur Verfügung stehenden Bremsmöglichkeiten zu erfassen und der Steuer- und/oder Regeleinheit bereitzustellen. Alternativ oder zusätzlich ist vorstellbar, dass die maximale Stillstandbremszeit des Bearbeitungswerkzeugs und/oder zumindest die Kenngrößen des Bearbeitungswerkzeugs und/oder die zur Verfügung stehenden Bremsmöglichkeiten in der Speichereinheit der Steuer- und/oder Regeleinheit hinterlegt sind/ist. Vorzugsweise ist die Steuer- und/oder Regeleinheit dazu eingerichtet, in Abhängigkeit von der ermittelten Berührungswahrscheinlichkeit des Fremdkörpers mit dem sich bewegenden Bearbeitungswerkzeug, insbesondere in Abhängigkeit von einer Auswertung der ermittelten Berührungswahrscheinlichkeit des Fremdkörpers mit dem sich bewegenden Bearbeitungswerkzeug, die zumindest eine Aktion auszulösen. Vorteilhaft kann ein weiterer Parameter zu einer Erhöhung der Bedienersicherheit ermittelt werden.

Zudem wird vorgeschlagen, dass die Steuer- und/oder Regeleinheit dazu eingerichtet ist, in Abhängigkeit von der Berührungswahrscheinlichkeit kleiner als ein Wahrscheinlichkeitsschwellwert eine andere Aktion auszulösen als in Abhängigkeit von der Berührungswahrscheinlichkeit größer als der Wahrscheinlichkeitsschwellwert. Der Wahrscheinlichkeitsschwellwert ist vorzugsweise in der Speichereinheit der Steuer- und/oder Regeleinheit hinterlegt. Insbesondere ist der Wahrscheinlichkeitsschwellwert als ein Wert einer Berührungswahrscheinlichkeit des zumindest einen Fremdkörpers mit dem sich bewegenden Bearbeitungswerkzeug zwischen 0 % und 100 %, beispielhaft von 10 %, ausgebildet. Vorzugsweise ist die Steuer- und/oder Regeleinheit dazu eingerichtet, die ermittelte Berührungswahrscheinlichkeit mit dem Wahrscheinlichkeitsschwellwert zu vergleichen und in Abhängigkeit von dem Vergleich die zumindest eine Aktion auszulösen. Beispielhaft ist denkbar, dass die Steuer- und/oder Regeleinheit dazu eingerichtet ist, in Abhängigkeit von der Berührungswahrscheinlichkeit kleiner als der Wahrscheinlichkeitsschwellwert eine Bremsung des Bearbeitungswerkzeugs auszulösen und in Abhängigkeit von der Berührungswahrscheinlichkeit größer als der Wahrscheinlichkeitsschwellwert zusätzlich eine Absetzung eines Notrufs auszulösen. Beispielhaft ist denkbar, dass die Steuer- und/oder Regeleinheit dazu eingerichtet ist, in Abhängigkeit von der Berührungswahrscheinlichkeit kleiner als der Wahrscheinlichkeitsschwellwert eine Bewegung von beweglichen Zähnen des Bearbeitungswerkzeugs, beispielsweise einer Heckenschere, in eine geschlossene Stellung auszulösen, insbesondere zu einer Verhinderung einer Verletzung des Bedieners an den stillstehenden, aber scharfkantigen Zähnen. Beispielhaft ist denkbar, dass die Steuer- und/oder Regeleinheit dazu eingerichtet ist, in Abhängigkeit von der Berührungswahrscheinlichkeit größer als der Wahrscheinlichkeitsschwellwert eine Bewegung der beweglichen Zähne des Bearbeitungswerkzeugs in eine geöffnete Stellung auszulösen, insbesondere zu einer Verhinderung eines Abtrennens eines Körperteils des Bedieners durch die sich bei Berührung des Bearbeitungswerkzeugs in die geschlossene Stellung bewegenden Zähne. Vorteilhaft kann eine Optimierung der Bedienersicherheit ermöglicht werden.

Des Weiteren wird vorgeschlagen, dass die Steuer- und/oder Regeleinheit dazu eingerichtet ist, unterschiedliche von der Sensoreinheit erfasste Fremdkörper zu klassifizieren und in Abhängigkeit von unterschiedlichen Klassifizierungen unterschiedliche Aktionen auszulösen. Insbesondere ist die Steuer- und/oder Regeleinheit dazu eingerichtet, in Abhängigkeit von unterschiedlichen Signalen der Sensoreinheit zwischen unterschiedlichen Arten von Fremdkörpern zu unterscheiden. Insbesondere weisen unterschiedliche Arten von Fremdkörpern unterschiedliche elektrische und/oder magnetische, insbesondere kapazitive, Eigenschaften auf, beeinflussen insbesondere das elektrische und/oder magnetische Feld der zumindest einen Antenne unterschiedlich. Insbesondere weist jede Art von Fremdkörper eine eigene elektrische und/oder magnetische, insbesondere kapazitive, Signatur auf. Vorzugsweise ist die Steuer- und/oder Regeleinheit dazu eingerichtet, eine Art des Fremdkörpers in Abhängigkeit von der elektrischen und/oder magnetischen, insbesondere kapazitiven, Signatur des Fremdkörpers zu erkennen und den Fremdkörper zu klassifizieren. Vorzugsweise sind in der Speichereinheit der Steuer- und/oder Regeleinheit elektrische und/oder magnetische, insbesondere kapazitive, Signaturen von verschiedenen Arten von Fremdkörpern hinterlegt. Insbesondere ist die Steuer- und/oder Regeleinheit dazu eingerichtet, ein Signal der Sensoreinheit entsprechend einer Erfassung eines Fremdkörpers mit den hinterlegten Signaturen zu vergleichen und in Abhängigkeit von dem Vergleich den Fremdkörper zu klassifizieren. Insbesondere ist die Steuer- und/oder Regeleinheit dazu eingerichtet, in Abhängigkeit von unterschiedlichen Signalen der Sensoreinheit zwischen lebendigen und leblosen Fremdkörpern zu unterscheiden und die Fremdkörper entsprechend zu klassifizieren. Vorzugsweise ist die Steuer- und/oder Regeleinheit dazu eingerichtet, in Abhängigkeit von unterschiedlichen Signalen der Sensoreinheit zwischen menschlichen und tierischen lebendigen Fremdkörpern zu unterscheiden und die Fremdkörper entsprechend zu klassifizieren. Vorzugsweise ist die Steuer- und/oder Regeleinheit dazu eingerichtet, in Abhängigkeit von unterschiedlichen Signalen der Sensoreinheit zwischen leblosen Fremdkörpern unterschiedlichen Materials zu unterscheiden und die Fremdkörper entsprechend zu klassifizieren. Vorzugsweise sind in der Speichereinheit der Steuer- und/oder Regeleinheit unterschiedlichen Klassifizierungen von Fremdkörpern zugeordnete unterschiedliche auszulösende Aktionen hinterlegt. Insbesondere ist die Steuer- und/oder Regeleinheit dazu eingerichtet, zumindest eine einer Klassifizierung eines erfassten Fremdkörpers zugeordnete Aktion auszulösen. Beispielhaft ist denkbar, dass die Steuer- und/oder Regeleinheit dazu eingerichtet ist, in Abhängigkeit von einem erfassten Fremdkörper, der als ein lebloser Fremdkörper klassifiziert ist, ein Wegschwenken des Bearbeitungswerkzeugs aus einem Gefahrenbereich auszulösen und in Abhängigkeit von einem erfassten Fremdkörper, der als ein lebendiger Fremdkörper klassifiziert ist, eine mechanische Bremsung des Bearbeitungswerkzeugs auszulösen. Es kann vorteilhaft eine Auslösung einer fremdkörperspezifischen Aktion ermöglicht werden.

Des Weiteren wird vorgeschlagen, dass die Steuer- und/oder Regeleinheit dazu eingerichtet ist, die zumindest eine Aktion in Abhängigkeit von zumindest einem Parameter, insbesondere in Abhängigkeit von zumindest einer Abmessung, des Bearbeitungswerkzeugs auszulösen. Vorzugsweise ist die Abmessung des Bearbeitungswerkzeugs als eine maximale Haupterstreckung des Bearbeitungswerkzeugs ausgebildet. Unter einer "Haupterstreckung" eines Objekts soll insbesondere eine Erstreckung des Objekts entlang einer Haupterstreckungsrichtung des Objekts verstanden werden. Unter einer "Haupterstreckungsrichtung" eines Objekts soll insbesondere eine Richtung verstanden werden, welche parallel zu einer längsten Kante eines kleinsten geometrischen Quaders verläuft, welcher das Objekt gerade noch vollständig umschließt. Unter "parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.

Insbesondere kann die Steuer- und/oder Regeleinheit dazu eingerichtet sein, die zumindest eine Aktion in Abhängigkeit von dem zumindest einen Parameter, insbesondere in Abhängigkeit von der zumindest einen Abmessung, des Bearbeitungswerkzeugs zu unterbinden. Vorzugsweise ist die Steuer- und/oder Regeleinheit dazu eingerichtet, die zumindest eine Aktion in Abhängigkeit von der zumindest einen Abmessung, insbesondere in Abhängigkeit von der maximalen Haupterstreckung, eines als ein Nagel ausgebildeten Bearbeitungswerkzeugs auszulösen. Insbesondere ist die Steuer- und/oder Regeleinheit dazu eingerichtet, die in Abhängigkeit von der zumindest einen Abmessung, insbesondere in Abhängigkeit von der maximalen Haupterstreckung, des als ein Nagel ausgebildeten Bearbeitungswerkzeugs zumindest eine Ausgabeeinheit der Werkzeugmaschinenvorrichtung, die zu einer Ausgabe des als ein Nagel ausgebildeten Bearbeitungswerkzeugs vorgesehen ist, anzusteuern. Insbesondere ist denkbar, dass die Steuer- und/oder Regeleinheit dazu eingerichtet ist, in Abhängigkeit von der Abmessung, insbesondere von der maximalen Haupterstreckung, des als ein Nagel ausgebildeten Bearbeitungswerkzeugs kleiner als ein ermittelter Abstand zwischen dem erfassten Fremdkörper und dem Bearbeitungswerkzeug eine Ausgabe des als ein Nagel ausgebildeten Bearbeitungswerkzeugs auszulösen. Insbesondere ist denkbar, dass die Steuer- und/oder Regeleinheit dazu eingerichtet ist, in Abhängigkeit von der Abmessung, insbesondere von der maximalen Haupterstreckung, des als ein Nagel ausgebildeten Bearbeitungswerkzeugs größer als ein ermittelter Abstand zwischen dem erfassten Fremdkörper und dem Bearbeitungswerkzeug eine Ausgabe des als ein Nagel ausgebildeten Bearbeitungswerkzeugs zu unterbinden.

Vorzugsweise ist die Steuer- und/oder Regeleinheit dazu eingerichtet, die zumindest eine Aktion in Abhängigkeit von zumindest einem weiteren Parameter, beispielhaft einer Ausgabeenergie der Ausgabeeinheit, einer Materialhärte des Werkstücks, einer Stärke des Werkstücks o. dgl., auszulösen. Alternativ oder zusätzlich zu einer Ausbildung als eine Abmessung des Bearbeitungswerkzeugs kann der zumindest eine Parameter des Bearbeitungswerkzeugs auch als eine Tauchtiefe des Bearbeitungswerkzeugs in dem Werkstück, als eine Trägheitskenngröße des Bearbeitungswerkzeugs, als eine Drehzahl des Bearbeitungswerkzeugs oder als ein anderer, einem Fachmann als sinnvoll erscheinender Parameter ausgebildet sein. Vorteilhaft kann eine Gefährdungssituation frühzeitig unterbunden werden und die Bedienersicherheit weiter erhöht werden.

Ferner wird vorgeschlagen, dass die Werkzeugmaschinenvorrichtung zumindest eine weitere Sensoreinheit umfasst, die zumindest ein in einem als Führungsbereich ausgebildeten Nahbereich des Bearbeitungswerkzeugs angeordnetes Kontaktsensorelement zu einer Erfassung von zumindest einem Körperteil eines Bedieners aufweist. Vorzugsweise umfasst eine als eine Fräse, insbesondere als eine Oberfräse oder als eine Kantenfräse, als eine Säge, insbesondere als eine Kettensäge, oder als eine Heckenschere ausgebildete Werkzeugmaschine die Werkzeugmaschinenvorrichtung, die den zumindest einen Führungsbereich aufweist. Vorzugsweise ist der Führungsbereich zumindest abschnittsweise von einer Grundeinheit der Werkzeugmaschinenvorrichtung, insbesondere von einem Führungselement der Grundeinheit, beispielhaft einem Gleitschuh oder einem Handgriff, ausgebildet. Vorzugsweise erstreckt sich das Bearbeitungswerkzeug, insbesondere die Abtriebswelle, zumindest abschnittsweise durch das, insbesondere als ein Gleitschuh ausgebildete, Führungselement hindurch. Insbesondere ist die Werkzeugmaschinenvorrichtung mittels des Führungselements entlang des Werkstücks führbar. Insbesondere ist das, insbesondere als ein Gleitschuh ausgebildete, Führungselement dazu vorgesehen, an dem Werkstück anzuliegen. Vorzugsweise ist das Führungselement dazu vorgesehen, insbesondere in dem Führungsbereich, von dem Bediener, insbesondere zu einer Realisierung einer kontrollierten Führung der Werkzeugmaschinenvorrichtung, gegriffen zu werden. Unter einem "Nahbereich" eines Objekts soll insbesondere ein Bereich verstanden werden, der in einem maximalen Abstand von höchstens 20 cm, bevorzugt in einem maximalen Abstand von höchstens 10 cm, besonders bevorzugt in einem maximalen Abstand von höchstens 5 cm und ganz besonders bevorzugt in einem maximalen Abstand von höchstens 1 cm von dem Objekt angeordnet ist. Vorzugsweise ist das zumindest eine Kontaktsensorelement an dem Führungselement angeordnet, insbesondere passgenau in das Führungselement integriert.

Vorzugsweise ist das Kontaktsensorelement als ein kapazitiver Sensor, als ein druckempfindlicher Sensor, als ein Fingerabdruckscanner, als ein Leitfähigkeitssensor oder als ein anderes, einem Fachmann als sinnvoll erscheinendes Kontaktsensorelement ausgebildet. Vorzugsweise ist die weitere Sensoreinheit signalübertragungstechnisch mit der Steuer- und/oder Regeleinheit verbunden, insbesondere über eine Signalleitung und/oder über eine Drahtlosverbindung. Insbesondere ist die weitere Sensoreinheit dazu eingerichtet, in Abhängigkeit von einer Erfassung des zumindest einen Körperteils, insbesondere zumindest eines Fingers, des Bedieners der Steuer- und/oder Regeleinheit zumindest ein Signal bereitzustellen. Vorzugsweise ist die Steuer- und/oder Regeleinheit dazu eingerichtet, in Abhängigkeit von dem zumindest einen Signal der weiteren Sensoreinheit, insbesondere in Abhängigkeit von einer Erfassung des zumindest einen Körperteils in dem Führungsbereich, die zumindest eine Aktion auszulösen. Beispielhaft ist denkbar, dass die Steuer- und/oder Regeleinheit dazu eingerichtet ist, in Abhängigkeit von einer Erfassung des Körperteils den das Bearbeitungswerkzeug antreibenden Motor zu aktivieren. Beispielhaft ist denkbar, dass die Steuer- und/oder Regeleinheit dazu eingerichtet ist, in Abhängigkeit von einer fehlenden Erfassung des Körperteils den das Bearbeitungswerkzeug antreibenden Motor zu deaktivieren, insbesondere zu einer Verhinderung einer unkontrollierten Führung der Werkzeugmaschinenvorrichtung. Vorteilhaft kann eine korrekte Bedienung der Werkzeugmaschinenvorrichtung ermöglicht und eine hohe Bedienersicherheit erreicht werden.

Weiterhin wird vorgeschlagen, dass die Steuer- und/oder Regeleinheit dazu eingerichtet ist, in Abhängigkeit von zumindest einem Signal der weiteren Sensoreinheit zumindest teilweise selbstständig zumindest einen Parameter, insbesondere den zumindest einen Detektionsbereich, anzupassen. Bevorzugt ist die Steuer- und/oder Regeleinheit dazu eingerichtet, in Abhängigkeit von dem zumindest einen Signal der weiteren Sensoreinheit den zumindest einen Parameter vollständig selbstständig, insbesondere automatisch, anzupassen. Alternativ ist vorstellbar, dass die Steuer- und/oder Regeleinheit dazu eingerichtet ist, den zumindest einen Parameter teilweise selbstständig anzupassen. Insbesondere kann die Steuer- und/oder Regeleinheit dazu eingerichtet sein, in Abhängigkeit von dem zumindest einen Signal der weiteren Sensoreinheit, insbesondere in Abhängigkeit von der Auswertung des zumindest einen Signals der weiteren Sensoreinheit, dem Bediener zumindest eine Empfehlung für eine Anpassung des zumindest einen Parameters bereitzustellen, beispielhaft über eine Signalausgabeeinheit der Werkzeugmaschinenvorrichtung, und den zumindest einen Parameter in Abhängigkeit von einer Bedienereingabe anzupassen. Insbesondere kann die Steuer- und/oder Regeleinheit dazu eingerichtet sein, in Abhängigkeit von dem zumindest einen Signal der weiteren Sensoreinheit eine Mehrzahl von Parametern zumindest teilweise selbstständig anzupassen. Der zumindest eine anzupassende Parameter kann insbesondere als eine Empfindlichkeit der Sensoreinheit, als der Detektionsbereich, insbesondere als die Erstreckung des Detektionsbereichs, als die Form des Detektionsbereichs o. dgl., als eine Art der zumindest einen auszulösenden Aktion, als eine Reihenfolge einer Mehrzahl von auszulösenden Aktionen, als eine Auslösegeschwindigkeit und/oder als eine Durchführungsgeschwindigkeit der zumindest einen Aktion, beispielhaft eine Bremsgeschwindigkeit des Bearbeitungswerkzeugs, oder als ein anderer, einem Fachmann als sinnvoll erscheinender Parameter ausgebildet sein.

Vorzugsweise ist die Steuer- und/oder Regeleinheit dazu eingerichtet, in Abhängigkeit von dem zumindest einen Signal der weiteren Sensoreinheit zumindest teilweise selbstständig den Detektionsbereich, insbesondere die Erstreckung des Detektionsbereichs, anzupassen, insbesondere zu vergrößern oder zu verkleinern. Insbesondere ist die Steuer- und/oder Regeleinheit dazu eingerichtet, in Abhängigkeit von einem Signal der weiteren Sensoreinheit entsprechend einer Erfassung des zumindest einen Körperteils in dem Führungsbereich zumindest teilweise selbstständig den Detektionsbereich, insbesondere eine maximale Erstreckung des Detektionsbereichs, kleiner einzustellen als ein minimaler Abstand zwischen dem Bearbeitungswerkzeug und dem Führungsbereich, insbesondere zu einer Vermeidung von Fehlauslösungen durch das Körperteil. Insbesondere ist die Steuer- und/oder Regeleinheit dazu eingerichtet, in Abhängigkeit von einem Signal der weiteren Sensoreinheit entsprechend einer fehlenden Erfassung des zumindest einen Körperteils in dem Führungsbereich zumindest teilweise selbstständig den Detektionsbereich, insbesondere eine maximale Erstreckung des Detektionsbereichs, größer einzustellen als ein minimaler Abstand zwischen dem Bearbeitungswerkzeug und dem Führungsbereich, insbesondere zu einer Verringerung einer Verletzungsgefahr durch eine Fehlbedienung der Werkzeugmaschinenvorrichtung. Vorteilhaft kann eine bedienersichere Werkzeugmaschinenvorrichtung mit einer niedrigen Fehlauslösungsrate bereitgestellt werden.

Zudem wird vorgeschlagen, dass die zumindest eine Antenne ringförmig um eine Längsachse des Bearbeitungswerkzeugs angeordnet ist. Vorzugsweise umfasst eine als eine Oberfräse, als eine Kantenfräse, als eine Stichsäge oder als eine Säbelsäge ausgebildete Werkzeugmaschine die Werkzeugmaschinenvorrichtung mit der zumindest einen Antenne, die ringförmig um die Längsachse des Bearbeitungswerkzeugs angeordnet ist. Vorzugsweise ist die zumindest eine Antenne in einer Ebene angeordnet, die sich quer, insbesondere senkrecht, zu der Längsachse des Bearbeitungswerkzeugs erstreckt. Vorzugsweise ist die zumindest eine Antenne kreisringförmig, teilringförmig, insbesondere halbringförmig, o. dgl. um die Längsachse des Bearbeitungswerkzeugs angeordnet. Vorzugsweise ist die zumindest eine Antenne an der Grundeinheit der Werkzeugmaschinenvorrichtung, insbesondere an dem, insbesondere als ein Gleitschuh ausgebildeten, Führungselement, angeordnet. Insbesondere kann die zumindest eine Antenne zumindest abschnittsweise innerhalb der Grundeinheit, insbesondere innerhalb des Führungselements, angeordnet sein. Vorzugsweise kann die Sensoreinheit eine Mehrzahl von Antennen aufweisen, wobei insbesondere zwei Antennen an voneinander abgewandten Seiten des Führungselements angeordnet sein können. Vorzugsweise ist die zumindest eine Antenne in zumindest einer sich parallel zu einer Gleitfläche des, insbesondere als ein Gleitschuh ausgebildeten, Führungselements erstreckenden Ebene angeordnet. Vorteilhaft kann eine gleichmäßige sensorische Abdeckung des Bearbeitungswerkzeug und eine richtungsunabhängig hohe Bedienersicherheit erreicht werden.

Des Weiteren wird vorgeschlagen, dass die zumindest eine Antenne parallel zu einer Längsachse des Bearbeitungswerkzeugs angeordnet ist. Insbesondere ist die zumindest eine Antenne alternativ oder zusätzlich zu einer ringförmigen Anordnung um die Längsachse des Bearbeitungswerkzeugs parallel zu der Längsachse des Bearbeitungswerkzeugs angeordnet. Insbesondere kann die Sensoreinheit zumindest zwei Antennen aufweisen, wobei eine Antenne ringförmig um die Längsachse des Bearbeitungswerkzeugs und eine weitere Antenne parallel zu der Längsachse des Bearbeitungswerkzeugs angeordnet ist. Vorzugsweise umfasst eine als eine Heckenschere, als eine Kettensäge, als eine Oberfräse, als eine Kantenfräse, als eine Stichsäge oder als eine Säbelsäge ausgebildete Werkzeugmaschine die Werkzeugmaschinenvorrichtung mit der zumindest einen Antenne, die parallel zu der Längsachse des Bearbeitungswerkzeugs angeordnet ist. Insbesondere kann das Bearbeitungswerkzeug zumindest abschnittsweise die zumindest eine Antenne ausbilden und/oder kann die zumindest eine Antenne zumindest abschnittsweise an, insbesondere innerhalb von, dem Bearbeitungswerkzeug angeordnet sein. Alternativ oder zusätzlich ist vorstellbar, dass zumindest ein Schwertelement der Werkzeugmaschinenvorrichtung, an dem das Bearbeitungswerkzeug zumindest abschnittsweise gelagert ist, die zumindest eine Antenne zumindest abschnittsweise ausbildet und/oder dass die zumindest eine Antenne zumindest abschnittsweise an, insbesondere innerhalb von, dem Schwertelement angeordnet ist. Vorzugsweise weist die zumindest eine Antenne einen linearen Verlauf auf. Vorteilhaft kann eine weitere Möglichkeit für eine gleichmäßige sensorische Abdeckung des Bearbeitungswerkzeugs und eine richtungsunabhängig hohe Bedienersicherheit erreicht werden.

Ferner wird vorgeschlagen, dass die zumindest eine Antenne in zumindest ein mechanisches Schutzelement in einem, insbesondere in dem vorgenannten, Nahbereich des Bearbeitungswerkzeugs integriert ist und/oder dass die zumindest eine Antenne dazu eingerichtet ist, das mechanische Schutzelement zu ersetzen. Vorzugsweise weist die Werkzeugmaschinenvorrichtung das mechanische Schutzelement zu einem Schutz des Bearbeitungswerkzeugs, insbesondere vor Fremdkörpern, und/oder zu einem Schutz von Fremdkörpern, insbesondere Körperteilen des Bedieners, vor dem Bearbeitungswerkzeug auf. Das mechanische Schutzelement ist insbesondere in dem Nahbereich des Bearbeitungswerkzeugs angeordnet. Vorzugsweise deckt das mechanische Schutzelement das Bearbeitungswerkzeug zumindest abschnittsweise ab, umschließt das Bearbeitungswerkzeug insbesondere zumindest abschnittsweise. Vorzugsweise ist das mechanische Schutzelement als ein Schutzbügel, als eine Schutzhaube oder als ein anderes, einem Fachmann als sinnvoll erscheinendes mechanisches Schutzelement ausgebildet. Insbesondere kann das mechanische Schutzelement die zumindest eine Antenne zumindest abschnittsweise ausbilden, insbesondere aus einem Metall ausgebildet sein, und/oder kann die zumindest eine Antenne zumindest abschnittsweise an, insbesondere innerhalb von, dem mechanischen Schutzelement angeordnet sein. Alternativ ist vorstellbar, dass die zumindest eine Antenne dazu eingerichtet ist, das mechanische Schutzelement, insbesondere eine Schutzfunktion des mechanischen Schutzelements, zu ersetzen. Insbesondere ist die zumindest eine Antenne dazu eingerichtet, eine virtuelle Abschirmung des Bearbeitungswerkzeugs, insbesondere in Form des Detektionsbereichs, bereitzustellen. Insbesondere ist alternativ zu einem mechanischen Schutz durch das mechanische Schutzelement zu einer Verringerung einer Verletzungsgefahr durch das Bearbeitungswerkzeug und/oder einer Beschädigungsgefahr des Bearbeitungswerkzeugs in Abhängigkeit von einer Erfassung des Fremdkörpers durch die zumindest eine Antenne die zumindest eine Aktion, insbesondere eine Bremsung des Bearbeitungswerkzeugs, ein Wegbewegen des Bearbeitungswerkzeugs aus dem Gefahrenbereich, ein mechanisches Abschirmen des Bearbeitungswerkzeugs o. dgl., auslösbar. Insbesondere kann die Werkzeugmaschinenvorrichtung frei von dem mechanischen Schutzelement ausgebildet sein. Vorteilhaft kann eine bedienersichere und bauteilarme und somit vorteilhaft verschleißarme Werkzeugmaschinenvorrichtung bereitgestellt werden.

Weiterhin wird vorgeschlagen, dass die Werkzeugmaschinenvorrichtung zumindest ein Gehäuse umfasst, von dem die Sensoreinheit entkoppelbar ist, wobei die Sensoreinheit zumindest eine, insbesondere drahtlose, Kommunikationseinheit zu einer Bereitstellung des zumindest einen Signals an die Steuer- und/oder Regeleinheit aufweist. Insbesondere kann die Werkzeugmaschinenvorrichtung in einem von der Sensoreinheit entkoppelten Zustand, insbesondere in einem Zustand frei von einer signalübertragungstechnischen Verbindung zwischen der Sensoreinheit und der Steuer- und/oder Regeleinheit, betreibbar sein, insbesondere frei von auf der Sensoreinheit basierenden Sicherheitsfunktionen und Komfortfunktionen. Vorzugsweise ist die Sensoreinheit mit verschiedenen Werkzeugmaschinenvorrichtungen verwendbar, insbesondere koppelbar. Vorzugsweise können das Gehäuse der Werkzeugmaschinenvorrichtung und die Sensoreinheit, insbesondere ein Gehäuse der Sensoreinheit, Kopplungsschnittstellen, beispielsweise Bajonettanschlüsse, Rastelemente, Steckverbinder o. dgl., zu einer mechanischen, insbesondere zu einer mechanischen und elektrischen, Kopplung aufweisen. Insbesondere kann eine elektrische Kopplungsschnittstelle zumindest teilweise die Kommunikationseinheit der Sensoreinheit und/oder eine Kommunikationseinheit der Werkzeugmaschinenvorrichtung ausbilden. Insbesondere ist die Kommunikationseinheit der Sensoreinheit dazu eingerichtet, das zumindest eine Signal über die Kommunikationseinheit der Werkzeugmaschinenvorrichtung an die Steuer- und/oder Regeleinheit zu übertragen. Die als eine drahtlose Kommunikationseinheit ausgebildete Kommunikationseinheit der Sensoreinheit und/oder der Werkzeugmaschinenvorrichtung kann insbesondere als ein WLAN-Modul, als ein Funkmodul, als ein Bluetooth-Modul, als ein NFC-Modul o. dgl. ausgebildet sein. Die als eine kabelgebundene Kommunikationseinheit ausgebildete Kommunikationseinheit der Sensoreinheit und/oder der Werkzeugmaschinenvorrichtung kann alternativ oder zusätzlich zu der Ausbildung durch die zumindest eine Kopplungsschnittstelle insbesondere als ein USB-Anschluss, als ein Ethernet-Anschluss, als ein Koaxialanschluss o. dgl. ausgebildet sein. Vorteilhaft kann eine nutzerkomfortabel modular, insbesondere mit verschiedenen Werkzeugmaschinenvorrichtungen einsetzbare, Sensoreinheit bereitgestellt werden.

Zudem wird vorgeschlagen, dass die Werkzeugmaschinenvorrichtung zumindest eine, insbesondere die vorgenannte, Ausgabeeinheit zu einer Ausgabe des zumindest einen Bearbeitungswerkzeugs umfasst, wobei die Steuer- und/oder Regeleinheit dazu eingerichtet ist, in Abhängigkeit von dem zumindest einen Signal der Sensoreinheit die Ausgabeeinheit zu einer Unterbindung oder zu einer Freigabe der Ausgabe des zumindest einen Bearbeitungswerkzeugs anzusteuern. Vorzugsweise ist die Ausgabeeinheit zu einer Ausgabe des als ein Nagel ausgebildeten Bearbeitungswerkzeugs vorgesehen. Insbesondere ist die Ausgabeeinheit dazu vorgesehen, das Bearbeitungswerkzeug zu verschießen. Insbesondere ist die Ausgabeeinheit dazu vorgesehen, eine Mehrzahl von Bearbeitungswerkzeugen nacheinander auszugeben, insbesondere zu verschießen. Insbesondere umfasst eine als eine Nagelpistole ausgebildete Werkzeugmaschine die Werkzeugmaschinenvorrichtung, die die Ausgabeeinheit umfasst. Insbesondere kann die Werkzeugmaschinenvorrichtung zumindest eine Magazineinheit umfassen, die zu einer Aufnahme von einer Mehrzahl von Bearbeitungswerkzeugen und/oder zu einer Zuführung der Mehrzahl von Bearbeitungswerkzeugen zu der Ausgabeeinheit vorgesehen ist.

Vorzugsweise ist die Steuer- und/oder Regeleinheit dazu eingerichtet, in Abhängigkeit von zumindest einem Signal der Sensoreinheit entsprechend einer Erfassung von zumindest einem Fremdkörper in dem Detektionsbereich, insbesondere in einem Ausgabebereich der Ausgabeeinheit, die Ausgabeeinheit zu einer Unterbindung der Ausgabe des Bearbeitungswerkzeugs anzusteuern. Insbesondere ist denkbar, dass die Steuer- und/oder Regeleinheit zusätzlich dazu eingerichtet ist, in Abhängigkeit von dem Signal der Sensoreinheit entsprechend der Erfassung des Fremdkörpers in dem Detektionsbereich, insbesondere in dem Ausgabebereich der Ausgabeeinheit, eine Ausgabe eines Warnsignals auszulösen. Vorzugsweise ist die Steuer- und/oder Regeleinheit dazu eingerichtet, in Abhängigkeit von zumindest einem Signal der Sensoreinheit entsprechend einer fehlenden Erfassung eines Fremdkörpers in dem Detektionsbereich, insbesondere in dem Ausgabebereich der Ausgabeeinheit, die Ausgabeeinheit zu einer Freigabe des Bearbeitungswerkzeugs anzusteuern. Insbesondere kann die Steuer- und/oder Regeleinheit dazu eingerichtet sein, eine ermittelte Position eines erfassten Fremdkörpers mit dem Ausgabebereich der Ausgabeeinheit zu vergleichen und insbesondere in Abhängigkeit von dem Vergleich die Ausgabeeinheit anzusteuern. Insbesondere kann die Steuer- und/oder Regeleinheit dazu eingerichtet sein, in Abhängigkeit von zumindest einem Signal der Sensoreinheit entsprechend einer Erfassung von zumindest einem Fremdkörper in dem Detektionsbereich und in Abhängigkeit von einer ermittelten Position des Fremdkörpers außerhalb des Ausgabebereichs der Ausgabeeinheit die Ausgabeeinheit zu einer Freigabe des Bearbeitungswerkzeugs anzusteuern. Vorteilhaft kann eine bedienersichere Ausgabe von Bearbeitungswerkzeugen ermöglicht werden.

Des Weiteren wird vorgeschlagen, dass die Werkzeugmaschinenvorrichtung zumindest eine von der Steuer- und/oder Regeleinheit ansteuerbare mechanische Bremseinheit umfasst, die dazu vorgesehen ist, das Bearbeitungswerkzeug abzubremsen und die zumindest teilweise von zumindest einem selbsthemmenden Getriebe, insbesondere von einem Schneckengetriebe, ausgebildet ist. Vorzugsweise ist die mechanische Bremseinheit dazu vorgesehen, das zumindest eine, insbesondere sich bewegende, Bearbeitungswerkzeug mechanisch abzubremsen, insbesondere bis zu einem Stillstand des Bearbeitungswerkzeugs. Insbesondere kann die mechanische Bremseinheit, insbesondere zusätzlich zu einer zumindest teilweisen Ausbildung durch das selbsthemmende Getriebe, zumindest ein mechanisches Bremselement, insbesondere eine Bremsbacke, eine Schlingfeder, einen Blockierbolzen o. dgl., umfassen, das zu einer Realisierung einer aktiven Bremsung des Bearbeitungswerkzeugs kraft- und/oder formschlüssig mit dem Bearbeitungswerkzeug und/oder mit der Abtriebswelle koppelbar ist. Vorzugsweise ist die mechanische Bremseinheit dazu vorgesehen, das Bearbeitungswerkzeug spätestens 200 Millisekunden nach einer Auslösung der mechanischen Bremsung bis auf einen Stillstand des Bearbeitungswerkzeugs abzubremsen.

Vorzugsweise umfasst eine als eine Gartenschere ausgebildete Werkzeugmaschine die Werkzeugmaschinenvorrichtung, die die mechanische Bremseinheit umfasst, die zumindest teilweise von dem zumindest einen selbsthemmenden Getriebe, insbesondere von dem Schneckengetriebe, ausgebildet ist. Vorzugsweise ist das Getriebe dazu vorgesehen, eine Bewegung des Motors zu einem Antrieb des zumindest einen Bearbeitungswerkzeugs zu übersetzen. Vorzugsweise sind das Getriebe und der Motor zu einer motorischen Unterstützung einer manuellen Betätigung des zumindest einen Bearbeitungswerkzeugs, insbesondere einer Schneidbewegung der Gartenschere, vorgesehen. Vorzugsweise weist das Getriebe ein Übersetzungsverhältnis, insbesondere von einer Drehzahl des Motors zu einer Drehzahl des Bearbeitungswerkzeugs, von zumindest 1:50, bevorzugt von zumindest 1:75 und besonders bevorzugt von zumindest 1:100 auf. Vorzugsweise ist das Getriebe über eine Antriebswelle des Motors antreibbar. Vorzugsweise ist das Getriebe nicht über die Abtriebswelle, an der das Bearbeitungswerkzeug gelagert ist, antreibbar. Bevorzugt ist das Getriebe als ein dynamisch selbsthemmendes Getriebe ausgebildet. Insbesondere ist das Getriebe als ein Schneckengetriebe ausgebildet, das einen maximalen Wirkungsgrad kleiner als 0,5 aufweist. Vorzugsweise ist das Getriebe dazu vorgesehen, in Abhängigkeit von einem Stoppen des Motors eine Bewegung des zumindest einen Bearbeitungswerkzeugs zu stoppen. Insbesondere ist die Steuer- und/oder Regeleinheit dazu eingerichtet, in Abhängigkeit von zumindest einem Signal der Sensoreinheit eine Motorbremsung des Motors durchzuführen und/oder auszulösen. Insbesondere ist die Steuer- und/oder Regeleinheit dazu eingerichtet, den das Bearbeitungswerkzeug antreibenden Motor, insbesondere Elektromotor, zu einer Realisierung einer Motorbremsung abzuschalten, kurzzuschließen, umzupolen o. dgl. Vorteilhaft kann eine effiziente, verschleißarme und bedienersichere Bremsung des zumindest einen Bearbeitungswerkzeugs ermöglicht werden.

Ferner wird vorgeschlagen, dass die Werkzeugmaschinenvorrichtung zumindest eine Schutzeinheit umfasst, die zumindest ein Abschirmelement aufweist, wobei die Steuer- und/oder Regeleinheit dazu eingerichtet ist, in Abhängigkeit von dem zumindest einen Signal der Sensoreinheit die Schutzeinheit zu einer Beförderung des zumindest einen Abschirmelements um das Bearbeitungswerkzeug anzusteuern. Insbesondere weist die Werkzeugmaschinenvorrichtung die Schutzeinheit alternativ oder zusätzlich zu der mechanischen Bremseinheit auf. Vorzugsweise ist das Abschirmelement dazu vorgesehen, das Bearbeitungswerkzeug zumindest abschnittsweise abzudecken, insbesondere zu umschließen. Insbesondere ist das Abschirmelement dazu vorgesehen, zumindest einen Gefährdungsbereich, insbesondere zumindest eine Schneidkante, des Bearbeitungswerkzeugs abzudecken, insbesondere zu umschließen. Vorzugsweise ist das Abschirmelement dazu vorgesehen, einen Fremdkörper, insbesondere ein Körperteil des Bedieners, vor dem Bearbeitungswerkzeug und/oder das Bearbeitungswerkzeug vor einem Fremdkörper zu schützen. Insbesondere ist das Abschirmelement dazu vorgesehen, ein Fassen an das Bearbeitungswerkzeug, insbesondere durch den Bediener, zu verhindern. Das Abschirmelement kann insbesondere als eine Abschirmhaube, als eine Abschirmhülle, als ein Airbag, als ein Käfig oder als ein anderes, einem Fachmann als sinnvoll erscheinendes Abschirmelement ausgebildet sein. Insbesondere ist das Abschirmelement beweglich an, insbesondere zumindest abschnittsweise innerhalb, der Grundeinheit der Werkzeugmaschinenvorrichtung gelagert. Insbesondere kann das Abschirmelement teleskopierbar, aufblasbar, aufspannbar o. dgl. ausgebildet sein. Vorzugsweise umfasst die Schutzeinheit zumindest einen Aktor, der dazu vorgesehen ist, das Abschirmelement um das Bearbeitungswerkzeug zu befördern und/oder eine Beförderung des Abschirmelements durch zumindest einen weiteren Aktor der Schutzeinheit freizugeben. Insbesondere ist die Steuer- und/oder Regeleinheit dazu eingerichtet, in Abhängigkeit von dem zumindest einen Signal der Sensoreinheit den Aktor zu einer Beförderung des Abschirmelements um das Bearbeitungswerkzeug anzusteuern. Der zumindest eine Aktor kann insbesondere als ein elektromagnetischer Aktor, als ein Federkraftaktor, als ein Druckluftaktor, als ein Explosivaktor, als ein Schmelzdrahtaktor, als ein Formgedächtnisaktor oder als ein anderer, einem Fachmann als sinnvoll erscheinender Aktor ausgebildet sein. Vorteilhaft kann eine hohe Bedienersicherheit frei von einer Beschädigung des Bearbeitungswerkzeugs ermöglicht werden.

Weiterhin wird vorgeschlagen, dass die Werkzeugmaschinenvorrichtung zumindest eine Einzugseinheit umfasst, wobei die Steuer- und/oder Regeleinheit dazu eingerichtet ist, in Abhängigkeit von dem zumindest einen Signal der Sensoreinheit die Einzugseinheit zu einer Beförderung des Bearbeitungswerkzeugs aus einem Bearbeitungsbereich anzusteuern. Insbesondere weist die Werkzeugmaschinenvorrichtung die Einzugseinheit alternativ oder zusätzlich zu der mechanischen Bremseinheit und/oder zu der Schutzeinheit auf. Der Bearbeitungsbereich ist insbesondere ein Bereich innerhalb des Detektionsbereichs. Insbesondere kann der Bearbeitungsbereich dem Detektionsbereich entsprechen. Insbesondere sind in dem Bearbeitungsbereich zumindest abschnittsweise zumindest das Bearbeitungswerkzeug und zumindest das Werkstück angeordnet. Insbesondere besteht in dem Bearbeitungsbereich eine Verletzungsgefahr für den Bediener durch Berühren des Bearbeitungswerkzeugs und/oder eine Beschädigungsgefahr für das Bearbeitungswerkzeug durch Berühren eines Fremdkörpers. Die Einzugseinheit ist vorzugsweise dazu vorgesehen, das Bearbeitungswerkzeug aus dem Bearbeitungsbereich zu ziehen, insbesondere einzuziehen, zu drücken, zu stoßen, wegzuschwenken oder auf eine andere, einem Fachmann als sinnvoll erscheinende Weise aus dem Bearbeitungsbereich zu befördern. Vorzugsweise ist die Einzugseinheit dazu vorgesehen, das Bearbeitungswerkzeug von einem erfassten Fremdkörper wegzubefördern. Insbesondere ist die Einzugseinheit dazu vorgesehen, das Bearbeitungswerkzeug zumindest abschnittsweise in einen zumindest abschnittsweise abgedeckten Bereich der Werkzeugmaschinenvorrichtung, beispielsweise in die Grundeinheit, in die Schutzhaube o. dgl., zu befördern.

Vorzugsweise umfasst die Einzugseinheit zumindest einen Aktor, der dazu vorgesehen ist, das Bearbeitungswerkzeug aus dem Bearbeitungsbereich zu befördern. Der Aktor ist bevorzugt mit dem Bearbeitungswerkzeug wirkverbunden, insbesondere direkt, beispielsweise mechanisch, magnetisch o. dgl., und/oder indirekt, beispielsweise über einen Schwenkarm, die Abtriebswelle o. dgl. Vorzugsweise sind/ist das Bearbeitungswerkzeug und/oder zumindest ein Bauteil, an dem das Bearbeitungswerkzeug gelagert ist, beispielhaft die Abtriebswelle, der Schwenkarm o. dgl., beweglich, insbesondere aus dem Bearbeitungsbereich bewegbar, gelagert. Insbesondere ist die Steuer- und/oder Regeleinheit dazu eingerichtet, in Abhängigkeit von dem zumindest einen Signal der Sensoreinheit den Aktor zu einer Beförderung des Bearbeitungswerkzeugs aus dem Bearbeitungsbereich anzusteuern. Der zumindest eine Aktor kann insbesondere als ein elektromagnetischer Aktor, als ein Federkraftaktor, als ein Druckluftaktor, als ein Explosivaktor, als ein Schmelzdrahtaktor, als ein Formgedächtnisaktor oder als ein anderer, einem Fachmann als sinnvoll erscheinender Aktor ausgebildet sein. Insbesondere können/kann der Aktor und/oder die Steuer- und/oder Regeleinheit dazu vorgesehen sein, eine Bremsenergie einer Bremsung des Bearbeitungswerkzeugs und/oder zumindest einen elektrischen Strom einer Motorbremsung des das Bearbeitungswerkzeug antreibenden Motors zu einer Beförderung des Bearbeitungswerkzeugs zu nutzen. Der Aktor kann insbesondere dazu vorgesehen sein, zu einer Beförderung des Bearbeitungswerkzeugs aus dem Bearbeitungsbereich das Bearbeitungswerkzeug und/oder die Abtriebswelle von dem das Bearbeitungswerkzeug antreibenden Motor zu entkoppeln. Insbesondere kann die Einzugseinheit Rampenelemente aufweisen, an denen das Bearbeitungswerkzeug und/oder die Abtriebswelle in Abhängigkeit von einer Bewegungsenergie, insbesondere Rotationsenergie, des Bearbeitungswerkzeugs und/oder der Abtriebswelle entlang aus dem Bearbeitungsbereich gleiten können/kann. Vorteilhaft kann eine weitere Möglichkeit bereitgestellt werden, eine hohe Bedienersicherheit frei von einer Beschädigung des Bearbeitungswerkzeugs zu ermöglichen.

Zudem geht die Erfindung aus von einem Verfahren zum Betrieb einer Werkzeugmaschinenvorrichtung, insbesondere einer erfindungsgemäßen Werkzeugmaschinenvorrichtung.

Es wird vorgeschlagen, dass in zumindest einem Verfahrensschritt mittels zumindest einer, insbesondere der zumindest einen vorgenannten, Antenne zumindest ein elektrisches und/oder magnetisches Feld ausgestrahlt wird, von dem zumindest ein Detektionsbereich um zumindest ein, insbesondere um das vorgenannte, Bearbeitungswerkzeug der Werkzeugmaschinenvorrichtung definiert wird, und/oder dass mittels der zumindest einen Antenne zumindest ein Fremdkörper in Abhängigkeit von zumindest einer Änderung zumindest eines elektrischen und/oder magnetischen Felds erfasst wird.

Bevorzugt werden/wird in zumindest einem Verfahrensschritt in Abhängigkeit von zumindest einem Signal zumindest einer, insbesondere der vorgenannten, Sensoreinheit der Werkzeugmaschinenvorrichtung zumindest eine Bewegungskenngröße des zumindest einen Fremdkörpers und/oder zumindest ein Abstand des zumindest einen Fremdkörpers von dem Bearbeitungswerkzeug ermittelt. Vorteilhaft kann ein Verfahren bereitgestellt werden, mittels dessen ein bedienersicherer, bedienerkomfortabler und wartungsarmer Betrieb einer Werkzeugmaschinenvorrichtung ermöglicht werden kann.

Des Weiteren geht die Erfindung aus von einer erfindungsgemäßen Werkzeugmaschine mit zumindest einer Werkzeugmaschinenvorrichtung. Vorteilhaft kann eine verschleißarme Werkzeugmaschine bereitgestellt werden, die bedienersicher und bedienerkomfortabel nutzbar ist.

Die erfindungsgemäße Werkzeugmaschinenvorrichtung, die erfindungsgemäße Werkzeugmaschine und/oder das erfindungsgemäße Verfahren sollen/soll hierbei nicht auf die oben beschriebene Anwendung und Ausführungsform beschränkt sein. Insbesondere können/kann die erfindungsgemäße Werkzeugmaschinenvorrichtung, die erfindungsgemäße Werkzeugmaschine und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind zehn Ausführungsbeispiele der Erfindung dargestellt. Die Zeichnungen, die Beschreibung und die Ansprüche enthalten zahlreiche Merkmale in Kombination.

Es zeigen:
- Fig. 1: eine erfindungsgemäße Werkzeugmaschine in einer schematischen perspektivischen Darstellung,
- Fig. 2a: die erfindungsgemäße Werkzeugmaschine aus Fig. 1 in einer schematischen Darstellung,
- Fig. 2b: die erfindungsgemäße Werkzeugmaschine aus Fig. 1 mit einer alternativen Sensoreinheit in einer schematischen Darstellung,
- Fig. 2c: die erfindungsgemäße Werkzeugmaschine aus Fig. 1 mit einer weiteren alternativen Sensoreinheit in einer schematischen Darstellung,
- Fig. 3: eine Schnittansicht eines Teils der erfindungsgemäßen Werkzeugmaschine in einer schematischen Darstellung,
- Fig. 4: eine erste alternative erfindungsgemäße Werkzeugmaschine in einer schematischen perspektivischen Darstellung,
- Fig. 5: eine Schaltungsanordnung eines Teils einer Sensoreinheit einer erfindungsgemäßen Werkzeugmaschinenvorrichtung der ersten alternativen erfindungsgemäßen Werkzeugmaschine,
- Fig. 6: eine zweite alternative erfindungsgemäße Werkzeugmaschine in einer schematischen perspektivischen Darstellung,
- Fig. 7: eine dritte alternative erfindungsgemäße Werkzeugmaschine in einer schematischen perspektivischen Darstellung,
- Fig. 8: eine vierte alternative erfindungsgemäße Werkzeugmaschine in einer schematischen perspektivischen Darstellung,
- Fig. 9: eine fünfte alternative erfindungsgemäße Werkzeugmaschine in einer schematischen perspektivischen Darstellung,
- Fig. 10: eine sechste alternative erfindungsgemäße Werkzeugmaschine in einer schematischen perspektivischen Darstellung,
- Fig. 11: eine siebte alternative erfindungsgemäße Werkzeugmaschine in einer schematischen perspektivischen Darstellung,
- Fig. 12: eine achte alternative erfindungsgemäße Werkzeugmaschine in einer schematischen perspektivischen Darstellung und
- Fig. 13: eine neunte alternative erfindungsgemäße Werkzeugmaschine in einer schematischen perspektivischen Darstellung.

### Beschreibung der Ausführungsbeispiele

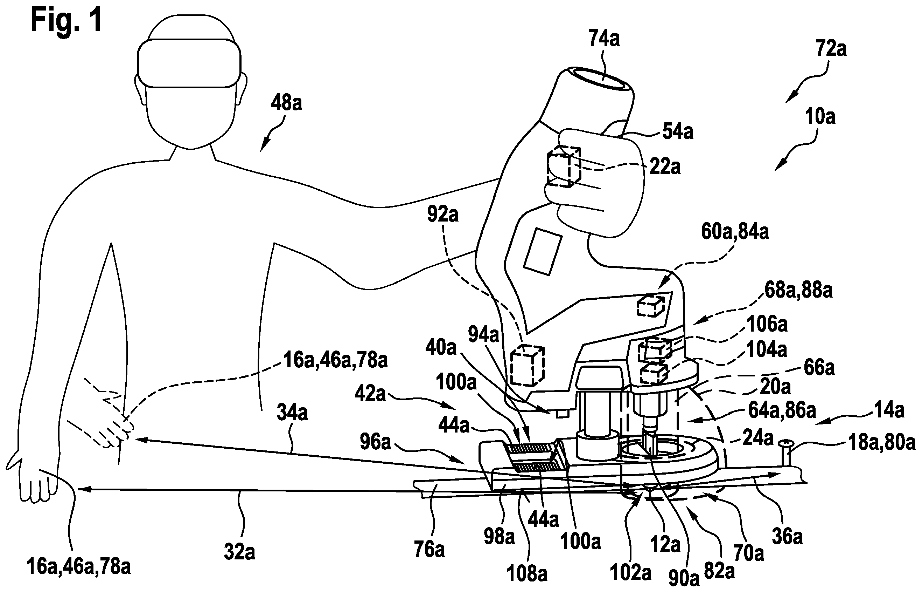

Figur 1 zeigt eine Werkzeugmaschine 72a in einer schematischen perspektivischen Darstellung. Die Werkzeugmaschine 72a umfasst bevorzugt zumindest eine Werkzeugmaschinenvorrichtung 10a. Vorzugsweise umfasst die Werkzeugmaschinenvorrichtung 10a zumindest ein motorisch antreibbares Bearbeitungswerkzeug 12a, zumindest eine, insbesondere kapazitive, Sensoreinheit 14a, die dazu eingerichtet ist, zumindest einen Fremdkörper 16a, 18a in zumindest einem Detektionsbereich 20a um das Bearbeitungswerkzeug 12a zu erfassen, und zumindest eine Steuer- und/oder Regeleinheit 22a, die dazu eingerichtet ist, in Abhängigkeit von zumindest einem Signal der Sensoreinheit 14a zumindest eine Aktion auszulösen. Vorzugsweise ist die Werkzeugmaschinenvorrichtung 10a als eine Handwerkzeugmaschinenvorrichtung ausgebildet. Insbesondere ist die Werkzeugmaschine 72a, die die Werkzeugmaschinenvorrichtung 10a umfasst, als eine Handwerkzeugmaschine ausgebildet. Insbesondere ist die Werkzeugmaschine 72a als eine Elektrowerkzeugmaschine ausgebildet. Insbesondere ist das Bearbeitungswerkzeug 12a von zumindest einem Elektromotor der Werkzeugmaschinenvorrichtung 10a antreibbar. Vorzugsweise umfasst die Werkzeugmaschinenvorrichtung 10a zumindest eine elektrische Energiespeichereinheit 74a, insbesondere einen Akkumulator, zu einer Energieversorgung zumindest des Elektromotors. Alternativ ist denkbar, dass die Werkzeugmaschinenvorrichtung 10a als eine pneumatisch betriebene Werkzeugmaschinenvorrichtung, als eine Benzin-betriebene Werkzeugmaschinenvorrichtung o. dgl. ausgebildet ist. Vorzugsweise ist die Werkzeugmaschinenvorrichtung 10a zu einer fräsenden Bearbeitung eines Werkstücks 76a vorgesehen. Insbesondere ist die Werkzeugmaschine 72a als eine Fräse, insbesondere als eine Kantenfräse, ausgebildet. Alternativ ist vorstellbar, dass die Werkzeugmaschine 72a als eine Tauchsäge, als ein Tacker, als ein Fuchsschwanz, als eine Schaumstoffsäge, als ein Trockenwandschneider, als eine Flachdübelfräse, als ein Bandschleifer, als ein Rotationswerkzeug, als ein Multischneider als ein, insbesondere autonomer, Rasenmäher, als eine Bohrmaschine, als ein Schlaghammer, als ein Trockenbauschrauber, als eine Heißluftpistole, als ein Freischneider, als ein Häcksler oder als eine andere, einem Fachmann als sinnvoll erscheinende Werkzeugmaschine ausgebildet ist. Insbesondere ist das Bearbeitungswerkzeug 12a als ein Fräswerkzeug ausgebildet.

Bevorzugt umfasst die Sensoreinheit 14a zumindest eine Antenne 24a, die dazu eingerichtet ist, zumindest ein elektrisches und/oder magnetisches Feld auszustrahlen, das den zumindest einen Detektionsbereich 20a definiert, und/oder den zumindest einen Fremdkörper 16a, 18a in Abhängigkeit von zumindest einer Änderung zumindest eines elektrischen und/oder magnetischen Felds zu erfassen. Die Sensoreinheit 14a ist vorzugsweise als eine elektrische, insbesondere als eine kapazitive, Sensoreinheit ausgebildet. Insbesondere ist die Sensoreinheit 14a verschieden von einer optischen, einer akustischen, einer haptischen o. dgl. Sensoreinheit ausgebildet. Insbesondere ist die Sensoreinheit 14a zu einer Annäherungsdetektion eingerichtet. Vorzugsweise ist die Sensoreinheit 14a dazu eingerichtet, den zumindest einen Fremdkörper 16a, 18a vor einem Kontakt mit dem Bearbeitungswerkzeug 12a zu erfassen. In Figur 1 sind beispielhaft zwei Fremdkörper 16a, 18a dargestellt, die von der Sensoreinheit 14a erfassbar sind. Insbesondere ist die Sensoreinheit 14a dazu eingerichtet, die Fremdkörper 16a, 18a in zumindest einem bestimmten Abstand 32a, 34a, 36a von dem Bearbeitungswerkzeug 12a, insbesondere innerhalb des Detektionsbereichs 20a um das Bearbeitungswerkzeug 12a, zu erfassen. Der Detektionsbereich 20a ist insbesondere ein sich um das Bearbeitungswerkzeug 12a erstreckender Bereich, in dem die Sensoreinheit 14a dazu in der Lage und dazu eingestellt ist, die Fremdkörper 16a, 18a zu detektieren. Vorzugsweise erstreckt sich der Detektionsbereich 20a asymmetrisch um das Bearbeitungswerkzeug 12a. Bevorzugt weist der Detektionsbereich 20a um für einen Bediener 48a der Werkzeugmaschinenvorrichtung 10a gefährlichen Stellen des Bearbeitungswerkzeugs 12a, insbesondere entlang einer Fräskante des Bearbeitungswerkzeugs 12a, eine größere Erstreckung auf als an anderen Stellen des Bearbeitungswerkzeugs 12a. Alternativ ist denkbar, dass der Detektionsbereich 20a sich symmetrisch, insbesondere sphärisch, um das Bearbeitungswerkzeug 12a erstreckt.

Die Fremdkörper 16a, 18a können insbesondere als lebendige Objekte, insbesondere als Körperteile 46a des Bedieners 48a, beispielsweise eine Hand 78a, ein Finger, ein Bein o. dgl., als ein Tier oder als ein anderes, einem Fachmann als sinnvoll erscheinendes lebendiges Objekt ausgebildet sein. Die Fremdkörper 16a, 18a können insbesondere als leblose Objekte, insbesondere als an dem Werkstück 76a angeordnete und/oder in einem Nahbereich des Werkstücks 76a verlaufende Störobjekte, beispielhaft als ein Nagel 80a, als eine Stromleitung, als eine Wasserleitung o. dgl., ausgebildet sein. Im vorliegenden Ausführungsbeispiel ist ein Fremdkörper 16a beispielhaft als ein lebendiges Objekt, insbesondere als eine Hand 78a des Bedieners 48a, ausgebildet und ist ein weiterer Fremdkörper 18a beispielhaft als ein lebloses Objekt, insbesondere als ein an dem Werkstück 76a angeordneter Nagel 80, ausgebildet.

Vorzugsweise ist die Steuer- und/oder Regeleinheit 22a signalübertragungstechnisch mit der Sensoreinheit 14a verbunden, insbesondere über zumindest eine Signalleitung (hier nicht dargestellt). Alternativ oder zusätzlich ist denkbar, dass die Steuer- und/oder Regeleinheit 22a über eine drahtlose Signalverbindung signalübertragungstechnisch mit der Sensoreinheit 14a verbunden ist. Vorzugsweise ist die Steuer- und/oder Regeleinheit 22a dazu eingerichtet, die Sensoreinheit 14a anzusteuern. Die Sensoreinheit 14a ist insbesondere dazu eingerichtet, der Steuer- und/oder Regeleinheit 22a das zumindest eine Signal, bevorzugt eine Mehrzahl von Signalen, bereitzustellen, insbesondere in Abhängigkeit von einer Erfassung von zumindest einem der Fremdkörper 16a, 18a in dem Detektionsbereich 20a. Vorzugsweise ist die Steuer- und/oder Regeleinheit 22a dazu eingerichtet, das zumindest eine von der Sensoreinheit 14a empfangene Signal auszuwerten. Insbesondere ist die Steuer- und/oder Regeleinheit 22a dazu eingerichtet, in Abhängigkeit von einer Auswertung des zumindest einen Signals der Sensoreinheit 14a die zumindest eine Aktion auszulösen.

Die zumindest eine Aktion ist vorzugsweise als eine Sicherheitsfunktion, insbesondere zu einer Verhinderung oder zumindest zu einer Verminderung einer Verletzung des Bedieners 48a, und/oder als eine Komfortfunktion, insbesondere zu einer Erleichterung einer Bedienung der Werkzeugmaschinenvorrichtung 10a für den Bediener 48a, ausgebildet. Die zumindest eine Aktion kann insbesondere als eine Bremsung des Bearbeitungswerkzeugs 12a, als ein Wegbewegen des Bearbeitungswerkzeugs 12a aus einem Gefahrenbereich 82a, als ein Abschirmen des Bearbeitungswerkzeugs 12a, als ein Ausgeben von zumindest einer, insbesondere optischen, akustischen und/oder haptischen, Warnmeldung, als ein Absetzen eines Notrufs oder als eine andere, einem Fachmann als sinnvoll erscheinende Aktion ausgebildet sein. Insbesondere kann die Steuer- und/oder Regeleinheit 22a dazu eingerichtet sein, eine Mehrzahl von, insbesondere unterschiedlichen, Aktionen auszulösen. Vorzugsweise kann die Steuer- und/oder Regeleinheit 22a dazu eingerichtet sein, in Abhängigkeit von unterschiedlichen Signalen der Sensoreinheit 14a unterschiedliche Aktionen auszulösen. Insbesondere ist die Steuer- und/oder Regeleinheit 22a dazu eingerichtet, in Abhängigkeit von dem zumindest einen Signal der Sensoreinheit 14a, insbesondere zu einer Auslösung der zumindest einen Aktion, zumindest eine Reaktionseinheit 84a, 86a, 88a der Werkzeugmaschinenvorrichtung 10a, die dazu vorgesehen ist, die zumindest eine Aktion durchzuführen, anzusteuern. Die zumindest eine Reaktionseinheit 84a, 86a, 88a kann insbesondere als eine Bremseinheit 60a, als eine Schutzeinheit 64a, insbesondere als eine Abdeckeinheit, als eine Schwenkeinheit, als eine Blockiereinheit, als eine Signalausgabeeinheit, als eine Kommunikationseinheit, als eine Einzugseinheit 68a oder als eine andere, einem Fachmann als sinnvoll erscheinende Einheit ausgebildet sein. Im vorliegenden Ausführungsbeispiel umfasst die Werkzeugmaschinenvorrichtung 10a beispielhaft drei Reaktionseinheiten 84a, 86a, 88a, wobei eine erste Reaktionseinheit 84a als eine mechanische Bremseinheit 60a, eine zweite Reaktionseinheit 86a als eine Schutzeinheit 64a und eine dritte Reaktionseinheit 88a als eine Einzugseinheit 68a ausgebildet ist. Die mechanische Bremseinheit 60a ist insbesondere dazu vorgesehen, eine Abtriebswelle 90a der Werkzeugmaschinenvorrichtung 10a, auf der das Bearbeitungswerkzeug 12a gelagert ist, insbesondere eine Rotation der Abtriebswelle 90a zu blockieren.

Die zumindest eine Antenne 24a ist vorzugsweise dazu eingerichtet, elektrischen Strom zu leiten. Insbesondere ist die zumindest eine Antenne 24a zylinderförmig, insbesondere kreiszylinderförmig, ausgebildet. Insbesondere ist die zumindest eine Antenne 24a dazu eingerichtet, ein radialsymmetrisch um eine Längsachse der Antenne 24a verteiltes elektrisches Feld und/oder ein konzentrisch um die Längsachse der Antenne 24a verteiltes magnetisches Feld auszustrahlen. Vorzugsweise ist die zumindest eine Antenne 24a als ein Kabel, insbesondere als ein Koaxialkabel, als ein Draht o. dgl. ausgebildet. Es ist auch denkbar, dass die Antenne 24a aus mehreren Elektroden gebildet ist. Alternativ oder zusätzlich ist denkbar, dass das Bearbeitungswerkzeug 12a und/oder die Abtriebswelle 90a, auf der das Bearbeitungswerkzeug 12a gelagert ist, die zumindest eine Antenne 24a ausbilden/ausbildet und/oder dass die zumindest eine Antenne 24a dazu eingerichtet ist, elektrisch mit dem Bearbeitungswerkzeug 12a und/oder mit der Abtriebswelle 90a zu koppeln. Bevorzugt ist das Bearbeitungswerkzeug 12a als die zumindest eine Antenne ausgebildet, wobei die Sensoreinheit 14a zumindest eine weitere Antenne 24a aufweist, die getrennt von dem Bearbeitungswerkzeug 12a ausgebildet ist. Im vorliegenden Ausführungsbeispiel weist die Sensoreinheit 14a beispielhaft die Antenne 24a auf, die getrennt von dem Bearbeitungswerkzeug 12a, insbesondere als Koaxialkabel, ausgebildet ist. Alternativ oder zusätzlich ist vorstellbar, dass die zumindest eine Antenne 24a getrennt von der Werkzeugmaschinenvorrichtung 10a ausgebildet ist, insbesondere an dem Bediener 48a, beispielsweise an einem Handschuh oder an einer Schutzbrille des Bedieners 48a, angeordnet ist.

Insbesondere ist die zumindest eine Antenne 24a dazu eingerichtet, zumindest ein elektromagnetisches Feld auszustrahlen. Insbesondere ist das elektrische und/oder magnetische, insbesondere elektromagnetische, Feld der zumindest einen Antenne 24a, insbesondere eine Feldstärke und/oder eine maximale Erstreckung des elektrischen und/oder magnetischen Felds der zumindest einen Antenne 24a, abhängig von einer an der zumindest einen Antenne 24a anliegenden elektrischen Spannung und/oder von einem die zumindest eine Antenne 24a durchfließenden elektrischen Strom. Insbesondere weist der Detektionsbereich 20a zumindest im Wesentlichen eine gleiche Form auf wie das elektrische und/oder magnetische, insbesondere elektromagnetische, Feld der zumindest einen Antenne 24a. Insbesondere ist eine Grenze des Detektionsbereichs 20a definiert durch eine Summe aller Abstände um die zumindest eine Antenne 24a, die eine gleiche minimale, insbesondere vorgegebene, Feldstärke des elektrischen und/oder magnetischen Felds der zumindest einen Antenne 24a aufweisen. Vorzugsweise ist die zumindest eine Antenne 24a in einem Nahbereich 42a des Bearbeitungswerkzeugs 12a angeordnet. Insbesondere kann die Sensoreinheit 14a eine Mehrzahl von Antennen 24a aufweisen, insbesondere zu einer Realisierung einer vollständigen Abdeckung des Bearbeitungswerkzeugs 12a mit einem Detektionsbereich 20a. Insbesondere kann die Sensoreinheit 14a zumindest zwei Antennen 24a, bevorzugt zumindest vier Antennen 24a, besonders bevorzugt zumindest sechs Antennen 24a und ganz besonders bevorzugt zumindest 8 Antennen 24a aufweisen. Im vorliegenden Ausführungsbeispiel weist die Sensoreinheit 14a beispielhaft die einzelne Antenne 24a auf.

Vorzugsweise ist die zumindest eine Antenne 24a dazu eingerichtet, die Fremdkörper 16a, 18a in Abhängigkeit von einer Änderung des von der zumindest einen Antenne 24a ausgestrahlten elektrischen und/oder magnetischen Felds zu erfassen. Alternativ oder zusätzlich ist vorstellbar, dass die zumindest eine Antenne 24a dazu eingerichtet ist, die Fremdkörper 16a, 18a in Abhängigkeit von einer Änderung eines weiteren, insbesondere von einer anderen Antenne ausgestrahlten, elektrischen und/oder magnetischen Felds zu erfassen. Insbesondere kann die Sensoreinheit 14a zumindest zwei Antennen 24a umfassen, wobei eine erste Antenne 24a dazu eingerichtet ist, ein elektrisches und/oder magnetisches Feld auszustrahlen und wobei eine zweite Antenne dazu eingerichtet ist, die Fremdkörper 16a, 18a in Abhängigkeit von einer Änderung des elektrischen und/oder magnetischen Felds der ersten Antenne 24a zu erfassen. Insbesondere ändern die in dem Detektionsbereich 20a angeordneten Fremdkörper 16a, 18a, insbesondere in Abhängigkeit von elektrischen und/oder magnetischen Eigenschaften der Fremdkörper 16a, 18a, das elektrische und/oder magnetische Feld, insbesondere Kenngrößen des elektrischen und/oder magnetischen Felds. Bevorzugt ist die zumindest eine Antenne 24a dazu eingerichtet, die Fremdkörper 16a, 18a kapazitiv, insbesondere in Abhängigkeit von einer von den Fremdkörpern 16a, 18a bewirkten Kapazitätsänderung des elektrischen und/oder magnetischen Felds, zu erfassen. Alternativ oder zusätzlich ist vorstellbar, dass die zumindest eine Antenne 24a dazu eingerichtet ist, die Fremdkörper 16a, 18a induktiv, insbesondere in Abhängigkeit von einer von den Fremdkörpern 16a, 18a bewirkten Induktivitätsänderung des elektrischen und/oder magnetischen Felds, zu erfassen.

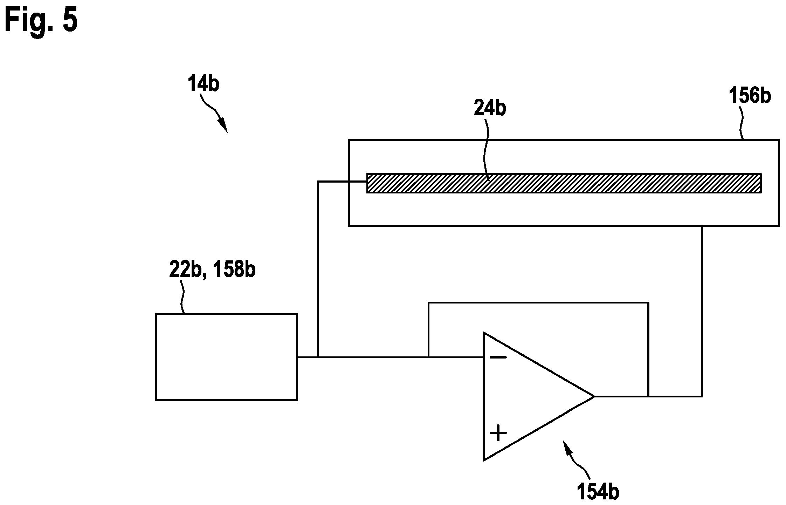

Vorzugsweise umfasst die Sensoreinheit 14a zumindest einen Abstimmkreis, der mit der Antenne 24a verbunden ist (hier nicht dargestellt, vgl. 158b aus Figur 5). Der Abstimmkreis ist insbesondere zumindest dazu vorgesehen, durch ein Zusammenwirken mit der Antenne 24a ein elektrisches und/oder magnetisches Feld zu erzeugen. Der Abstimmkreis ist vorzugsweise zumindest aus einem Schwingkreis, insbesondere einem RLC-Schwingkreis, und aus einer Phasenstabilisierungsschaltung gebildet. Bevorzugt ist eine Arbeitsfrequenz des Abstimmkreises kleiner als 5 MHz. Es ist jedoch alternativ auch denkbar, dass die Arbeitsfrequenz des Abstimmkreises größer ist als 5 MHz. Der Abstimmkreis weist insbesondere zumindest einen Verstärker auf, der beispielsweise von einem Feldeffekttransistor, einem Bipolartransistor, einem Operationsverstärker oder dergleichen gebildet ist. Ferner sind verschiedene Verstärkertopologien denkbar, beispielsweise eine teleskopische Topologie, eine zweistufige Verstärkertopologie, eine Kaskodentopologie oder dergleichen. Der Abstimmkreis ist vorzugsweise mit einer Signalaufbereitungseinheit, insbesondere einem Analog-Digital-Wandler, verbunden, wobei die Signalaufbereitungseinheit zu einer Signalübertragung zumindest mit der Steuer- und/oder Regeleinheit 22a verbindbar ist. Die Signalaufbereitungseinheit umfasst vorzugsweise zumindest einen Komparator, insbesondere einen Schmitt-Trigger, der zur Wandlung eines analogen Signals, bevorzugt von der Antenne 24a, in ein digitales Signal einsetzbar ist.

Bevorzugt ist die Steuer- und/oder Regeleinheit 22a dazu eingerichtet, in Abhängigkeit von dem zumindest einen Signal der Sensoreinheit 14a zumindest eine Bewegungskenngröße des zumindest einen Fremdkörpers 16a, 18a und/oder zumindest einen Abstand 32a, 34a, 36a des zumindest einen Fremdkörpers 16a, 18a von dem Bearbeitungswerkzeug 12a zu ermitteln. Vorzugsweise ist die Steuer- und/oder Regeleinheit 22a dazu eingerichtet, in Abhängigkeit von der zumindest einen ermittelten Bewegungskenngröße der Fremdkörper 16a, 18a und/oder in Abhängigkeit von dem zumindest einen ermittelten Abstand 32a, 34a, 36a der Fremdkörper 16a, 18a von dem Bearbeitungswerkzeug 12a die zumindest eine Aktion auszulösen. Insbesondere ist die Steuer- und/oder Regeleinheit 22a dazu eingerichtet, die zumindest eine ermittelte Bewegungskenngröße der Fremdkörper 16a, 18a und/oder den zumindest einen ermittelten Abstand 32a, 34a, 36a der Fremdkörper 16a, 18a von dem Bearbeitungswerkzeug 12a auszuwerten und insbesondere in Abhängigkeit von einem Ergebnis der Auswertung die zumindest eine Aktion auszulösen. Die zumindest eine Bewegungskenngröße der Fremdkörper 16a, 18a ist vorzugsweise als eine Bewegungsgeschwindigkeit der Fremdkörper 16a, 18a, insbesondere als eine Annäherungsgeschwindigkeit der Fremdkörper 16a, 18a an das Bearbeitungswerkzeug 12a, als eine Bewegungsbeschleunigung der Fremdkörper 16a, 18a, insbesondere als eine Annäherungsbeschleunigung der Fremdkörper 16a, 18a an das Bearbeitungswerkzeug 12a, als eine Bewegungsrichtung der Fremdkörper 16a, 18a oder als eine andere, einem Fachmann als sinnvoll erscheinende Bewegungskenngröße ausgebildet. Insbesondere ist die Steuer- und/oder Regeleinheit 22a dazu eingerichtet, in Abhängigkeit von dem zumindest einen Signal der Sensoreinheit 14a den Abstand 32a, 34a, 36a der Fremdkörper 16a, 18a von dem Bearbeitungswerkzeug 12a, insbesondere eine Position der Fremdkörper 16a, 18a zumindest relativ zu dem Bearbeitungswerkzeug 12a, zu ermitteln. Vorzugsweise ist die Steuer- und/oder Regeleinheit 22a dazu eingerichtet, die zumindest eine Bewegungskenngröße der Fremdkörper 16a, 18a in Abhängigkeit von einer Mehrzahl von, insbesondere zeitlich versetzt erfassten, Signalen der Sensoreinheit 14a zu ermitteln. Insbesondere ist die Steuer- und/oder Regeleinheit 22a dazu eingerichtet, in Abhängigkeit von einer verstrichenen Zeitdauer zwischen Erfassungen und/oder Ermittlungen der Fremdkörper 16a, 18a in zwei unterschiedlichen Abständen 32a, 34a, 36a von dem Bearbeitungswerkzeug 12a, insbesondere an zwei unterschiedlichen Positionen, und in Abhängigkeit von einem räumlichen Unterschied zwischen den zwei unterschiedlichen Abständen 32a, 34a, 36a von dem Bearbeitungswerkzeug 12a, insbesondere zwischen den zwei unterschiedlichen Positionen, die Bewegungsgeschwindigkeit der Fremdkörper 16a, 18a, insbesondere die Annäherungsgeschwindigkeit der Fremdkörper 16a, 18a an das Bearbeitungswerkzeug 12a, zu ermitteln. Vorzugsweise ist die Steuer- und/oder Regeleinheit 22a dazu eingerichtet, in Abhängigkeit von unterschiedlichen ermittelten Bewegungsgeschwindigkeiten der Fremdkörper 16a, 18a in unterschiedlichen Abständen 32a, 34a, 36a von dem Bearbeitungswerkzeug 12a, insbesondere an unterschiedlichen Positionen, die Bewegungsbeschleunigung der Fremdkörper 16a, 18a, insbesondere die Annäherungsbeschleunigung der Fremdkörper 16a, 18a an das Bearbeitungswerkzeug 12a, zu ermitteln. Im vorliegenden Ausführungsbeispiel weist der als Hand 78a des Bedieners 48a ausgebildete Fremdkörper 16a beispielhaft einen Abstand 32a von dem Bearbeitungswerkzeug 12a auf. Zudem ist in Figur 1 ein weiterer Abstand 34a des Fremdkörpers 16a von dem Bearbeitungswerkzeug 12a dargestellt, der insbesondere kleiner ist als der Abstand 32a des Fremdkörpers 16a von dem Bearbeitungswerkzeug 12a, insbesondere aufgrund einer zwischenzeitlichen Bewegung des Fremdkörpers 16a in Richtung des Bearbeitungswerkzeugs 12a. Im vorliegenden Ausführungsbeispiel weist der als Nagel 80a ausgebildete weitere Fremdkörper 18a beispielhaft einen Abstand 36a von dem Bearbeitungswerkzeug 12a auf.

Vorzugsweise ist die Steuer- und/oder Regeleinheit 22a dazu eingerichtet, den Abstand 32a, 34a, 36a der Fremdkörper 16a, 18a von dem Bearbeitungswerkzeug 12a, insbesondere die Position der Fremdkörper 16a, 18a zumindest relativ zu dem Bearbeitungswerkzeug 12a, in Abhängigkeit von einer Signalstärke des von der Sensoreinheit 14a erfassten Signals, insbesondere in Abhängigkeit von einer Höhe der Änderung des elektrischen und/oder magnetischen Felds der zumindest einen Antenne 24a, zu ermitteln. Alternativ oder zusätzlich ist vorstellbar, dass die Sensoreinheit 14a dazu eingerichtet ist, eine Mehrzahl von Detektionsbereichen 20a unterschiedlicher Radien um das Bearbeitungswerkzeug 12a bereitzustellen, wobei die Steuer- und/oder Regeleinheit 22a insbesondere dazu eingerichtet ist, in Abhängigkeit von einer Erfassung der Fremdkörper 16a, 18a in einem bestimmten Detektionsbereich 20a den Abstand 32a, 34a, 36a der Fremdkörper 16a, 18a von dem Bearbeitungswerkzeug 12a, insbesondere die Position der Fremdkörper 16a, 18a, zu ermitteln (hier nicht weiter dargestellt). Vorzugsweise ist die zumindest eine Antenne 24a dazu eingerichtet, die Mehrzahl von Detektionsbereichen 20a unterschiedlicher Radien um das Bearbeitungswerkzeug 12a bereitzustellen. Alternativ oder zusätzlich ist denkbar, dass die Sensoreinheit 14a eine Mehrzahl von Antennen 24a, insbesondere eine Anzahl von Antennen 24a entsprechend einer Anzahl von bereitzustellenden Detektionsbereichen 20a, umfasst, wobei insbesondere jeweils eine Antenne 24a dazu eingerichtet ist, zumindest einen der Mehrzahl von Detektionsbereichen 20a bereitzustellen. Vorzugsweise können die Detektionsbereiche 20a schichtförmig oder schalenförmig, insbesondere zylinderschalenförmig, kugelschalenförmig o. dgl., ausgebildet sein. Insbesondere können die Detektionsbereiche 20a entlang der Radien der Detektionsbereiche 20a betrachtet äquidistante Erstreckungen zwischeneinander aufweisen. Alternativ ist vorstellbar, dass die Detektionsbereiche 20a entlang der Radien der Detektionsbereiche 20a betrachtet voneinander abweichende Erstreckungen zwischeneinander aufweisen.

Bevorzugt ist die Steuer- und/oder Regeleinheit 22a dazu eingerichtet, in Abhängigkeit von unterschiedlichen ermittelten Bewegungskenngrößen des zumindest einen Fremdkörpers 16a, 18a und/oder in Abhängigkeit von unterschiedlichen ermittelten Abständen 32a, 34a, 36a des zumindest einen Fremdkörpers 16a, 18a von dem Bearbeitungswerkzeug 12a unterschiedliche Aktionen auszulösen. Insbesondere können in einer Speichereinheit der Steuer- und/oder Regeleinheit 22a eine Mehrzahl von unterschiedlichen Bewegungskenngrößen der Fremdkörper 16a, 18a und/oder von unterschiedlichen Abständen 32a, 34a, 36a der Fremdkörper 16a, 18a von dem Bearbeitungswerkzeug 12a und eine Mehrzahl von den unterschiedlichen Bewegungskenngrößen und/oder den unterschiedlichen Abständen 32a, 34a, 36a der Fremdkörper 16a, 18a zugeordneten auszulösenden Aktionen hinterlegt sein. Vorzugsweise ist die Steuer- und/oder Regeleinheit 22a dazu eingerichtet, die ermittelte Bewegungskenngröße der Fremdkörper 16a, 18a und/oder den ermittelten Abstand 32a, 34a, 36a der Fremdkörper 16a, 18a mit den in der Speichereinheit hinterlegten Bewegungskenngrößen und/oder Abständen 32a, 34a, 36a der Fremdkörper 16a, 18a zu vergleichen. Insbesondere ist die Steuer- und/oder Regeleinheit 22a dazu eingerichtet, in Abhängigkeit von dem Vergleich, die zumindest eine, der ermittelten Bewegungskenngröße und/oder dem ermittelten Abstand 32a, 34a, 36a der Fremdkörper 16a, 18a zugeordnete Aktion auszulösen.

Beispielhaft ist denkbar, dass die Steuer- und/oder Regeleinheit 22a dazu eingerichtet ist, in Abhängigkeit von einer ermittelten ersten Bewegungsgeschwindigkeit der Fremdkörper 16a, 18a und/oder in Abhängigkeit von einem ermittelten ersten Abstand 32a der Fremdkörper 16a, 18a von dem Bearbeitungswerkzeug 12a eine Ausgabe eines Warnsignals auszulösen. Beispielhaft ist denkbar, dass die Steuer- und/oder Regeleinheit 22a dazu eingerichtet ist, in Abhängigkeit von einer ermittelten zweiten Bewegungsgeschwindigkeit der Fremdkörper 16a, 18a, die schneller ist als die erste Bewegungsgeschwindigkeit der Fremdkörper 16a, 18a, und/oder in Abhängigkeit von einem ermittelten zweiten Abstand 34a der Fremdkörper 16a, 18a von dem Bearbeitungswerkzeug 12a, der geringer ist als der ermittelte erste Abstand 32a der Fremdkörper 16a, 18a von dem Bearbeitungswerkzeug 12a, eine Drehzahlreduzierung eines das Bearbeitungswerkzeug 12a antreibenden Motors 92a auszulösen. Beispielhaft ist denkbar, dass die Steuer- und/oder Regeleinheit 22a dazu eingerichtet ist, in Abhängigkeit von einer ermittelten dritten Bewegungsgeschwindigkeit der Fremdkörper 16a, 18a, die schneller ist als die zweite Bewegungsgeschwindigkeit der Fremdkörper 16a, 18a, und/oder in Abhängigkeit von einem ermittelten dritten Abstand 36a der Fremdkörper 16a, 18a von dem Bearbeitungswerkzeug 12a, der geringer ist als der ermittelte zweite Abstand 34a der Fremdkörper 16a, 18a von dem Bearbeitungswerkzeug 12a, eine Bremsung des das Bearbeitungswerkzeug 12a antreibenden Motors 92a und/oder des Bearbeitungswerkzeugs 12a auszulösen.

Bevorzugt ist die Steuer- und/oder Regeleinheit 22a dazu eingerichtet, in Abhängigkeit von der zumindest einen Bewegungskenngröße des zumindest einen Fremdkörpers 16a, 18a und/oder von dem zumindest einen Abstand 32a, 34a, 36a des zumindest einen Fremdkörpers 16a, 18a von dem Bearbeitungswerkzeug 12a und in Abhängigkeit von einer minimalen Stillstandbremszeit des Bearbeitungswerkzeugs 12a eine Berührungswahrscheinlichkeit des zumindest einen Fremdkörpers 16a, 18a mit dem sich bewegenden Bearbeitungswerkzeug 12a zu ermitteln. Insbesondere ist die Steuer- und/oder Regeleinheit 22a dazu eingerichtet, die zumindest eine Bewegungskenngröße der Fremdkörper 16a, 18a und/oder den zumindest einen Abstand 32a, 34a, 36a der Fremdkörper 16a, 18a von dem Bearbeitungswerkzeug 12a und die minimale Stillstandbremszeit des Bearbeitungswerkzeugs 12a zu einer Ermittlung der Berührungswahrscheinlichkeit der Fremdkörper 16a, 18a mit dem sich bewegenden Bearbeitungswerkzeug 12a auszuwerten.

Insbesondere ist die Steuer- und/oder Regeleinheit 22a dazu eingerichtet, die minimale Stillstandbremszeit des Bearbeitungswerkzeugs 12a zu ermitteln, insbesondere in Abhängigkeit von Kenngrößen des Bearbeitungswerkzeugs 12a, wie beispielsweise einer Massenträgheit des Bearbeitungswerkzeugs 12a, einer Drehzahl des Bearbeitungswerkzeugs 12a, einer Bewegungsgeschwindigkeit des Bearbeitungswerkzeugs 12a o. dgl., und in Abhängigkeit von zur Verfügung stehenden Bremsmöglichkeiten zur Stillstandbremsung des Bearbeitungswerkzeugs 12a, wie beispielsweise eine maximale Bremskraft der Bremseinheit 60a der Werkzeugmaschinenvorrichtung 10a, eine minimale Aktivierungsdauer der Bremseinheit 60a, eine minimale Zeitdauer bis zu einem Eingriff der Bremseinheit 60a o. dgl. Insbesondere kann die Werkzeugmaschinenvorrichtung 10a zumindest eine Erfassungseinheit 94a aufweisen, die dazu eingerichtet ist, die Kenngrößen des Bearbeitungswerkzeugs 12a und die zur Verfügung stehenden Bremsmöglichkeiten zu erfassen und der Steuer- und/oder Regeleinheit 22a bereitzustellen. Alternativ oder zusätzlich ist vorstellbar, dass die maximale Stillstandbremszeit des Bearbeitungswerkzeugs 12a und/oder zumindest die Kenngrößen des Bearbeitungswerkzeugs 12a und/oder die zur Verfügung stehenden Bremsmöglichkeiten in der Speichereinheit der Steuer- und/oder Regeleinheit 22a hinterlegt sind/ist. Vorzugsweise ist die Steuer- und/oder Regeleinheit 22a dazu eingerichtet, in Abhängigkeit von der ermittelten Berührungswahrscheinlichkeit der Fremdkörper 16a, 18a mit dem sich bewegenden Bearbeitungswerkzeug 12a, insbesondere in Abhängigkeit von einer Auswertung der ermittelten Berührungswahrscheinlichkeit der Fremdkörper 16a, 18a mit dem sich bewegenden Bearbeitungswerkzeug 12a, die zumindest eine Aktion auszulösen.

Bevorzugt ist die Steuer- und/oder Regeleinheit 22a dazu eingerichtet, in Abhängigkeit von der Berührungswahrscheinlichkeit kleiner als ein Wahrscheinlichkeitsschwellwert eine andere Aktion auszulösen als in Abhängigkeit von der Berührungswahrscheinlichkeit größer als der Wahrscheinlichkeitsschwellwert. Der Wahrscheinlichkeitsschwellwert ist vorzugsweise in der Speichereinheit der Steuer- und/oder Regeleinheit 22a hinterlegt. Insbesondere ist der Wahrscheinlichkeitsschwellwert als ein Wert einer Berührungswahrscheinlichkeit der Fremdkörper 16a, 18a mit dem sich bewegenden Bearbeitungswerkzeug 12a zwischen 0 % und 100 %, beispielhaft von 10 %, ausgebildet. Vorzugsweise ist die Steuer- und/oder Regeleinheit 22a dazu eingerichtet, die ermittelte Berührungswahrscheinlichkeit mit dem Wahrscheinlichkeitsschwellwert zu vergleichen und in Abhängigkeit von dem Vergleich die zumindest eine Aktion auszulösen. Beispielhaft ist denkbar, dass die Steuer- und/oder Regeleinheit 22a dazu eingerichtet ist, in Abhängigkeit von der Berührungswahrscheinlichkeit kleiner als der Wahrscheinlichkeitsschwellwert eine Bremsung des Bearbeitungswerkzeugs 12a auszulösen und in Abhängigkeit von der Berührungswahrscheinlichkeit größer als der Wahrscheinlichkeitsschwellwert zusätzlich eine Absetzung eines Notrufs auszulösen.

Bevorzugt ist die Steuer- und/oder Regeleinheit 22a dazu eingerichtet, unterschiedliche von der Sensoreinheit 14a erfasste Fremdkörper 16a, 18a zu klassifizieren und in Abhängigkeit von unterschiedlichen Klassifizierungen unterschiedliche Aktionen auszulösen. Insbesondere ist die Steuer- und/oder Regeleinheit 22a dazu eingerichtet, in Abhängigkeit von unterschiedlichen Signalen der Sensoreinheit 14a zwischen unterschiedlichen Arten von Fremdkörpern 16a, 18a, im vorliegenden Ausführungsbeispiel beispielhaft zwischen dem Fremdkörper 16a und dem weiteren Fremdkörper 18a, zu unterscheiden. Insbesondere weisen unterschiedliche Arten von Fremdkörpern 16a, 18a unterschiedliche elektrische und/oder magnetische, insbesondere kapazitive, Eigenschaften auf, beeinflussen insbesondere das elektrische und/oder magnetische Feld der Antenne 24a unterschiedlich. Insbesondere weist jede Art von Fremdkörper 16a, 18a eine eigene elektrische und/oder magnetische, insbesondere kapazitive, Signatur auf. Vorzugsweise ist die Steuer- und/oder Regeleinheit 22a dazu eingerichtet, eine Art des Fremdkörpers 16a, 18a in Abhängigkeit von der elektrischen, insbesondere kapazitiven, Signatur des Fremdkörpers 16a, 18a zu erkennen und den Fremdkörper 16a, 18a zu klassifizieren. Vorzugsweise sind in der Speichereinheit der Steuer- und/oder Regeleinheit 22a elektrische und/oder magnetische, insbesondere kapazitive, Signaturen von verschiedenen Arten von Fremdkörpern 16a, 18a hinterlegt. Insbesondere ist die Steuer- und/oder Regeleinheit 22a dazu eingerichtet, ein Signal der Sensoreinheit 14a entsprechend einer Erfassung eines Fremdkörpers 16a, 18a mit den hinterlegten Signaturen zu vergleichen und in Abhängigkeit von dem Vergleich den Fremdkörper 16a, 18a zu klassifizieren.

Insbesondere ist die Steuer- und/oder Regeleinheit 22a dazu eingerichtet, in Abhängigkeit von unterschiedlichen Signalen der Sensoreinheit 14a zwischen lebendigen und leblosen Fremdkörpern 16a, 18a zu unterscheiden und die Fremdkörper 16a, 18a entsprechend zu klassifizieren. Vorzugsweise ist die Steuer- und/oder Regeleinheit 22a dazu eingerichtet, in Abhängigkeit von unterschiedlichen Signalen der Sensoreinheit 14a zwischen menschlichen und tierischen lebendigen Fremdkörpern 16a zu unterscheiden und die Fremdkörper 16a entsprechend zu klassifizieren. Im vorliegenden Ausführungsbeispiel ist die Steuer- und/oder Regeleinheit 22a beispielhaft dazu eingerichtet, die Hand 78a des Bedieners 48a als den menschlichen lebendigen Fremdkörper 16a zu klassifizieren. Vorzugsweise ist die Steuer- und/oder Regeleinheit 22a dazu eingerichtet, in Abhängigkeit von unterschiedlichen Signalen der Sensoreinheit 14a zwischen leblosen Fremdkörpern 18a unterschiedlichen Materials zu unterscheiden und die Fremdkörper 18a entsprechend zu klassifizieren. Im vorliegenden Ausführungsbeispiel ist die Steuer- und/oder Regeleinheit 22a beispielhaft dazu eingerichtet, den Nagel 80a als den leblosen Fremdkörper 18a aus einem Metall zu klassifizieren. Vorzugsweise sind in der Speichereinheit der Steuer- und/oder Regeleinheit 22a den unterschiedlichen Klassifizierungen von Fremdkörpern 16a, 18a zugeordnete unterschiedliche auszulösende Aktionen hinterlegt. Insbesondere ist die Steuer- und/oder Regeleinheit 22a dazu eingerichtet, zumindest eine einer Klassifizierung eines erfassten Fremdkörpers 16a, 18a zugeordnete Aktion auszulösen. Beispielhaft ist denkbar, dass die Steuer- und/oder Regeleinheit 22a dazu eingerichtet ist, in Abhängigkeit von dem erfassten weiteren Fremdkörper 18a, der als ein lebloser Fremdkörper 18a klassifiziert ist, ein Wegschwenken des Bearbeitungswerkzeugs 12a aus dem Gefahrenbereich 82a auszulösen und in Abhängigkeit von dem erfassten Fremdkörper 16a, der als ein lebendiger Fremdkörper 16a klassifiziert ist, eine mechanische Bremsung des Bearbeitungswerkzeugs 12a auszulösen.

Bevorzugt umfasst die Werkzeugmaschinenvorrichtung 10a zumindest eine weitere Sensoreinheit 40a, die zumindest ein in einem als Führungsbereich ausgebildeten, insbesondere in dem vorgenannten, Nahbereich 42a des Bearbeitungswerkzeugs 12a angeordnetes Kontaktsensorelement 44a zu einer Erfassung von zumindest einem Körperteil 46a eines, insbesondere des vorgenannten, Bedieners 48a aufweist. Vorzugsweise umfasst eine als eine Fräse, insbesondere als eine Oberfräse, als eine Säge, insbesondere als eine Kettensäge, oder als eine Heckenschere ausgebildete, im vorliegenden Ausführungsbeispiel beispielhaft die als eine Kantenfräse ausgebildete, Werkzeugmaschine 72a die Werkzeugmaschinenvorrichtung 10a, die den zumindest einen Führungsbereich aufweist. Vorzugsweise ist der Führungsbereich zumindest abschnittsweise von einer Grundeinheit 96a der Werkzeugmaschinenvorrichtung 10a, insbesondere von einem Führungselement 98a der Grundeinheit 96a, beispielhaft einem Gleitschuh, wie beispielhaft im vorliegenden Ausführungsbeispiel, oder einem Handgriff, ausgebildet. Vorzugsweise erstreckt sich das Bearbeitungswerkzeug 12a, insbesondere die Abtriebswelle 90a, zumindest abschnittsweise durch das, insbesondere als ein Gleitschuh ausgebildete, Führungselement 98a hindurch. Insbesondere ist die Werkzeugmaschinenvorrichtung 10a mittels des Führungselements 98a entlang des Werkstücks 76a führbar. Insbesondere ist das, insbesondere als ein Gleitschuh ausgebildete, Führungselement 98a dazu vorgesehen, an dem Werkstück 76a anzuliegen. Vorzugsweise ist das Führungselement 98a dazu vorgesehen, insbesondere in dem Führungsbereich, von dem Bediener 48a, insbesondere zu einer Realisierung einer kontrollierten Führung der Werkzeugmaschinenvorrichtung 10a, gegriffen zu werden. Vorzugsweise ist das zumindest eine Kontaktsensorelement 44a an dem Führungselement 98a angeordnet, insbesondere passgenau in das Führungselement 98a integriert. Im vorliegenden Ausführungsbeispiel weist die weitere Sensoreinheit 40a beispielhaft zwei Kontaktsensorelemente 44a auf, die insbesondere an voneinander abgewandten Seiten des Führungselements 98a angeordnet sind. Insbesondere sind die Kontaktsensorelemente 44a in Griffmulden 100a des Führungselements 98a angeordnet.

Vorzugsweise sind die Kontaktsensorelemente 44a als kapazitive Sensoren, wie beispielhaft im vorliegenden Ausführungsbeispiel, als druckempfindliche Sensoren, als Fingerabdruckscanner, als Leitfähigkeitssensoren oder als andere, einem Fachmann als sinnvoll erscheinende Kontaktsensorelemente ausgebildet. Vorzugsweise ist die weitere Sensoreinheit 40a signalübertragungstechnisch mit der Steuer- und/oder Regeleinheit 22a verbunden, insbesondere über eine Signalleitung und/oder über eine Drahtlosverbindung (hier nicht dargestellt). Insbesondere ist die weitere Sensoreinheit 40a dazu eingerichtet, in Abhängigkeit von einer Erfassung des zumindest einen Körperteils 46a, insbesondere zumindest eines Fingers, des Bedieners 48a der Steuer- und/oder Regeleinheit 22a zumindest ein Signal bereitzustellen. Vorzugsweise ist die Steuer- und/oder Regeleinheit 22a dazu eingerichtet, in Abhängigkeit von dem zumindest einen Signal der weiteren Sensoreinheit 40a, insbesondere in Abhängigkeit von einer Erfassung des zumindest einen Körperteils 46a in dem Führungsbereich, die zumindest eine Aktion auszulösen. Beispielhaft ist denkbar, dass die Steuer- und/oder Regeleinheit 22a dazu eingerichtet ist, in Abhängigkeit von einer Erfassung des Körperteils 46a den das Bearbeitungswerkzeug 12a antreibenden Motor 92a zu aktivieren. Beispielhaft ist denkbar, dass die Steuer- und/oder Regeleinheit 22a dazu eingerichtet ist, in Abhängigkeit von einer fehlenden Erfassung des Körperteils 46a den das Bearbeitungswerkzeug 12a antreibenden Motor 92a zu deaktivieren, insbesondere zu einer Verhinderung einer unkontrollierten Führung der Werkzeugmaschinenvorrichtung 10a.

Bevorzugt ist die Steuer- und/oder Regeleinheit 22a dazu eingerichtet ist, in Abhängigkeit von zumindest einem Signal der weiteren Sensoreinheit 40a zumindest teilweise selbstständig zumindest einen Parameter, insbesondere den zumindest einen Detektionsbereich 20a, anzupassen. Bevorzugt ist die Steuer- und/oder Regeleinheit 22a dazu eingerichtet, in Abhängigkeit von dem zumindest einen Signal der weiteren Sensoreinheit 40a den zumindest einen Parameter vollständig selbstständig, insbesondere automatisch, anzupassen. Alternativ ist vorstellbar, dass die Steuer- und/oder Regeleinheit 22a dazu eingerichtet ist, den zumindest einen Parameter teilweise selbstständig anzupassen. Insbesondere kann die Steuer- und/oder Regeleinheit 22a dazu eingerichtet sein, in Abhängigkeit von dem zumindest einen Signal der weiteren Sensoreinheit 40a, insbesondere in Abhängigkeit von der Auswertung des zumindest einen Signals der weiteren Sensoreinheit 40a, dem Bediener 48a zumindest eine Empfehlung für eine Anpassung des zumindest einen Parameters bereitzustellen, beispielhaft über eine Signalausgabeeinheit der Werkzeugmaschinenvorrichtung 10a, und den zumindest einen Parameter in Abhängigkeit von einer Bedienereingabe anzupassen. Insbesondere kann die Steuer- und/oder Regeleinheit 22a dazu eingerichtet sein, in Abhängigkeit von dem zumindest einen Signal der weiteren Sensoreinheit 40a eine Mehrzahl von Parametern zumindest teilweise selbstständig anzupassen. Der zumindest eine anzupassende Parameter kann insbesondere als eine Empfindlichkeit der Sensoreinheit 14a, als der Detektionsbereich 20a, insbesondere als die Erstreckung des Detektionsbereichs 20a, als die Form des Detektionsbereichs 20a o. dgl., als eine Art der zumindest einen auszulösenden Aktion, als eine Reihenfolge einer Mehrzahl von auszulösenden Aktionen, als eine Auslösegeschwindigkeit und/oder als eine Durchführungsgeschwindigkeit der zumindest einen Aktion, beispielhaft eine Bremsgeschwindigkeit des Bearbeitungswerkzeugs 12a, oder als ein anderer, einem Fachmann als sinnvoll erscheinender Parameter ausgebildet sein.

Vorzugsweise ist die Steuer- und/oder Regeleinheit 22a dazu eingerichtet, in Abhängigkeit von dem zumindest einen Signal der weiteren Sensoreinheit 40a zumindest teilweise selbstständig den Detektionsbereich 20a, insbesondere die Erstreckung des Detektionsbereichs 20a, anzupassen, insbesondere zu vergrößern oder zu verkleinern. Insbesondere ist die Steuer- und/oder Regeleinheit 22a dazu eingerichtet, in Abhängigkeit von einem Signal der weiteren Sensoreinheit 40a entsprechend einer Erfassung des zumindest einen Körperteils 46a in dem Führungsbereich zumindest teilweise selbstständig den Detektionsbereich 20a, insbesondere eine maximale Erstreckung des Detektionsbereichs 20a, kleiner einzustellen als ein minimaler Abstand zwischen dem Bearbeitungswerkzeug 12a und dem Führungsbereich, insbesondere zu einer Vermeidung von Fehlauslösungen durch das Körperteil 46a. Insbesondere ist die Steuer- und/oder Regeleinheit 22a dazu eingerichtet, in Abhängigkeit von einem Signal der weiteren Sensoreinheit 40a entsprechend einer fehlenden Erfassung des zumindest einen Körperteils 46a in dem Führungsbereich zumindest teilweise selbstständig den Detektionsbereich 20a, insbesondere eine maximale Erstreckung des Detektionsbereichs 20a, größer einzustellen als ein minimaler Abstand zwischen dem Bearbeitungswerkzeug 12a und dem Führungsbereich, insbesondere zu einer Verringerung einer Verletzungsgefahr durch eine Fehlbedienung der Werkzeugmaschinenvorrichtung 10a.

Bevorzugt umfasst die Werkzeugmaschinenvorrichtung 10a zumindest eine, insbesondere die vorgenannte, Schutzeinheit 64a, die zumindest ein Abschirmelement 66a aufweist, wobei die Steuer- und/oder Regeleinheit 22a dazu eingerichtet ist, in Abhängigkeit von dem zumindest einen Signal der Sensoreinheit 14a die Schutzeinheit 64a zu einer Beförderung des zumindest einen Abschirmelements 66a um das Bearbeitungswerkzeug 12a anzusteuern. Insbesondere weist die Werkzeugmaschinenvorrichtung 10a die Schutzeinheit 64a alternativ oder, wie beispielhaft im vorliegenden Ausführungsbeispiel, zusätzlich zu der mechanischen Bremseinheit 60a auf. Vorzugsweise ist das Abschirmelement 66a dazu vorgesehen, das Bearbeitungswerkzeug 12a zumindest abschnittsweise abzudecken, insbesondere zu umschließen. In Figur 1 ist die Schutzeinheit 64a beispielhaft in einem aktivierten Zustand dargestellt, in dem das Abschirmelement 66a das Bearbeitungswerkzeug 12a zumindest abschnittsweise abdeckt. Insbesondere ist das Abschirmelement 66a dazu vorgesehen, zumindest einen Gefährdungsbereich 102a, insbesondere zumindest eine Fräskante, des Bearbeitungswerkzeugs 12a abzudecken, insbesondere zu umschließen. Vorzugsweise ist das Abschirmelement 66a dazu vorgesehen, den Fremdkörper 16a, insbesondere das Körperteil 46a des Bedieners 48a, vor dem Bearbeitungswerkzeug 12a und/oder das Bearbeitungswerkzeug 12a vor dem weiteren Fremdkörper 18a zu schützen. Insbesondere ist das Abschirmelement 66a dazu vorgesehen, ein Fassen an das Bearbeitungswerkzeug 12a, insbesondere durch den Bediener 48a, zu verhindern. Das Abschirmelement 66a kann insbesondere als eine Abschirmhaube, wie beispielhaft im vorliegenden Ausführungsbeispiel, als eine Abschirmhülle, als ein Airbag, als ein Käfig oder als ein anderes, einem Fachmann als sinnvoll erscheinendes Abschirmelement ausgebildet sein. Insbesondere ist das Abschirmelement 66a beweglich an, insbesondere zumindest abschnittsweise innerhalb, der Grundeinheit 96a der Werkzeugmaschinenvorrichtung 10a, insbesondere eines Gehäuses 54a der Grundeinheit 96a, gelagert. Insbesondere kann das Abschirmelement 66a teleskopierbar, wie beispielhaft im vorliegenden Ausführungsbeispiel, aufblasbar, aufspannbar o. dgl. ausgebildet sein. Vorzugsweise umfasst die Schutzeinheit 64a zumindest einen Aktor 104a, der dazu vorgesehen ist, das Abschirmelement 66a um das Bearbeitungswerkzeug 12a zu befördern und/oder eine Beförderung des Abschirmelements 66a durch zumindest einen weiteren Aktor der Schutzeinheit 64a freizugeben. Insbesondere ist die Steuer- und/oder Regeleinheit 22a dazu eingerichtet, in Abhängigkeit von dem zumindest einen Signal der Sensoreinheit 14a den Aktor 104a zu einer Beförderung des Abschirmelements 66a um das Bearbeitungswerkzeug 12a anzusteuern. Der zumindest eine Aktor 104a kann insbesondere als ein elektromagnetischer Aktor, als ein Federkraftaktor, als ein Druckluftaktor, als ein Explosivaktor, als ein Schmelzdrahtaktor, als ein Formgedächtnisaktor oder als ein anderer, einem Fachmann als sinnvoll erscheinender Aktor ausgebildet sein.

Bevorzugt umfasst die Werkzeugmaschinenvorrichtung 10a zumindest eine Einzugseinheit 68a, wobei die Steuer- und/oder Regeleinheit 22a dazu eingerichtet ist, in Abhängigkeit von dem zumindest einen Signal der Sensoreinheit 14a die Einzugseinheit 68a zu einer Beförderung des Bearbeitungswerkzeugs 12a aus einem Bearbeitungsbereich 70a anzusteuern. Insbesondere weist die Werkzeugmaschinenvorrichtung 10a die Einzugseinheit 68a alternativ oder, wie beispielhaft im vorliegenden Ausführungsbeispiel, zusätzlich zu der mechanischen Bremseinheit 60a und/oder zu der Schutzeinheit 64a auf. Der Bearbeitungsbereich 70a ist insbesondere ein Bereich innerhalb des Detektionsbereichs 20a. Insbesondere kann der Bearbeitungsbereich 70a dem Detektionsbereich 20a entsprechen. Insbesondere sind in dem Bearbeitungsbereich 70a zumindest abschnittsweise zumindest das Bearbeitungswerkzeug 12a und zumindest das Werkstück 76a angeordnet. Insbesondere besteht in dem Bearbeitungsbereich 70a eine Verletzungsgefahr für den Bediener 48a durch Berühren des Bearbeitungswerkzeugs 12a und/oder eine Beschädigungsgefahr für das Bearbeitungswerkzeug 12a durch Berühren des Fremdkörpers 18a. In Figur 1 ist die Einzugseinheit 68a beispielhaft in einem deaktivierten Zustand dargestellt, in dem das Bearbeitungswerkzeug 12a insbesondere in dem Bearbeitungsbereich 70a angeordnet ist. Die Einzugseinheit 68a ist vorzugsweise dazu vorgesehen, das Bearbeitungswerkzeug 12a aus dem Bearbeitungsbereich 70a zu ziehen, insbesondere einzuziehen, wie beispielhaft im vorliegenden Ausführungsbeispiel, zu drücken, zu stoßen, wegzuschwenken oder auf eine andere, einem Fachmann als sinnvoll erscheinende Weise aus dem Bearbeitungsbereich 70a zu befördern. Vorzugsweise ist die Einzugseinheit 68a dazu vorgesehen, das Bearbeitungswerkzeug 12a von den erfassten Fremdkörpern 16a, 18a wegzubefördern. Insbesondere ist die Einzugseinheit 68a dazu vorgesehen, das Bearbeitungswerkzeug 12a zumindest abschnittsweise in einen zumindest abschnittsweise abgedeckten Bereich der Werkzeugmaschinenvorrichtung 10a, beispielsweise in die Grundeinheit 96a, insbesondere in das Gehäuse 54a, in eine Schutzhaube o. dgl., zu befördern.

Vorzugsweise umfasst die Einzugseinheit 68a zumindest einen Aktor 106a, der dazu vorgesehen ist, das Bearbeitungswerkzeug 12a aus dem Bearbeitungsbereich 70a zu befördern. Der Aktor 106a ist bevorzugt mit dem Bearbeitungswerkzeug 12a wirkverbunden, insbesondere direkt, beispielsweise mechanisch, magnetisch o. dgl., und/oder indirekt, beispielsweise über einen Schwenkarm, die Abtriebswelle 90a, wie beispielhaft im vorliegenden Ausführungsbeispiel, o. dgl. Vorzugsweise sind/ist das Bearbeitungswerkzeug 12a und/oder zumindest ein Bauteil, an dem das Bearbeitungswerkzeug 12a gelagert ist, beispielhaft die Abtriebswelle 90a, wie beispielhaft im vorliegenden Ausführungsbeispiel, der Schwenkarm o. dgl., beweglich, insbesondere aus dem Bearbeitungsbereich 70a bewegbar, gelagert. Insbesondere ist die Steuer- und/oder Regeleinheit 22a dazu eingerichtet, in Abhängigkeit von dem zumindest einen Signal der Sensoreinheit 14a den Aktor 106a zu einer Beförderung des Bearbeitungswerkzeugs 12a aus dem Bearbeitungsbereich 70a anzusteuern. Der zumindest eine Aktor 106a kann insbesondere als ein elektromagnetischer Aktor, als ein Federkraftaktor, als ein Druckluftaktor, als ein Explosivaktor, als ein Schmelzdrahtaktor, als ein Formgedächtnisaktor oder als ein anderer, einem Fachmann als sinnvoll erscheinender Aktor ausgebildet sein. Insbesondere können/kann der Aktor 106a und/oder die Steuer- und/oder Regeleinheit 22a dazu vorgesehen sein, eine Bremsenergie einer Bremsung des Bearbeitungswerkzeugs 12a und/oder zumindest einen elektrischen Strom einer Motorbremsung des das Bearbeitungswerkzeug 12a antreibenden Motors 92a zu einer Beförderung des Bearbeitungswerkzeugs 12a zu nutzen. Der Aktor 106a kann insbesondere dazu vorgesehen sein, zu einer Beförderung des Bearbeitungswerkzeugs 12a aus dem Bearbeitungsbereich 70a das Bearbeitungswerkzeug 12a und/oder die Abtriebswelle 90a von dem das Bearbeitungswerkzeug 12a antreibenden Motor 92a zu entkoppeln. Insbesondere kann die Einzugseinheit 68a Rampenelemente aufweisen, an denen das Bearbeitungswerkzeug 12a und/oder die Abtriebswelle 90a in Abhängigkeit von einer Bewegungsenergie, insbesondere Rotationsenergie, des Bearbeitungswerkzeugs 12a und/oder der Abtriebswelle 90a entlang aus dem Bearbeitungsbereich 70a gleiten können/kann (hier nicht dargestellt).

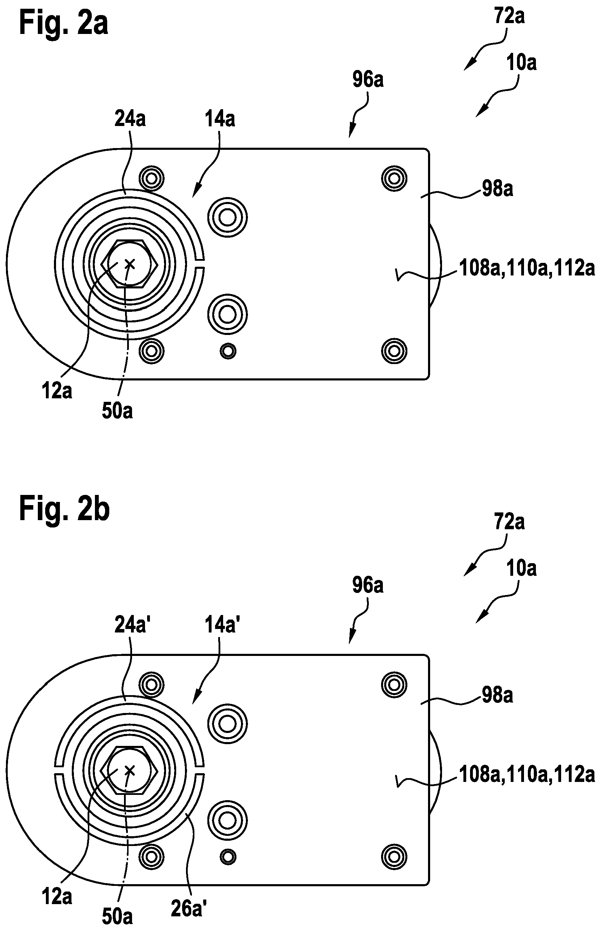

Figur 2a zeigt die Werkzeugmaschine 72a aus Fig. 1, insbesondere eine Unterseite 108a des Führungselements 98a, in einer schematischen Darstellung. Die Unterseite 108a des Führungselements 98a ist insbesondere als eine Gleitfläche 110a der Werkzeugmaschinenvorrichtung 10a ausgebildet. Bevorzugt ist die zumindest eine Antenne 24a ringförmig um eine Längsachse 50a des Bearbeitungswerkzeugs 12a angeordnet. Vorzugsweise umfasst eine als eine Oberfräse, als eine Kantenfräse, als eine Stichsäge oder als eine Säbelsäge ausgebildete, im vorliegenden Ausführungsbeispiel beispielhaft die als eine Kantenfräse ausgebildete, Werkzeugmaschine 72a die Werkzeugmaschinenvorrichtung 10a mit der zumindest einen Antenne 24a, die ringförmig um die Längsachse 50a des Bearbeitungswerkzeugs 12a angeordnet ist. Vorzugsweise ist die zumindest eine Antenne 24a in einer Ebene 112a, insbesondere in der Gleitfläche 110a, angeordnet, die sich quer, insbesondere senkrecht, zu der Längsachse 50a des Bearbeitungswerkzeugs 12a erstreckt. Vorzugsweise ist die zumindest eine Antenne 24a kreisringförmig, teilringförmig, insbesondere halbringförmig, o. dgl. um die Längsachse 50a des Bearbeitungswerkzeugs 12a angeordnet. Im vorliegenden Ausführungsbeispiel ist die Antenne 24a beispielhaft kreisringförmig, insbesondere abschnittsweise unterbrochen, angeordnet. Vorzugsweise ist die zumindest eine Antenne 24a an der Grundeinheit 96a der Werkzeugmaschinenvorrichtung 10a, insbesondere an dem, insbesondere als ein Gleitschuh ausgebildeten, Führungselement 98a, angeordnet. Insbesondere kann die zumindest eine Antenne 24a zumindest abschnittsweise innerhalb der Grundeinheit 96a, insbesondere innerhalb des Führungselements 98a, angeordnet sein. Vorzugsweise kann die Sensoreinheit 14a eine Mehrzahl von Antennen 24a aufweisen, wobei insbesondere zwei Antennen 24a an voneinander abgewandten Seiten des Führungselements 98a angeordnet sein können. Vorzugsweise ist die zumindest eine Antenne 24a in der zumindest einen sich parallel zu der Gleitfläche 110a des, insbesondere als ein Gleitschuh ausgebildeten, Führungselements 98a erstreckenden Ebene 112a angeordnet.

Figur 2b zeigt die Werkzeugmaschine 72a aus Fig. 1, insbesondere eine Unterseite 108a eines Führungselements 98a, mit einer alternativen Sensoreinheit 14a' in einer schematischen Darstellung. Insbesondere umfasst die Sensoreinheit 14a' zwei Antennen 24a', 26a', insbesondere eine erste Antenne 24a' und eine zweite Antenne 26a'. Vorzugsweise sind die Antennen 24a', 26a' halbkreisringförmig um eine Längsachse 50a eines Bearbeitungswerkzeugs 12a angeordnet. Insbesondere sind die Antennen 24a', 26a' verbindungsfrei miteinander angeordnet. Insbesondere bilden die Antennen 24a', 26a' jeweils ein Kreisringsegment, insbesondere eines abschnittsweise unterbrochenen Kreisrings, aus.

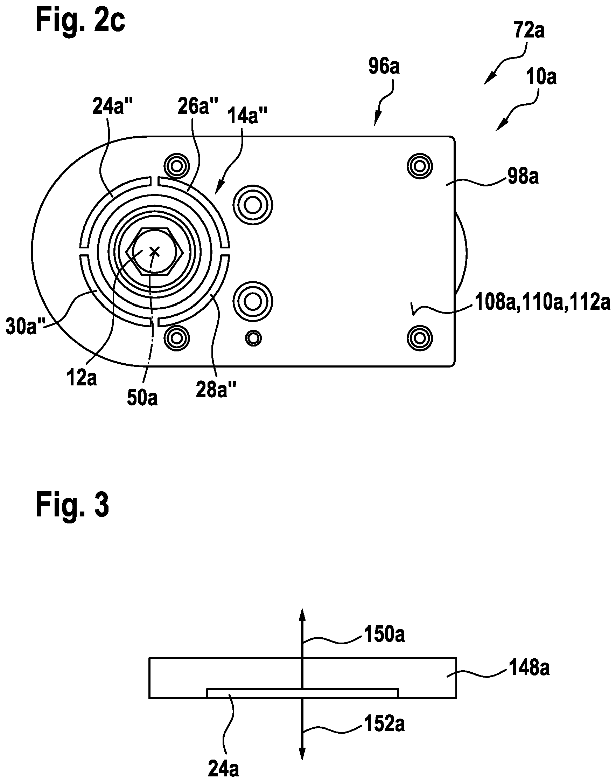

Figur 2c zeigt die Werkzeugmaschine 72a aus Fig. 1, insbesondere eine Unterseite 108a eines Führungselements 98a, mit einer weiteren alternativen Sensoreinheit 14a" in einer schematischen Darstellung. Insbesondere umfasst die Sensoreinheit 14a" vier Antennen 24a", 26a", 28a", 30a", insbesondere eine erste Antenne 24a", eine zweite Antenne 26a", eine dritte Antenne 28a" und eine vierte Antenne 30a". Vorzugsweise sind die Antennen 24a", 26a", 28a", 30a" viertelkreisringförmig um eine Längsachse 50a eines Bearbeitungswerkzeugs 12a angeordnet. Insbesondere sind die Antennen 24a", 26a", 28a", 30a" verbindungsfrei miteinander angeordnet. Insbesondere bilden die Antennen 24a", 26a", 28a", 30a" jeweils ein Kreisringsegment, insbesondere eines abschnittsweise unterbrochenen Kreisrings, aus.

Figur 3 zeigt eine Schnittansicht eines Teils der Werkzeugmaschine 72a aus Figur 2a in einer schematischen Darstellung, in der zumindest die Antenne 24a der Sensoreinheit 14a abgebildet ist. Bevorzugt umfasst die Sensoreinheit 14a zumindest ein, insbesondere einteilig mit der Antenne 24a ausgebildetes, Feldabschirmelement 148a, welches dazu eingerichtet ist, ein von der Antenne 24a ausgestrahltes elektrisches und/oder magnetisches Feld entlang von zumindest einer Ausstrahlungsrichtung 150a abzuschirmen. Das Feldabschirmelement 148a ist bevorzugt aus einem für elektromagnetische Strahlung, vorzugsweise für elektrische und/oder magnetische Felder, intransparenten Material, insbesondere aus einem Metall, beispielsweise aus einem Blei, aus einem Eisen, aus einem Stahl o. dgl. ausgebildet. Es ist auch denkbar, dass die Antenne 24a teilweise von einem Koaxialkabel gebildet ist, wobei das Koaxialkabel das Feldabschirmelement 148a bildet. Insbesondere ist das Feldabschirmelement 148a dazu vorgesehen, das elektrische und/oder magnetische Feld der Antenne 24a entlang von der Ausstrahlungsrichtung 150a zu absorbieren und/oder zu reflektieren. Zusätzlich ist denkbar, dass das Feldabschirmelement 148a dazu eingerichtet ist, das elektrische und/oder magnetische Feld der Antenne 24a entlang von zumindest einer abschirmungsfreien Ausstrahlungsrichtung 152a zu fokussieren. Insbesondere ist die Antenne 24a entlang von zumindest einer Ausstrahlungsrichtung 152a betrachtet abschirmungsfrei angeordnet. Insbesondere ist entlang der zumindest einen Ausstrahlungsrichtung 152a, entlang von der betrachtet die zumindest eine Antenne 24a abschirmungsfrei angeordnet ist, zumindest ein Gefährungsbereich des Bearbeitungswerkzeugs angeordnet (hier nicht dargestellt).

Im Folgenden wird ein Verfahren zum Betrieb einer Werkzeugmaschinenvorrichtung, insbesondere der vorgenannten Werkzeugmaschinenvorrichtung 10a, insbesondere anhand der Figur 1, beschrieben. Bevorzugt wird in zumindest einem Verfahrensschritt mittels zumindest einer, insbesondere der zumindest einen vorgenannten, Antenne 24a zumindest ein elektrisches und/oder magnetisches Feld ausgestrahlt, von dem zumindest ein Detektionsbereich 20a um zumindest ein, insbesondere um das vorgenannte, Bearbeitungswerkzeug 12a der Werkzeugmaschinenvorrichtung 10a definiert wird, und/oder wird mittels der zumindest einen Antenne 24a zumindest ein Fremdkörper 16a, 18a in Abhängigkeit von zumindest einer Änderung zumindest eines elektrischen und/oder magnetischen Felds erfasst.

Bevorzugt werden/wird in zumindest einem weiteren Verfahrensschritt in Abhängigkeit von zumindest einem Signal zumindest einer, insbesondere der vorgenannten, Sensoreinheit 14a der Werkzeugmaschinenvorrichtung 10a zumindest eine Bewegungskenngröße des zumindest einen Fremdkörpers 16a, 18a und/oder zumindest ein Abstand 32a, 34a, 36a des zumindest einen Fremdkörpers 16a, 18a von dem Bearbeitungswerkzeug 12a ermittelt. Hinsichtlich weiterer Verfahrensschritte des Verfahrens zum Betrieb der Werkzeugmaschinenvorrichtung 10a darf auf die vorhergehende Beschreibung der Werkzeugmaschinenvorrichtung 10a verwiesen werden, da diese Beschreibung analog auch auf das Verfahren zu lesen ist und somit alle Merkmale hinsichtlich der Werkzeugmaschinenvorrichtung 10a auch in Bezug auf das Verfahren zum Betrieb der Werkzeugmaschinenvorrichtung 10a als offenbart gelten.

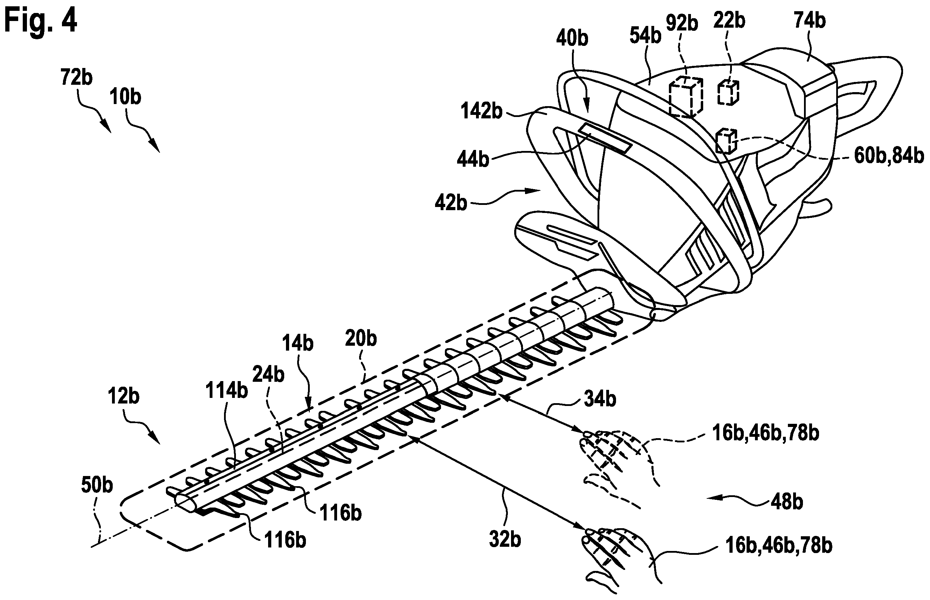

In den Figuren 4 bis 12 sind neun weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figuren 4 bis 12 ist der Buchstabe a durch die Buchstaben b bis j ersetzt.

Figur 4 zeigt eine erste alternative Werkzeugmaschine 72b in einer schematischen perspektivischen Darstellung. Die Werkzeugmaschine 72b ist insbesondere als eine Heckenschere ausgebildet. Die Werkzeugmaschine 72b umfasst insbesondere eine Werkzeugmaschinenvorrichtung 10b. Vorzugsweise ist die Werkzeugmaschinenvorrichtung 10b zu einer schneidenden und/oder zu einer sägenden Bearbeitung eines Werkstücks vorgesehen. Vorzugsweise umfasst die Werkzeugmaschinenvorrichtung 10b zumindest ein motorisch antreibbares Bearbeitungswerkzeug 12b, insbesondere zumindest eine Klinge. Insbesondere ist das Bearbeitungswerkzeug 12b an einem Schwertelement 114b der Werkzeugmaschinenvorrichtung 10b gelagert. Vorzugsweise umfasst die Werkzeugmaschinenvorrichtung 10b zumindest eine, insbesondere kapazitive, Sensoreinheit 14b, die dazu eingerichtet ist, zumindest einen Fremdkörper 16b in zumindest einem Detektionsbereich 20b um das Bearbeitungswerkzeug 12b zu erfassen, und zumindest eine Steuer- und/oder Regeleinheit 22b, die dazu eingerichtet ist, in Abhängigkeit von zumindest einem Signal der Sensoreinheit 14b zumindest eine Aktion auszulösen. Bevorzugt umfasst die Sensoreinheit 14b zumindest eine Antenne 24b, die dazu eingerichtet ist, zumindest ein elektrisches und/oder magnetisches Feld auszustrahlen, das den zumindest einen Detektionsbereich 20b definiert, und/oder den zumindest einen Fremdkörper 16b in Abhängigkeit von zumindest einer Änderung zumindest eines elektrischen und/oder magnetischen Felds zu erfassen. Vorzugsweise ist die Steuer- und/oder Regeleinheit 22b dazu eingerichtet, in Abhängigkeit von dem zumindest einen Signal der Sensoreinheit 14b entsprechend einer Erfassung des Fremdkörpers 16b in dem Detektionsbereich 20b zumindest eine Bremsung des Bearbeitungswerkzeugs 12b auszulösen, insbesondere durch eine Ansteuerung einer mechanischen Bremseinheit 60b der Werkzeugmaschinenvorrichtung 10b.

Bevorzugt ist die Steuer- und/oder Regeleinheit 22b dazu eingerichtet, in Abhängigkeit von zumindest einer Bewegungskenngröße des zumindest einen Fremdkörpers 16b und/oder von zumindest einem Abstand 32b, 34b des zumindest einen Fremdkörpers 16b von dem Bearbeitungswerkzeug 12b und in Abhängigkeit von einer minimalen Stillstandbremszeit des Bearbeitungswerkzeugs 12b eine Berührungswahrscheinlichkeit des zumindest einen Fremdkörpers 16b mit dem sich bewegenden Bearbeitungswerkzeug 12b zu ermitteln. In Figur 4 ist der Fremdkörper 16b, insbesondere eine Hand 78b eines Bedieners 48b, beispielhaft in zwei verschiedenen Abständen 32b, 34b von dem Bearbeitungswerkzeug 12b dargestellt. Bevorzugt ist die Steuer- und/oder Regeleinheit 22b dazu eingerichtet, in Abhängigkeit von der Berührungswahrscheinlichkeit kleiner als ein Wahrscheinlichkeitsschwellwert eine andere Aktion auszulösen als in Abhängigkeit von der Berührungswahrscheinlichkeit größer als der Wahrscheinlichkeitsschwellwert. Beispielhaft ist denkbar, dass die Steuer- und/oder Regeleinheit 22b dazu eingerichtet ist, in Abhängigkeit von der Berührungswahrscheinlichkeit kleiner als der Wahrscheinlichkeitsschwellwert eine Bewegung von beweglichen Zähnen 116b des Bearbeitungswerkzeugs 12b, insbesondere der Heckenschere, in eine geschlossene Stellung auszulösen, insbesondere zu einer Verhinderung einer Verletzung des Bedieners 48b an den stillstehenden, aber scharfkantigen Zähnen 116b. Beispielhaft ist denkbar, dass die Steuer- und/oder Regeleinheit 22b dazu eingerichtet ist, in Abhängigkeit von der Berührungswahrscheinlichkeit größer als der Wahrscheinlichkeitsschwellwert eine Bewegung der beweglichen Zähne 116b des Bearbeitungswerkzeugs 12b in eine geöffnete Stellung auszulösen, insbesondere zu einer Verhinderung eines Abtrennens eines Körperteils 46b des Bedieners 48b durch die sich bei Berührung des Bearbeitungswerkzeugs 12b in die geschlossene Stellung bewegenden Zähne 116b. Insbesondere ist die Steuer- und/oder Regeleinheit 22b dazu eingerichtet, einen das Bearbeitungswerkzeug 12b antreibenden Motor 92b der Werkzeugmaschinenvorrichtung 10b zu einer Auslösung einer Bewegung, insbesondere eines Verfahrens, der Zähne 116b des Bearbeitungswerkzeugs 12b anzusteuern.

Vorzugsweise umfasst die Werkzeugmaschinenvorrichtung 10b zumindest eine weitere Sensoreinheit 40b, die zumindest ein in einem als Führungsbereich ausgebildeten Nahbereich 42b des Bearbeitungswerkzeugs 12b, insbesondere an einem Zusatzhandgriff 142b der Werkzeugmaschinenvorrichtung 10b, angeordnetes Kontaktsensorelement 44b zu einer Erfassung von dem zumindest einen Körperteil 46b des Bedieners 48b aufweist. Bevorzugt ist die Steuer- und/oder Regeleinheit 22b dazu eingerichtet, in Abhängigkeit von zumindest einem Signal der weiteren Sensoreinheit 40b zumindest teilweise selbstständig einen Parameter anzupassen. Insbesondere ist die Steuer- und/oder Regeleinheit 22b dazu eingerichtet, in Abhängigkeit von dem zumindest einen Signal der weiteren Sensoreinheit 40b entsprechend einer Erfassung des Körperteils 46b des Bedieners 48b den Motor 92b zu aktivieren.

Bevorzugt ist die zumindest eine Antenne 24b parallel zu einer Längsachse 50b des Bearbeitungswerkzeugs 12b angeordnet. Insbesondere ist die zumindest eine Antenne 24b alternativ, wie beispielhaft im vorliegenden Ausführungsbeispiel, oder zusätzlich zu einer ringförmigen Anordnung um die Längsachse 50b des Bearbeitungswerkzeugs 12b parallel zu der Längsachse 50b des Bearbeitungswerkzeugs 12b angeordnet. Insbesondere kann die Sensoreinheit 14b in einer alternativen Ausgestaltungsform zumindest zwei Antennen 24b aufweisen, wobei eine Antenne ringförmig um die Längsachse 50b des Bearbeitungswerkzeugs 12b und eine weitere Antenne 24b parallel zu der Längsachse 50b des Bearbeitungswerkzeugs 12b angeordnet ist. Vorzugsweise umfasst eine als eine Heckenschere, wie beispielhaft im vorliegenden Ausführungsbeispiel, als eine Kettensäge, als eine Oberfräse, als eine Kantenfräse, als eine Stichsäge oder als eine Säbelsäge ausgebildete Werkzeugmaschine 72b die Werkzeugmaschinenvorrichtung 10b mit der zumindest einen Antenne 24b, die parallel zu der Längsachse 50b des Bearbeitungswerkzeugs 12b angeordnet ist. Insbesondere kann das Bearbeitungswerkzeug 12b zumindest abschnittsweise die zumindest eine Antenne 24b ausbilden und/oder kann die zumindest eine Antenne 24b zumindest abschnittsweise an, insbesondere innerhalb von, dem Bearbeitungswerkzeug 12b angeordnet sein. Alternativ oder zusätzlich ist vorstellbar, dass das zumindest eine Schwertelement 114b der Werkzeugmaschinenvorrichtung 10b, an dem das Bearbeitungswerkzeug 12b zumindest abschnittsweise gelagert ist, die zumindest eine Antenne 24b zumindest abschnittsweise ausbildet und/oder dass die zumindest eine Antenne 24b, wie beispielhaft im vorliegenden Ausführungsbeispiel, zumindest abschnittsweise an, insbesondere innerhalb von, dem Schwertelement 114b angeordnet ist. Vorzugsweise weist die zumindest eine Antenne 24b einen linearen Verlauf auf.

Figur 5 zeigt ein Schaltdiagramm eines Teils der Sensoreinheit 14b. Die Sensoreinheit 14b umfasst vorzugsweise zumindest eine elektrische oder elektronische Abschirmschaltung 154b, die dazu eingerichtet ist, ein von der Antenne 24b ausgestrahltes elektrisches und/oder magnetisches Feld von zumindest einer Ausstrahlungsrichtung abzuschirmen. Mittels der Abschirmschaltung 154b ist insbesondere eine Ausstrahlungsrichtung der Antenne 24b einstellbar. Die Abschirmschaltung 154b ist vorzugsweise als eine hochohmige Schaltung ausgebildet. Die Abschirmschaltung 154b umfasst bevorzugt zumindest ein hochohmiges elektrisches Bauelement. Insbesondere sind/ist die Antenne 24b und/oder zumindest ein Abstimmkreis 158b der Sensoreinheit 14b an einem Eingang der Abschirmschaltung 154b angeschlossen. Vorzugsweise ist zumindest ein Ausgang der Abschirmschaltung 154b mit einer Erdung 156b verbunden. Bevorzugt weist die Abschirmschaltung 154b am Eingang der Abschirmschaltung 154b eine höhere Impedanz auf als am Ausgang der Abschirmschaltung 154b. Beispielsweise liegt eine Größenordnung der Impedanz am Eingang der Abschirmschaltung 154b bei 100 MΩ und eine Größenordnung der Impedanz am Ausgang der Abschirmschaltung 154b bei 10 MΩ oder kleiner. Es ist jedoch grundsätzlich auch denkbar, dass die Größenordnungen am Eingang und Ausgang verschieden sind von den oben genannten Werten.

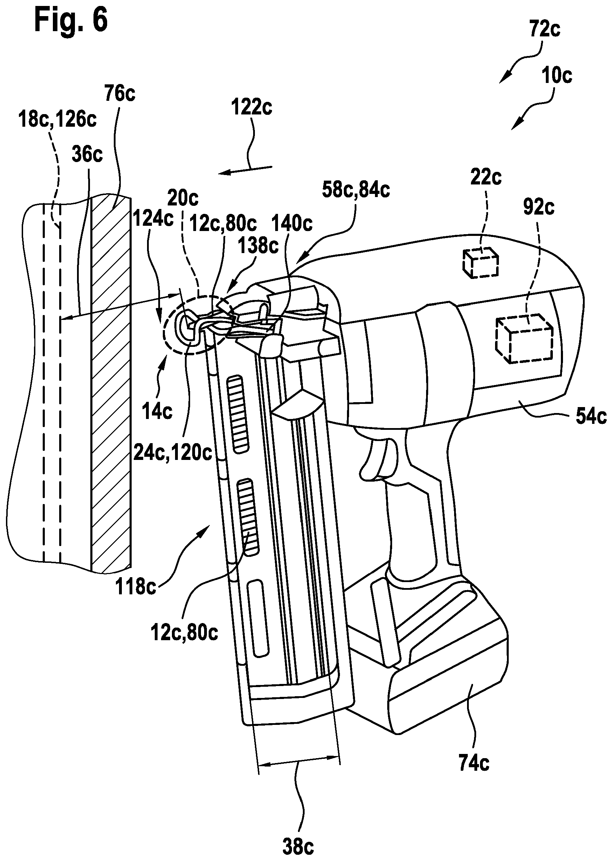

Figur 6 zeigt eine zweite alternative Werkzeugmaschine 72c in einer schematischen perspektivischen Darstellung. Die Werkzeugmaschine 72c ist insbesondere als eine Nagelpistole ausgebildet. Die Werkzeugmaschine 72c umfasst insbesondere eine Werkzeugmaschinenvorrichtung 10c. Vorzugsweise ist die Werkzeugmaschinenvorrichtung 10c zu einer nagelnden Bearbeitung eines Werkstücks 76c vorgesehen. Vorzugsweise umfasst die Werkzeugmaschinenvorrichtung 10c zumindest ein motorisch antreibbares Bearbeitungswerkzeug 12c, insbesondere eine Mehrzahl von Bearbeitungswerkzeugen 12c. Insbesondere sind die Bearbeitungswerkzeuge 12c als Nägel 80c ausgebildet. Vorzugsweise umfasst die Werkzeugmaschinenvorrichtung 10c zumindest eine, insbesondere kapazitive, Sensoreinheit 14c, die dazu eingerichtet ist, zumindest einen Fremdkörper 18c in zumindest einem Detektionsbereich 20c um das, insbesondere momentan auszugebende, Bearbeitungswerkzeug 12c zu erfassen, und zumindest eine Steuer- und/oder Regeleinheit 22c, die dazu eingerichtet ist, in Abhängigkeit von zumindest einem Signal der Sensoreinheit 14c zumindest eine Aktion auszulösen. Bevorzugt umfasst die Sensoreinheit 14c zumindest eine Antenne 24c, die dazu eingerichtet ist, zumindest ein elektrisches und/oder magnetisches Feld auszustrahlen, das den zumindest einen Detektionsbereich 20c definiert, und/oder den zumindest einen Fremdkörper 18c in Abhängigkeit von zumindest einer Änderung zumindest eines elektrischen und/oder magnetischen Felds zu erfassen.

Bevorzugt ist die Steuer- und/oder Regeleinheit 22c dazu eingerichtet, die zumindest eine Aktion in Abhängigkeit von zumindest einem Parameter, insbesondere in Abhängigkeit von zumindest einer Abmessung 38c, des Bearbeitungswerkzeugs 12c, insbesondere der Mehrzahl von Bearbeitungswerkzeugen 12c, auszulösen. Vorzugsweise ist die Abmessung 38c der Bearbeitungswerkzeuge 12c als eine maximale Haupterstreckung der Bearbeitungswerkzeuge 12c ausgebildet.

Insbesondere kann die Steuer- und/oder Regeleinheit 22c dazu eingerichtet sein, die zumindest eine Aktion in Abhängigkeit von dem zumindest einen Parameter, insbesondere in Abhängigkeit von der zumindest einen Abmessung 38c, der Bearbeitungswerkzeuge 12c zu unterbinden. Vorzugsweise ist die Steuer- und/oder Regeleinheit 22c dazu eingerichtet, die zumindest eine Aktion in Abhängigkeit von der zumindest einen Abmessung 38c, insbesondere in Abhängigkeit von der maximalen Haupterstreckung, der als Nägel 80c ausgebildeten Bearbeitungswerkzeuge 12c auszulösen. Insbesondere ist die Steuer- und/oder Regeleinheit 22c dazu eingerichtet, die in Abhängigkeit von der zumindest einen Abmessung 38c, insbesondere in Abhängigkeit von der maximalen Haupterstreckung, der als Nägel 80c ausgebildeten Bearbeitungswerkzeuge 12c zumindest eine Ausgabeeinheit 58c der Werkzeugmaschinenvorrichtung 10c, die zu einer Ausgabe der als Nägel 80c ausgebildeten Bearbeitungswerkzeuge 12c vorgesehen ist, anzusteuern. Insbesondere ist denkbar, dass die Steuer- und/oder Regeleinheit 22c dazu eingerichtet ist, in Abhängigkeit von der Abmessung 38c, insbesondere von der maximalen Haupterstreckung, der als Nägel 80c ausgebildeten Bearbeitungswerkzeuge 12c kleiner als ein ermittelter Abstand 36c zwischen dem erfassten Fremdkörper 18c und den Bearbeitungswerkzeugen 12c, insbesondere dem momentan auszugebenden Bearbeitungswerkzeug 12c, eine Ausgabe der als Nägel 80c ausgebildeten Bearbeitungswerkzeuge 12c auszulösen. Insbesondere ist denkbar, dass die Steuer- und/oder Regeleinheit 22c dazu eingerichtet ist, in Abhängigkeit von der Abmessung 38c, insbesondere von der maximalen Haupterstreckung, der als Nägel 80c ausgebildeten Bearbeitungswerkzeuge 12c größer als der ermittelte Abstand 36c zwischen dem erfassten Fremdkörper 18c und den Bearbeitungswerkzeugen 12c, insbesondere dem momentan auszugebenden Bearbeitungswerkzeug 12c, eine Ausgabe der als Nägel 80c ausgebildeten Bearbeitungswerkzeuge 12c zu unterbinden.

Vorzugsweise ist die Steuer- und/oder Regeleinheit 22c dazu eingerichtet, die zumindest eine Aktion in Abhängigkeit von zumindest einem weiteren Parameter, beispielhaft einer Ausgabeenergie der Ausgabeeinheit 58c, einer Materialhärte des Werkstücks 76c, einer Stärke des Werkstücks 76c o. dgl., auszulösen. Alternativ oder zusätzlich zu einer Ausbildung als eine Abmessung 38c der Bearbeitungswerkzeuge 12c kann der zumindest eine Parameter der Bearbeitungswerkzeuge 12c, insbesondere der zumindest eine Parameter von verschieden von Nägeln 80c ausgebildeten Bearbeitungswerkzeugen 12c, auch als eine Tauchtiefe der Bearbeitungswerkzeuge 12c in dem Werkstück 76c, als eine Trägheitskenngröße der Bearbeitungswerkzeuge 12c, als eine Drehzahl der Bearbeitungswerkzeuge 12c oder als ein anderer, einem Fachmann als sinnvoll erscheinender Parameter ausgebildet sein.

Bevorzugt umfasst die Werkzeugmaschinenvorrichtung 10c zumindest eine, insbesondere die vorgenannte, Ausgabeeinheit 58c zu einer Ausgabe des zumindest einen Bearbeitungswerkzeugs 12c, wobei die Steuer- und/oder Regeleinheit 22c dazu eingerichtet ist, in Abhängigkeit von dem zumindest einen Signal der Sensoreinheit 14c die Ausgabeeinheit 58c zu einer Unterbindung oder zu einer Freigabe der Ausgabe des zumindest einen Bearbeitungswerkzeugs 12c anzusteuern. Vorzugsweise ist die Ausgabeeinheit 58c zu einer Ausgabe der als Nägel 80c ausgebildeten Bearbeitungswerkzeuge 12c vorgesehen. Insbesondere ist die Ausgabeeinheit 58c dazu vorgesehen, die Bearbeitungswerkzeuge 12c zu verschießen. Insbesondere ist die Ausgabeeinheit 58c dazu vorgesehen, eine Mehrzahl von Bearbeitungswerkzeugen 12c nacheinander auszugeben, insbesondere zu verschießen. Insbesondere umfasst die als eine Nagelpistole ausgebildete Werkzeugmaschine 72c die Werkzeugmaschinenvorrichtung 10c, die die Ausgabeeinheit 58c umfasst. Insbesondere kann die Werkzeugmaschinenvorrichtung 10c zumindest eine Magazineinheit 118c umfassen, die zu einer Aufnahme von einer Mehrzahl von Bearbeitungswerkzeugen 12c und/oder zu einer Zuführung der Mehrzahl von Bearbeitungswerkzeugen 12c zu der Ausgabeeinheit 58c vorgesehen ist. Vorzugsweise umfasst die Ausgabeeinheit 58c zumindest einen Freigabebügel 120c, der zu einer Freigabe einer Ausgabe der Bearbeitungswerkzeuge 12c, insbesondere zusätzlich zu einer Ansteuerung durch die Steuer- und/oder Regeleinheit 22c, betätigbar, insbesondere drückbar ist, insbesondere entgegen einer Ausgaberichtung 122c der Ausgabeeinheit 58c. Vorzugsweise bildet der Freigabebügel 120c die Antenne 24c der Sensoreinheit 14c. Alternativ oder zusätzlich ist vorstellbar, dass die Antenne 24c an dem Freigabebügel 120c, an einem Bearbeitungswerkzeugauslass 138c und/oder an einer Bearbeitungswerkzeugführung 140c der Ausgabeeinheit 58c angeordnet ist.

Vorzugsweise ist die Steuer- und/oder Regeleinheit 22c dazu eingerichtet, in Abhängigkeit von zumindest einem Signal der Sensoreinheit 14c entsprechend einer Erfassung von dem zumindest einen Fremdkörper 18c in dem Detektionsbereich 20c, insbesondere in einem Ausgabebereich 124c der Ausgabeeinheit 58c, die Ausgabeeinheit 58c zu einer Unterbindung der Ausgabe der Bearbeitungswerkzeuge 12c anzusteuern. Im vorliegenden Ausführungsbeispiel ist der, insbesondere als eine Stromleitung 126c ausgebildete, Fremdkörper 18c in dem Ausgabebereich 124c der Ausgabeeinheit 58c, insbesondere in einem Nahbereich des, insbesondere als eine Wandverkleidung ausgebildeten, Werkstücks 76c angeordnet. Insbesondere ist denkbar, dass die Steuer- und/oder Regeleinheit 22c zusätzlich dazu eingerichtet ist, in Abhängigkeit von dem Signal der Sensoreinheit 14c entsprechend der Erfassung des Fremdkörpers 18c in dem Detektionsbereich 20c, insbesondere in dem Ausgabebereich 124c der Ausgabeeinheit 58c, eine Ausgabe eines Warnsignals auszulösen. Vorzugsweise ist die Steuer- und/oder Regeleinheit 22c dazu eingerichtet, in Abhängigkeit von zumindest einem Signal der Sensoreinheit 14c entsprechend einer fehlenden Erfassung eines Fremdkörpers 18c in dem Detektionsbereich 20c, insbesondere in dem Ausgabebereich 124c der Ausgabeeinheit 58c, die Ausgabeeinheit 58c zu einer Freigabe der Bearbeitungswerkzeuge 12c anzusteuern. Insbesondere kann die Steuer- und/oder Regeleinheit 22c dazu eingerichtet sein, eine ermittelte Position des erfassten Fremdkörpers 18c mit dem Ausgabebereich 124c der Ausgabeeinheit 58c zu vergleichen und insbesondere in Abhängigkeit von dem Vergleich die Ausgabeeinheit 58c anzusteuern. Insbesondere kann die Steuer- und/oder Regeleinheit 22c dazu eingerichtet sein, in Abhängigkeit von zumindest einem Signal der Sensoreinheit 14c entsprechend einer Erfassung von zumindest einem Fremdkörper 18c in dem Detektionsbereich 20c und in Abhängigkeit von einer ermittelten Position des Fremdkörpers 18c außerhalb des Ausgabebereichs 124c der Ausgabeeinheit 58c die Ausgabeeinheit 58c zu einer Freigabe der Bearbeitungswerkzeuge 12c anzusteuern.

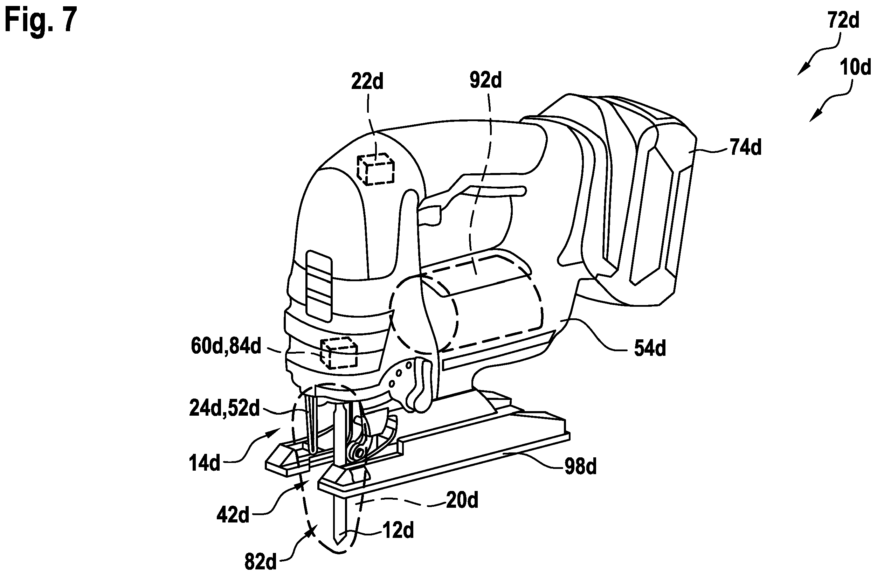

Figur 7 zeigt eine dritte alternative Werkzeugmaschine 72d in einer schematischen perspektivischen Darstellung. Die Werkzeugmaschine 72d ist insbesondere als eine Stichsäge ausgebildet. Die Werkzeugmaschine 72d umfasst insbesondere eine Werkzeugmaschinenvorrichtung 10d. Vorzugsweise ist die Werkzeugmaschinenvorrichtung 10d zu einer schneidenden und/oder sägenden Bearbeitung eines Werkstücks vorgesehen. Vorzugsweise umfasst die Werkzeugmaschinenvorrichtung 10d zumindest ein motorisch antreibbares Bearbeitungswerkzeug 12d. Insbesondere ist das Bearbeitungswerkzeug 12d als ein Sägeblatt, insbesondere als ein Stichsägeblatt, ausgebildet. Vorzugsweise umfasst die Werkzeugmaschinenvorrichtung 10d zumindest eine, insbesondere kapazitive, Sensoreinheit 14d, die dazu eingerichtet ist, zumindest einen Fremdkörper in zumindest einem Detektionsbereich 20d um das Bearbeitungswerkzeug 12d zu erfassen, und zumindest eine Steuer- und/oder Regeleinheit 22d, die dazu eingerichtet ist, in Abhängigkeit von zumindest einem Signal der Sensoreinheit 14d zumindest eine Aktion auszulösen. Bevorzugt umfasst die Sensoreinheit 14d zumindest eine Antenne 24d, die dazu eingerichtet ist, zumindest ein elektrisches und/oder magnetisches Feld auszustrahlen, das den zumindest einen Detektionsbereich 20d definiert, und/oder den zumindest einen Fremdkörper in Abhängigkeit von zumindest einer Änderung zumindest eines elektrischen und/oder magnetischen Felds zu erfassen. Vorzugsweise ist die Steuer- und/oder Regeleinheit 22d dazu eingerichtet, in Abhängigkeit von dem zumindest einen Signal der Sensoreinheit 14d entsprechend einer Erfassung eines Fremdkörpers in dem Detektionsbereich 20d zumindest eine Bremsung des Bearbeitungswerkzeugs 12d auszulösen, insbesondere durch eine Ansteuerung einer mechanischen Bremseinheit 60d der Werkzeugmaschinenvorrichtung 10d.

Bevorzugt ist die zumindest eine Antenne 24d in zumindest ein mechanisches Schutzelement 52d in einem Nahbereich 42d des Bearbeitungswerkzeugs 12d integriert und/oder ist die zumindest eine Antenne 24d dazu eingerichtet, das mechanische Schutzelement 52d zu ersetzen. Vorzugsweise weist die Werkzeugmaschinenvorrichtung 10d das mechanische Schutzelement 52d zu einem Schutz des Bearbeitungswerkzeugs 12d, insbesondere vor Fremdkörpern, und/oder zu einem Schutz von Fremdkörpern, insbesondere Körperteilen eines Bedieners, vor dem Bearbeitungswerkzeug 12d auf. Das mechanische Schutzelement 52d ist insbesondere in dem Nahbereich 42d des Bearbeitungswerkzeugs 12d angeordnet. Vorzugsweise deckt das mechanische Schutzelement 52d das Bearbeitungswerkzeug 12d zumindest abschnittsweise ab, umschließt das Bearbeitungswerkzeug 12d insbesondere zumindest abschnittsweise. Vorzugsweise ist das mechanische Schutzelement 52d als ein Schutzbügel, wie beispielhaft im vorliegenden Ausführungsbeispiel, als eine Schutzhaube oder als ein anderes, einem Fachmann als sinnvoll erscheinendes mechanisches Schutzelement ausgebildet. Insbesondere kann das mechanische Schutzelement 52d die zumindest eine Antenne 24d zumindest abschnittsweise ausbilden, insbesondere aus einem Metall ausgebildet sein, und/oder kann die zumindest eine Antenne 24d zumindest abschnittsweise an, insbesondere innerhalb von, dem mechanischen Schutzelement 52d angeordnet sein. Im vorliegenden Ausführungsbeispiel bildet das mechanische Schutzelement 52d die Antenne 24d beispielhaft aus. Alternativ ist denkbar, dass die Antenne 24d an, insbesondere innerhalb von, einem Führungselement 98d der Werkzeugmaschinenvorrichtung 10d, insbesondere einem Gleitschuh, und/oder dem Bearbeitungswerkzeug 12d angeordnet ist und/oder von dem Bearbeitungswerkzeug 12d gebildet ist. Weiterhin alternativ ist vorstellbar, dass die zumindest eine Antenne 24d dazu eingerichtet ist, das mechanische Schutzelement 52d, insbesondere eine Schutzfunktion des mechanischen Schutzelements 52d, zu ersetzen. Insbesondere ist die zumindest eine Antenne 24d dazu eingerichtet, eine virtuelle Abschirmung des Bearbeitungswerkzeugs 12d, insbesondere in Form des Detektionsbereichs 20d, bereitzustellen. Insbesondere ist alternativ zu einem mechanischen Schutz durch das mechanische Schutzelement 52d zu einer Verringerung einer Verletzungsgefahr durch das Bearbeitungswerkzeug 12d und/oder einer Beschädigungsgefahr des Bearbeitungswerkzeugs 12d in Abhängigkeit von einer Erfassung des Fremdkörpers durch die zumindest eine Antenne 24d die zumindest eine Aktion, insbesondere eine Bremsung des Bearbeitungswerkzeugs 12d, ein Wegbewegen des Bearbeitungswerkzeugs 12d aus einem Gefahrenbereich 82d, ein mechanisches Abschirmen des Bearbeitungswerkzeugs 12d o. dgl., auslösbar. Insbesondere kann die Werkzeugmaschinenvorrichtung 10d in einer alternativen Ausgestaltungsform frei von dem mechanischen Schutzelement 52d ausgebildet sein.

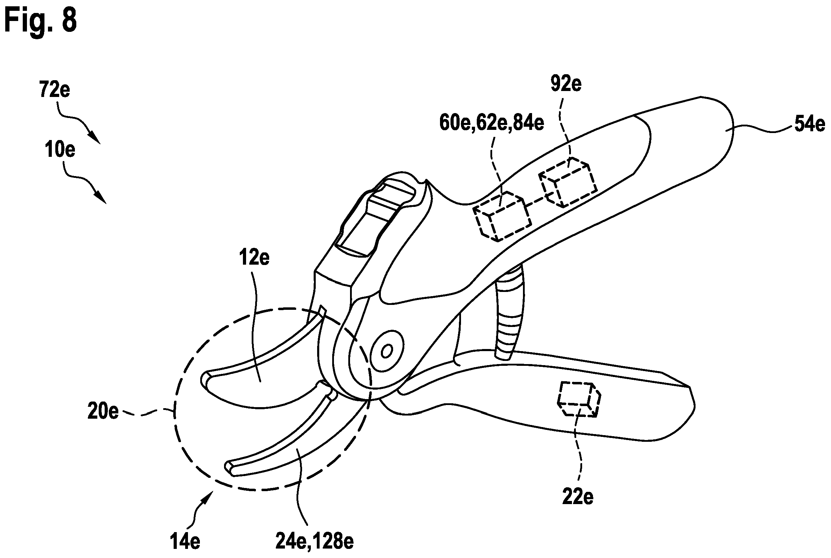

Figur 8 zeigt eine vierte alternative Werkzeugmaschine 72e in einer schematischen perspektivischen Darstellung. Die Werkzeugmaschine 72e ist insbesondere als eine Gartenschere ausgebildet. Die Werkzeugmaschine 72e umfasst insbesondere eine Werkzeugmaschinenvorrichtung 10e. Vorzugsweise ist die Werkzeugmaschinenvorrichtung 10e zu einer schneidenden Bearbeitung eines Werkstücks vorgesehen. Vorzugsweise umfasst die Werkzeugmaschinenvorrichtung 10e zumindest ein motorisch antreibbares Bearbeitungswerkzeug 12e. Insbesondere umfasst die Werkzeugmaschinenvorrichtung 10e ein weiteres, insbesondere feststehendes, Bearbeitungswerkzeug 128e, das dazu vorgesehen ist, mit dem motorisch antreibbaren Bearbeitungswerkzeug 12e zusammenzuwirken. Insbesondere sind die Bearbeitungswerkzeuge 12e, 128e als Klingen ausgebildet. Vorzugsweise umfasst die Werkzeugmaschinenvorrichtung 10e zumindest eine, insbesondere kapazitive, Sensoreinheit 14e, die dazu eingerichtet ist, zumindest einen Fremdkörper in zumindest einem Detektionsbereich 20e um die Bearbeitungswerkzeuge 12e, 128e zu erfassen, und zumindest eine Steuer- und/oder Regeleinheit 22e, die dazu eingerichtet ist, in Abhängigkeit von zumindest einem Signal der Sensoreinheit 14e zumindest eine Aktion auszulösen. Bevorzugt umfasst die Sensoreinheit 14e zumindest eine Antenne 24e, die dazu eingerichtet ist, zumindest ein elektrisches und/oder magnetisches Feld auszustrahlen, das den zumindest einen Detektionsbereich 20e definiert, und/oder den zumindest einen Fremdkörper in Abhängigkeit von zumindest einer Änderung zumindest eines elektrischen und/oder magnetischen Felds zu erfassen. Insbesondere bildet das weitere Bearbeitungswerkzeug 128e die Antenne 24e. Alternativ oder zusätzlich ist denkbar, dass das Bearbeitungswerkzeug 12e die Antenne 24e bildet und/oder dass die Antenne 24e an, insbesondere innerhalb von, dem Bearbeitungswerkzeug 12e und/oder dem weiteren Bearbeitungswerkzeug 128e angeordnet ist.

Bevorzugt umfasst die Werkzeugmaschinenvorrichtung 10e zumindest eine von der Steuer- und/oder Regeleinheit 22e ansteuerbare mechanische Bremseinheit 60e, die dazu vorgesehen ist, das Bearbeitungswerkzeug 12e abzubremsen und die zumindest teilweise von zumindest einem selbsthemmenden Getriebe 62e, insbesondere von einem Schneckengetriebe, ausgebildet ist. Vorzugsweise ist die mechanische Bremseinheit 60e dazu vorgesehen, das zumindest eine, insbesondere sich bewegende, Bearbeitungswerkzeug 12e mechanisch abzubremsen, insbesondere bis zu einem Stillstand des Bearbeitungswerkzeugs 12e. Insbesondere kann die mechanische Bremseinheit 60e, insbesondere zusätzlich zu einer zumindest teilweisen Ausbildung durch das selbsthemmende Getriebe 62e, zumindest ein mechanisches Bremselement, insbesondere eine Bremsbacke, eine Schlingfeder, einen Blockierbolzen o. dgl., umfassen, das zu einer Realisierung einer aktiven Bremsung des Bearbeitungswerkzeugs 12e kraft- und/oder formschlüssig mit dem Bearbeitungswerkzeug 12e und/oder mit einer Abtriebswelle koppelbar ist (hier nicht dargestellt). Vorzugsweise ist die mechanische Bremseinheit 60e dazu vorgesehen, das Bearbeitungswerkzeug 12e spätestens 200 Millisekunden nach einer Auslösung der mechanischen Bremsung bis auf einen Stillstand des Bearbeitungswerkzeugs 12e abzubremsen.

Vorzugsweise umfasst die als eine Gartenschere ausgebildete Werkzeugmaschine 72e die Werkzeugmaschinenvorrichtung 10e, die die mechanische Bremseinheit 60e umfasst, die zumindest teilweise von dem zumindest einen selbsthemmenden Getriebe 62e, insbesondere von dem Schneckengetriebe, ausgebildet ist. Vorzugsweise ist das Getriebe 62e dazu vorgesehen, eine Bewegung eines Motors 92e der Werkzeugmaschinenvorrichtung 10e zu einem Antrieb des zumindest einen Bearbeitungswerkzeugs 12e zu übersetzen. Vorzugsweise sind das Getriebe 62e und der Motor 92e zu einer motorischen Unterstützung einer manuellen Betätigung des zumindest einen Bearbeitungswerkzeugs 12e, insbesondere einer Schneidbewegung der Gartenschere, vorgesehen. Vorzugsweise weist das Getriebe 62e ein Übersetzungsverhältnis, insbesondere von einer Drehzahl des Motors 92e zu einer Drehzahl des Bearbeitungswerkzeugs 12e, von zumindest 1:50, bevorzugt von zumindest 1:75 und besonders bevorzugt von zumindest 1:100 auf. Vorzugsweise ist das Getriebe 62e über eine Antriebswelle des Motors 92e antreibbar. Vorzugsweise ist das Getriebe 62e nicht über die Abtriebswelle, an der das Bearbeitungswerkzeug 12e gelagert ist, antreibbar. Bevorzugt ist das Getriebe 62e als ein dynamisch selbsthemmendes Getriebe ausgebildet. Insbesondere ist das Getriebe 62e als ein Schneckengetriebe ausgebildet, das einen maximalen Wirkungsgrad kleiner als 0,5 aufweist. Vorzugsweise ist das Getriebe 62e dazu vorgesehen, in Abhängigkeit von einem Stoppen des Motors 92e eine Bewegung des zumindest einen Bearbeitungswerkzeugs 12e zu stoppen. Insbesondere ist die Steuer- und/oder Regeleinheit 22e dazu eingerichtet, in Abhängigkeit von zumindest einem Signal der Sensoreinheit 14e eine Motorbremsung des Motors 92e durchzuführen und/oder auszulösen. Insbesondere ist die Steuer- und/oder Regeleinheit 22e dazu eingerichtet, den das Bearbeitungswerkzeug 12e antreibenden Motor 92e, insbesondere Elektromotor, zu einer Realisierung einer Motorbremsung abzuschalten, kurzzuschließen, umzupolen o. dgl.

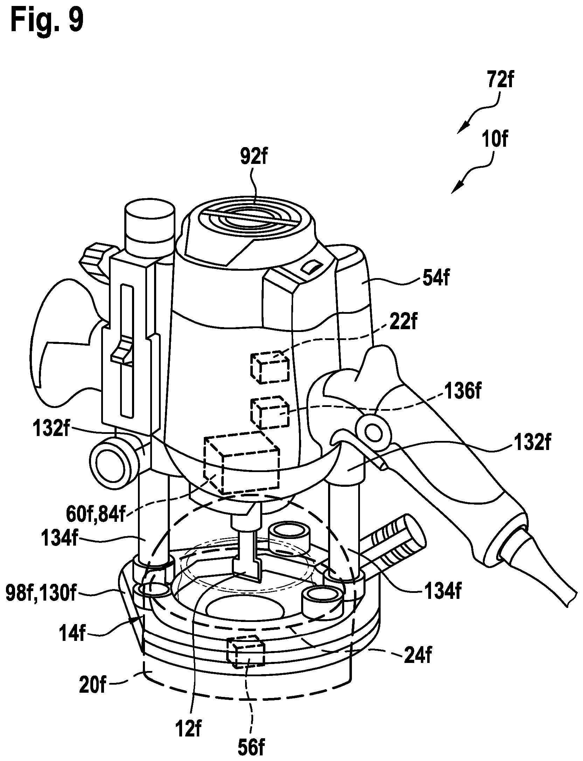

Figur 9 zeigt eine fünfte alternative Werkzeugmaschine 72f in einer schematischen perspektivischen Darstellung. Die Werkzeugmaschine 72f ist insbesondere als eine Fräse, insbesondere als eine Oberfräse, ausgebildet. Die Werkzeugmaschine 72f umfasst insbesondere eine Werkzeugmaschinenvorrichtung 10f. Vorzugsweise ist die Werkzeugmaschinenvorrichtung 10f zu einer fräsenden Bearbeitung eines Werkstücks vorgesehen. Vorzugsweise umfasst die Werkzeugmaschinenvorrichtung 10f zumindest ein motorisch antreibbares Bearbeitungswerkzeug 12f, insbesondere ein Fräswerkzeug. Vorzugsweise umfasst die Werkzeugmaschinenvorrichtung 10f zumindest eine, insbesondere kapazitive, Sensoreinheit 14f, die dazu eingerichtet ist, zumindest einen Fremdkörper in zumindest einem Detektionsbereich 20f um das Bearbeitungswerkzeug 12f zu erfassen, und zumindest eine Steuer- und/oder Regeleinheit 22f, die dazu eingerichtet ist, in Abhängigkeit von zumindest einem Signal der Sensoreinheit 14f zumindest eine Aktion auszulösen. Bevorzugt umfasst die Sensoreinheit 14f zumindest eine Antenne 24f, die dazu eingerichtet ist, zumindest ein elektrisches und/oder magnetisches Feld auszustrahlen, das den zumindest einen Detektionsbereich 20f definiert, und/oder den zumindest einen Fremdkörper in Abhängigkeit von zumindest einer Änderung zumindest eines elektrischen und/oder magnetischen Felds zu erfassen.

Vorzugsweise ist die Steuer- und/oder Regeleinheit 22f dazu eingerichtet, in Abhängigkeit von dem zumindest einen Signal der Sensoreinheit 14f entsprechend einer Erfassung eines Fremdkörpers in dem Detektionsbereich 20f zumindest eine Bremsung des Bearbeitungswerkzeugs 12f auszulösen, insbesondere durch eine Ansteuerung einer mechanischen Bremseinheit 60f der Werkzeugmaschinenvorrichtung 10f. Alternativ oder zusätzlich ist vorstellbar, dass die Werkzeugmaschinenvorrichtung 10f zumindest eine Schutzeinheit und/oder eine Einzugseinheit aufweist, die von der Steuer- und/oder Regeleinheit 22f in Abhängigkeit von dem zumindest einen Signal der Sensoreinheit 14f ansteuerbar sind/ist.

Bevorzugt umfasst die Werkzeugmaschinenvorrichtung 10f zumindest ein Gehäuse 54f, von dem die Sensoreinheit 14f entkoppelbar ist, wobei die Sensoreinheit 14f zumindest eine, insbesondere drahtlose, Kommunikationseinheit 56f zu einer Bereitstellung des zumindest einen Signals an die Steuer- und/oder Regeleinheit 22f aufweist. Insbesondere kann die Werkzeugmaschinenvorrichtung 10f in einem von der Sensoreinheit 14f entkoppelten Zustand, insbesondere in einem Zustand frei von einer signalübertragungstechnischen Verbindung zwischen der Sensoreinheit 14f und der Steuer- und/oder Regeleinheit 22f, betreibbar sein, insbesondere frei von auf der Sensoreinheit 14f basierenden Sicherheitsfunktionen und Komfortfunktionen. Vorzugsweise ist die Sensoreinheit 14f mit verschiedenen Werkzeugmaschinenvorrichtungen 10f verwendbar, insbesondere koppelbar. Vorzugsweise können das Gehäuse 54f der Werkzeugmaschinenvorrichtung 10f und die Sensoreinheit 14f, insbesondere ein Gehäuse 130f der Sensoreinheit 14f, Kopplungsschnittstellen 132f, 134f, beispielsweise Bajonettanschlüsse, Rastelemente, Steckverbinder o. dgl., zu einer mechanischen, insbesondere zu einer mechanischen und elektrischen, Kopplung aufweisen. Das Gehäuse 130f der Sensoreinheit 14f bildet insbesondere ein Führungselement 98f, insbesondere einen Gleitschuh. Insbesondere ist die Antenne 24f an, insbesondere innerhalb von, dem Gehäuse 130f der Sensoreinheit 14f angeordnet. Im vorliegenden Ausführungsbeispiel weisen beispielhaft das Gehäuse 54f der Werkzeugmaschinenvorrichtung 10f und die Sensoreinheit 14f, insbesondere das Gehäuse 130f der Sensoreinheit 14f, mechanische Kopplungsschnittstellen 132f, 134f auf. Insbesondere weist die Sensoreinheit 14f, insbesondere das Gehäuse 130f der Sensoreinheit 14f, zwei als Kopplungsstangen ausgebildete Kopplungsschnittstellen 134f auf. Insbesondere weist das Gehäuse 54f der Werkzeugmaschinenvorrichtung 10f zwei als Kopplungsaufnahmen ausgebildete Kopplungsschnittstellen 132f zu einer Aufnahme der Kopplungsschnittstellen 134f der Sensoreinheit 14f auf. Insbesondere kann in einer alternativen Ausgestaltungsform eine elektrische Kopplungsschnittstelle zumindest teilweise die Kommunikationseinheit 56f der Sensoreinheit 14f und/oder eine Kommunikationseinheit 136f der Werkzeugmaschinenvorrichtung 10f ausbilden. Insbesondere ist die Kommunikationseinheit 56f der Sensoreinheit 14f dazu eingerichtet, das zumindest eine Signal über die Kommunikationseinheit 136f der Werkzeugmaschinenvorrichtung 10f an die Steuer- und/oder Regeleinheit 22f zu übertragen. Die als eine drahtlose Kommunikationseinheit ausgebildete Kommunikationseinheit 56f, 136f der Sensoreinheit 14f und/oder der Werkzeugmaschinenvorrichtung 10f kann insbesondere als ein WLAN-Modul, als ein Funkmodul, als ein Bluetooth-Modul, als ein NFC-Modul o. dgl. ausgebildet sein. Eine in einer alternativen Ausgestaltungsform als eine kabelgebundene Kommunikationseinheit ausgebildete Kommunikationseinheit 56f, 136f der Sensoreinheit 14f und/oder der Werkzeugmaschinenvorrichtung 10f kann alternativ oder zusätzlich zu der Ausbildung durch die zumindest eine Kopplungsschnittstelle 132f, 134f insbesondere als ein USB-Anschluss, als ein Ethernet-Anschluss, als ein Koaxialanschluss o. dgl. ausgebildet sein.

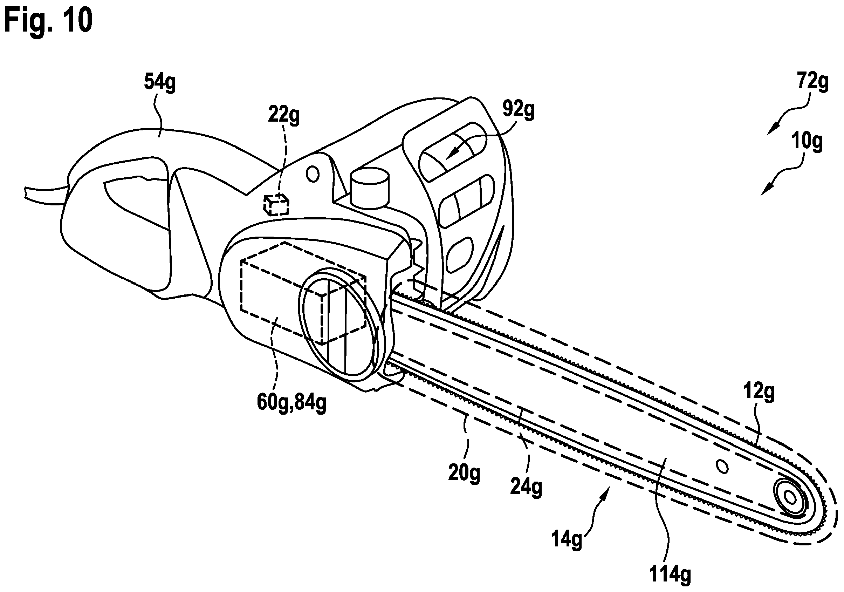

Figur 10 zeigt eine sechste alternative Werkzeugmaschine 72g in einer schematischen perspektivischen Darstellung. Die Werkzeugmaschine 72g ist insbesondere als eine Säge, insbesondere als eine Kettensäge, ausgebildet. Die Werkzeugmaschine 72g umfasst insbesondere eine Werkzeugmaschinenvorrichtung 10g. Vorzugsweise ist die Werkzeugmaschinenvorrichtung 10g zu einer schneidenden und/oder sägenden Bearbeitung eines Werkstücks vorgesehen. Vorzugsweise umfasst die Werkzeugmaschinenvorrichtung 10g zumindest ein motorisch antreibbares Bearbeitungswerkzeug 12g, insbesondere eine Sägekette. Insbesondere ist das Bearbeitungswerkzeug 12g an einem Schwertelement 114g der Werkzeugmaschinenvorrichtung 10g gelagert. Vorzugsweise umfasst die Werkzeugmaschinenvorrichtung 10g zumindest eine, insbesondere kapazitive, Sensoreinheit 14g, die dazu eingerichtet ist, zumindest einen Fremdkörper in zumindest einem Detektionsbereich 20g um das Bearbeitungswerkzeug 12g zu erfassen, und zumindest eine Steuer- und/oder Regeleinheit 22g, die dazu eingerichtet ist, in Abhängigkeit von zumindest einem Signal der Sensoreinheit 14g zumindest eine Aktion auszulösen. Bevorzugt umfasst die Sensoreinheit 14g zumindest eine Antenne 24g, die dazu eingerichtet ist, zumindest ein elektrisches und/oder magnetisches Feld auszustrahlen, das den zumindest einen Detektionsbereich 20g definiert, und/oder den zumindest einen Fremdkörper in Abhängigkeit von zumindest einer Änderung zumindest eines elektrischen und/oder magnetischen Felds zu erfassen. Die Antenne 24g ist insbesondere an, insbesondere innerhalb von, dem Schwertelement 114g angeordnet. Insbesondere weist die Antenne 24g einen nicht-linearen Verlauf auf. Vorzugsweise ist die Antenne 24g parallel zu dem Bearbeitungswerkzeug 12g angeordnet. Alternativ oder zusätzlich ist vorstellbar, dass das Schwertelement 114g und/oder das Bearbeitungswerkzeug 12g die Antenne 24g bilden und/oder dass die Antenne 24g an, insbesondere innerhalb von, dem Bearbeitungswerkzeug 12g angeordnet ist. Vorzugsweise ist die Steuer- und/oder Regeleinheit 22g dazu eingerichtet, in Abhängigkeit von dem zumindest einen Signal der Sensoreinheit 14g entsprechend einer Erfassung eines Fremdkörpers in dem Detektionsbereich 20g zumindest eine Bremsung des Bearbeitungswerkzeugs 12g auszulösen, insbesondere durch eine Ansteuerung einer mechanischen Bremseinheit 60g der Werkzeugmaschinenvorrichtung 10g. Vorzugsweise ist die mechanische Bremseinheit 60g als eine Bandbremse ausgebildet und/oder zusätzlich zu einer Bandbremse vorgesehen. Alternativ oder zusätzlich ist vorstellbar, dass die Steuer- und/oder Regeleinheit 22g dazu eingerichtet ist, in Abhängigkeit von dem zumindest einen Signal der Sensoreinheit 14g entsprechend einer Erfassung eines Fremdkörpers in dem Detektionsbereich 20g eine Beförderung eines Rückschlagbügels der Werkzeugmaschinenvorrichtung 10g in Richtung des Bearbeitungswerkzeugs 12g auszulösen.

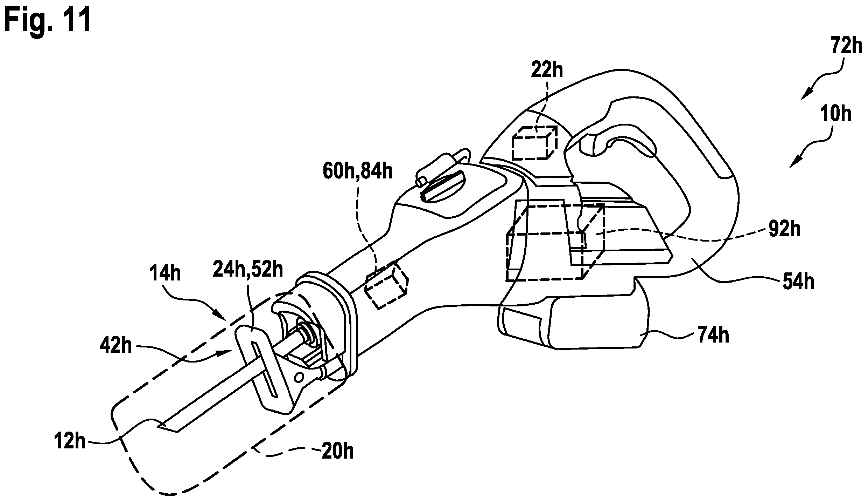

Figur 11 zeigt eine siebte alternative Werkzeugmaschine 72h in einer schematischen perspektivischen Darstellung. Die Werkzeugmaschine 72h ist insbesondere als eine Säge, insbesondere als eine Säbelsäge, ausgebildet. Die Werkzeugmaschine 72h umfasst insbesondere eine Werkzeugmaschinenvorrichtung 10h. Vorzugsweise ist die Werkzeugmaschinenvorrichtung 10h zu einer schneidenden und/oder sägenden Bearbeitung eines Werkstücks vorgesehen. Vorzugsweise umfasst die Werkzeugmaschinenvorrichtung 10h zumindest ein motorisch antreibbares Bearbeitungswerkzeug 12h, insbesondere ein Sägeblatt. Vorzugsweise umfasst die Werkzeugmaschinenvorrichtung 10h zumindest eine, insbesondere kapazitive, Sensoreinheit 14h, die dazu eingerichtet ist, zumindest einen Fremdkörper in zumindest einem Detektionsbereich 20h um das Bearbeitungswerkzeug 12h zu erfassen, und zumindest eine Steuer- und/oder Regeleinheit 22h, die dazu eingerichtet ist, in Abhängigkeit von zumindest einem Signal der Sensoreinheit 14h zumindest eine Aktion auszulösen. Bevorzugt umfasst die Sensoreinheit 14h zumindest eine Antenne 24h, die dazu eingerichtet ist, zumindest ein elektrisches und/oder magnetisches Feld auszustrahlen, das den zumindest einen Detektionsbereich 20h definiert, und/oder den zumindest einen Fremdkörper in Abhängigkeit von zumindest einer Änderung zumindest eines elektrischen und/oder magnetischen Felds zu erfassen. Vorzugsweise bildet ein mechanisches Schutzelement 52h der Werkzeugmaschinenvorrichtung 10h in einem Nahbereich 42h des Bearbeitungswerkzeugs 12h die Antenne 24h. Vorzugsweise ist die Steuer- und/oder Regeleinheit 22h dazu eingerichtet, in Abhängigkeit von dem zumindest einen Signal der Sensoreinheit 14h entsprechend einer Erfassung eines Fremdkörpers in dem Detektionsbereich 20h zumindest eine Bremsung des Bearbeitungswerkzeugs 12h auszulösen, insbesondere durch eine Ansteuerung einer mechanischen Bremseinheit 60h der Werkzeugmaschinenvorrichtung 10h.

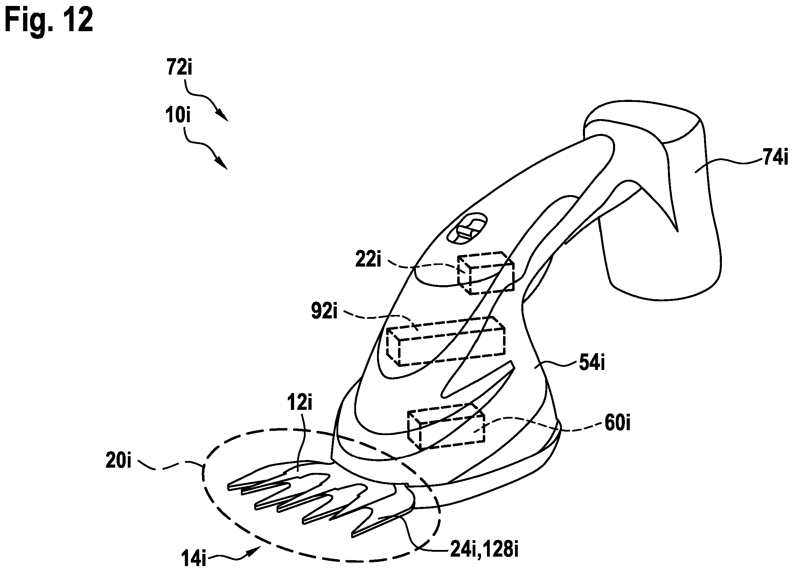

Figur 12 zeigt eine achte alternative Werkzeugmaschine 72i in einer schematischen perspektivischen Darstellung. Die Werkzeugmaschine 72i ist insbesondere als eine Schere, insbesondere als eine Rasenschere, ausgebildet. Die Werkzeugmaschine 72i umfasst insbesondere eine Werkzeugmaschinenvorrichtung 10i. Vorzugsweise ist die Werkzeugmaschinenvorrichtung 10i zu einer schneidenden Bearbeitung eines Werkstücks vorgesehen. Vorzugsweise umfasst die Werkzeugmaschinenvorrichtung 10i zumindest ein motorisch antreibbares Bearbeitungswerkzeug 12i, insbesondere eine Klinge. Insbesondere umfasst die Werkzeugmaschinenvorrichtung 10i ein weiteres, insbesondere feststehendes Bearbeitungswerkzeug 128i, insbesondere eine Klinge, das dazu vorgesehen ist, mit dem Bearbeitungswerkzeug 12i zusammenzuwirken. Vorzugsweise umfasst die Werkzeugmaschinenvorrichtung 10i zumindest eine, insbesondere kapazitive, Sensoreinheit 14i, die dazu eingerichtet ist, zumindest einen Fremdkörper in zumindest einem Detektionsbereich 20i um die Bearbeitungswerkzeuge 12i, 128i zu erfassen, und zumindest eine Steuer- und/oder Regeleinheit 22i, die dazu eingerichtet ist, in Abhängigkeit von zumindest einem Signal der Sensoreinheit 14i zumindest eine Aktion auszulösen. Bevorzugt umfasst die Sensoreinheit 14i zumindest eine Antenne 24i, die dazu eingerichtet ist, zumindest ein elektrisches und/oder magnetisches Feld auszustrahlen, das den zumindest einen Detektionsbereich 20i definiert, und/oder den zumindest einen Fremdkörper in Abhängigkeit von zumindest einer Änderung zumindest eines elektrischen und/oder magnetischen Felds zu erfassen. Vorzugsweise bildet das weitere, insbesondere feststehende, Bearbeitungswerkzeug 128i die Antenne 24i. Alternativ oder zusätzlich ist denkbar, dass das Bearbeitungswerkzeug 12i die Antenne 24i bildet und/oder dass die Antenne 24i an, insbesondere innerhalb von, dem Bearbeitungswerkzeug 12i und/oder dem weiteren Bearbeitungswerkzeug 128i angeordnet ist. Vorzugsweise ist die Steuer- und/oder Regeleinheit 22i dazu eingerichtet, in Abhängigkeit von dem zumindest einen Signal der Sensoreinheit 14i entsprechend einer Erfassung eines Fremdkörpers in dem Detektionsbereich 20i zumindest eine Bremsung des Bearbeitungswerkzeugs 12i auszulösen, insbesondere durch eine Ansteuerung einer mechanischen Bremseinheit 60i der Werkzeugmaschinenvorrichtung 10i.

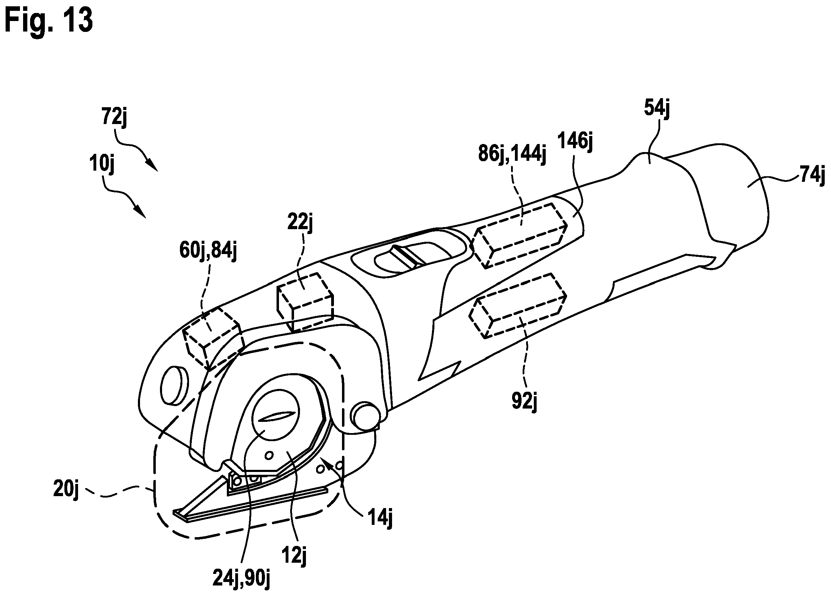

Figur 13 zeigt eine neunte alternative Werkzeugmaschine 72j in einer schematischen perspektivischen Darstellung. Die Werkzeugmaschine 72j ist insbesondere als eine Schere, insbesondere als eine Universalschere, ausgebildet. Die Werkzeugmaschine 72j umfasst insbesondere eine Werkzeugmaschinenvorrichtung 10j. Vorzugsweise ist die Werkzeugmaschinenvorrichtung 10j zu einer schneidenden Bearbeitung eines Werkstücks vorgesehen. Vorzugsweise umfasst die Werkzeugmaschinenvorrichtung 10j zumindest ein motorisch antreibbares Bearbeitungswerkzeug 12j, insbesondere eine Rotationsklinge. Vorzugsweise umfasst die Werkzeugmaschinenvorrichtung 10j zumindest eine, insbesondere kapazitive, Sensoreinheit 14j, die dazu eingerichtet ist, zumindest einen Fremdkörper in zumindest einem Detektionsbereich 20j um das Bearbeitungswerkzeug 12j zu erfassen, und zumindest eine Steuer- und/oder Regeleinheit 22j, die dazu eingerichtet ist, in Abhängigkeit von zumindest einem Signal der Sensoreinheit 14j zumindest eine Aktion auszulösen. Bevorzugt umfasst die Sensoreinheit 14j zumindest eine Antenne 24j, die dazu eingerichtet ist, zumindest ein elektrisches und/oder magnetisches Feld auszustrahlen, das den zumindest einen Detektionsbereich 20j definiert, und/oder den zumindest einen Fremdkörper in Abhängigkeit von zumindest einer Änderung zumindest eines elektrischen und/oder magnetischen Felds zu erfassen.

Vorzugsweise bildet eine Abtriebswelle 90j, auf der das Bearbeitungswerkzeug 12j gelagert ist, die Antenne 24j. Alternativ oder zusätzlich ist denkbar, dass das Bearbeitungswerkzeug 12j die Antenne 24j bildet und/oder dass die Antenne 24j an, insbesondere innerhalb von, dem Bearbeitungswerkzeug 12j und/oder der Abtriebswelle 90j angeordnet ist. Vorzugsweise ist die Steuer- und/oder Regeleinheit 22j dazu eingerichtet, in Abhängigkeit von einem Signal der Sensoreinheit 14j entsprechend einer Erfassung eines Fremdkörpers in dem Detektionsbereich 20j eine Bremsung des Bearbeitungswerkzeugs 12j auszulösen, insbesondere durch eine Ansteuerung einer mechanischen Bremseinheit 60j der Werkzeugmaschinenvorrichtung 10j. Alternativ oder zusätzlich ist vorstellbar, dass die Steuer- und/oder Regeleinheit 22j dazu eingerichtet ist, in Abhängigkeit von dem Signal der Sensoreinheit 14j entsprechend einer Erfassung eines Fremdkörpers in dem Detektionsbereich 20j eine Ausgabe eines, insbesondere haptischen, Warnsignals auszulösen, insbesondere durch eine Ansteuerung einer Vibrationseinheit 144j der Werkzeugmaschinenvorrichtung 10j. Die Vibrationseinheit 144j ist insbesondere an einem Gehäuse 54j der Werkzeugmaschinenvorrichtung 10j, insbesondere an einem von dem Gehäuse 54j zumindest abschnittsweise gebildeten Handgriff 146j, angeordnet.

## Patentansprüche

1. Werkzeugmaschinenvorrichtung mit zumindest einem motorisch antreibbaren Bearbeitungswerkzeug (12a-12j), mit zumindest einer, insbesondere kapazitiven, Sensoreinheit (14a-14j), die dazu eingerichtet ist, zumindest einen Fremdkörper (16a; 16b, 18a; 18c) in zumindest einem Detektionsbereich (20a-20j) um das Bearbeitungswerkzeug (12a-12j) zu erfassen, und mit zumindest einer Steuer- und/oder Regeleinheit (22a-22j), die dazu eingerichtet ist, in Abhängigkeit von zumindest einem Signal der Sensoreinheit (14a-14j) zumindest eine Aktion auszulösen, wobei die Sensoreinheit (14a-14j) zumindest eine Antenne (24a-24j, 26a, 28a, 30a) umfasst, die dazu eingerichtet ist, zumindest ein elektrisches und/oder magnetisches Feld auszustrahlen, das den zumindest einen Detektionsbereich (20a-20j) definiert, und/oder den zumindest einen Fremdkörper (16a; 16b, 18a; 18c) in Abhängigkeit von zumindest einer Änderung zumindest eines elektrischen und/oder magnetischen Felds zu erfassen, **dadurch gekennzeichnet, dass** die Steuer- und/oder Regeleinheit (22a; 22b; 22d-22j) dazu eingerichtet ist, in Abhängigkeit von dem zumindest einen Signal der Sensoreinheit (14a-14j) zumindest eine Bewegungskenngröße des zumindest einen Fremdkörpers (16a; 16b, 18a; 18c) und/oder zumindest einen Abstand (32a; 32b, 34a; 34b, 36a; 36c) des zumindest einen Fremdkörpers (16a; 16b, 18a; 18b) von dem Bearbeitungswerkzeug (12a-12j) zu ermitteln, und in Abhängigkeit von der zumindest einen Bewegungskenngröße des zumindest einen Fremdkörpers (16a; 16b, 18a; 18c) und/oder von dem zumindest einen Abstand (32a; 32b, 34a; 34b, 36a; 36c) des zumindest einen Fremdkörpers (16a; 16b, 18a; 18b) von dem Bearbeitungswerkzeug (12a; 12b; 12d-12j) und in Abhängigkeit von einer minimalen Stillstandbremszeit des Bearbeitungswerkzeugs (12a; 12b; 12d-12j) eine Berührungswahrscheinlichkeit des zumindest einen Fremdkörpers (16a; 16b, 18a; 18c) mit dem sich bewegenden Bearbeitungswerkzeug (12a; 12b; 12d-12j) zu ermitteln.

2. Werkzeugmaschinenvorrichtung nach Anspruch 1, **dadurch gekennzeichnet, dass** die Sensoreinheit (14a-14j) zumindest ein, insbesondere einteilig mit der Antenne (24a-24j, 26a, 28a, 30a) ausgebildetes, Feldabschirmelement (148a-148j) umfasst, welches dazu eingerichtet ist, ein von der Antenne (24a-24j, 26a, 28a, 30a) ausgestrahltes elektrisches und/oder magnetisches Feld entlang von zumindest einer Ausstrahlungsrichtung (150a-150j) abzuschirmen.

3. Werkzeugmaschinenvorrichtung nach Anspruch 1 oder 2, **dadurch gekennzeichnet, dass** die Sensoreinheit (14a-14j) zumindest eine elektrische oder elektronische Abschirmschaltung (154a-154j) umfasst, die dazu eingerichtet ist, ein von der Antenne (24a-24j, 26a, 28a, 30a) ausgestrahltes elektrisches und/oder magnetisches Feld entlang von zumindest einer Ausstrahlungsrichtung abzuschirmen.

4. Werkzeugmaschinenvorrichtung nach einem der vorhergehenden Ansprüche, **dadurch gekennzeichnet, dass** die Steuer- und/oder Regeleinheit (22a-22j) dazu eingerichtet ist, in Abhängigkeit von unterschiedlichen ermittelten Bewegungskenngrößen des zumindest einen Fremdkörpers (16a; 16b, 18a; 18c) und/oder in Abhängigkeit von unterschiedlichen ermittelten Abständen (32a; 32b, 34a; 34b, 36a; 36c) des zumindest einen Fremdkörpers (16a; 16b, 18a; 18b) von dem Bearbeitungswerkzeug (12a-12j) unterschiedliche Aktionen auszulösen.

5. Werkzeugmaschinenvorrichtung nach Anspruch 1, **dadurch gekennzeichnet, dass** die Steuer- und/oder Regeleinheit (22a; 22b; 22d-22j) dazu eingerichtet ist, in Abhängigkeit von der Berührungswahrscheinlichkeit kleiner als ein Wahrscheinlichkeitsschwellwert eine andere Aktion auszulösen als in Abhängigkeit von der Berührungswahrscheinlichkeit größer als der Wahrscheinlichkeitsschwellwert.

6. Werkzeugmaschinenvorrichtung nach einem der vorhergehenden Ansprüche, **dadurch gekennzeichnet, dass** die Steuer- und/oder Regeleinheit (22a-22j) dazu eingerichtet ist, unterschiedliche von der Sensoreinheit (14a-14j) erfasste Fremdkörper (16a; 16b, 18a; 18c) zu klassifizieren und in Abhängigkeit von unterschiedlichen Klassifizierungen unterschiedliche Aktionen auszulösen.

7. Werkzeugmaschinenvorrichtung nach einem der vorhergehenden Ansprüche, **dadurch gekennzeichnet, dass** die Steuer- und/oder Regeleinheit (22c) dazu eingerichtet ist, die zumindest eine Aktion in Abhängigkeit von zumindest einem Parameter, insbesondere in Abhängigkeit von zumindest einer Abmessung (38c), des Bearbeitungswerkzeugs (12c) auszulösen.

8. Werkzeugmaschinenvorrichtung nach einem der vorhergehenden Ansprüche, **gekennzeichnet durch** zumindest eine weitere Sensoreinheit (40a; 40b), die zumindest ein in einem als Führungsbereich ausgebildeten Nahbereich (42a; 42b) des Bearbeitungswerkzeugs (12a; 12b) angeordnetes Kontaktsensorelement (44a; 44b) zu einer Erfassung von zumindest einem Körperteil (46a; 46b) eines Bedieners (48a; 48b) aufweist.

9. Werkzeugmaschinenvorrichtung nach Anspruch 8, **dadurch gekennzeichnet, dass** die Steuer- und/oder Regeleinheit (22a; 22b) dazu eingerichtet ist, in Abhängigkeit von zumindest einem Signal der weiteren Sensoreinheit (40a; 40b) zumindest teilweise selbstständig zumindest einen Parameter, insbesondere den zumindest einen Detektionsbereich (20a; 20b), anzupassen.

10. Werkzeugmaschinenvorrichtung nach einem der vorhergehenden Ansprüche, **dadurch gekennzeichnet, dass** die zumindest eine Antenne (24a, 26a, 28a, 30a) ringförmig um eine Längsachse (50a) des Bearbeitungswerkzeugs (12a) angeordnet ist.

11. Werkzeugmaschinenvorrichtung nach einem der vorhergehenden Ansprüche, **dadurch gekennzeichnet, dass** die zumindest eine Antenne (24b) parallel zu einer Längsachse (50b) des Bearbeitungswerkzeugs (12b) angeordnet ist.

12. Werkzeugmaschinenvorrichtung nach einem der vorhergehenden Ansprüche, **dadurch gekennzeichnet, dass** die zumindest eine Antenne (24d; 24h) in zumindest ein mechanisches Schutzelement (52d; 52h) in einem Nahbereich (42d; 42h) des Bearbeitungswerkzeugs (12d; 12h) integriert ist und/oder dass die zumindest eine Antenne (24d; 24h) dazu eingerichtet ist, das mechanische Schutzelement (52d; 52h) zu ersetzen.

13. Werkzeugmaschinenvorrichtung nach einem der vorhergehenden Ansprüche, **gekennzeichnet durch** zumindest ein Gehäuse (54f), von dem die Sensoreinheit (14f) entkoppelbar ist, wobei die Sensoreinheit (14f) zumindest eine, insbesondere drahtlose, Kommunikationseinheit (56f) zu einer Bereitstellung des zumindest einen Signals an die Steuer- und/oder Regeleinheit (22f) aufweist.

14. Werkzeugmaschinenvorrichtung nach einem der vorhergehenden Ansprüche, **gekennzeichnet durch** zumindest eine Ausgabeeinheit (58c) zu einer Ausgabe des zumindest einen Bearbeitungswerkzeugs (12c), wobei die Steuer- und/oder Regeleinheit (22c) dazu eingerichtet ist, in Abhängigkeit von dem zumindest einen Signal der Sensoreinheit (14c) die Ausgabeeinheit (58c) zu einer Unterbindung oder zu einer Freigabe der Ausgabe des zumindest einen Bearbeitungswerkzeugs (12c) anzusteuern.

15. Werkzeugmaschinenvorrichtung nach einem der vorhergehenden Ansprüche, **gekennzeichnet durch** zumindest eine von der Steuer- und/oder Regeleinheit (22e) ansteuerbare mechanische Bremseinheit (60e), die dazu vorgesehen ist, das Bearbeitungswerkzeug (12e) abzubremsen und die zumindest teilweise von zumindest einem selbsthemmenden Getriebe (62e), insbesondere von einem Schneckengetriebe, ausgebildet ist.

16. Werkzeugmaschinenvorrichtung nach einem der vorhergehenden Ansprüche, **gekennzeichnet durch** zumindest eine Schutzeinheit (64a), die zumindest ein Abschirmelement (66a) aufweist, wobei die Steuer- und/oder Regeleinheit (22a) dazu eingerichtet ist, in Abhängigkeit von dem zumindest einen Signal der Sensoreinheit (14a) die Schutzeinheit (64a) zu einer Beförderung des zumindest einen Abschirmelements (66a) um das Bearbeitungswerkzeug (12a) anzusteuern.

17. Werkzeugmaschinenvorrichtung nach einem der vorhergehenden Ansprüche, **gekennzeichnet durch** zumindest eine Einzugseinheit (68a), wobei die Steuer- und/oder Regeleinheit (22a) dazu eingerichtet ist, in Abhängigkeit von dem zumindest einen Signal der Sensoreinheit (14a) die Einzugseinheit (68a) zu einer Beförderung des Bearbeitungswerkzeugs (12a) aus einem Bearbeitungsbereich (70a) anzusteuern.

18. Verfahren zum Betrieb einer Werkzeugmaschinenvorrichtung nach einem der vorhergehenden Ansprüche, **dadurch gekennzeichnet, dass** in zumindest einem Verfahrensschritt mittels zumindest einer Antenne (24a-24j, 26a, 28a, 30a) zumindest ein elektrisches und/oder magnetisches Feld ausgestrahlt wird, von dem zumindest ein Detektionsbereich (20a-20j) um zumindest ein Bearbeitungswerkzeug (12a-12j) der Werkzeugmaschinenvorrichtung definiert wird, und/oder dass mittels der zumindest einen Antenne (24a-24j, 26a, 28a, 30a) zumindest ein Fremdkörper (16a; 16b, 18a; 18c) in Abhängigkeit von zumindest einer Änderung zumindest eines elektrischen und/oder magnetischen Felds erfasst wird.

19. Werkzeugmaschine mit zumindest einer Werkzeugmaschinenvorrichtung nach einem der Ansprüche 1 bis 17.

## Claims

1. Power tool device having at least one motor-drivable machining tool (12a-12j), having at least one, in particular capacitive, sensor unit (14a-14j) which is configured to sense at least one foreign body (16a; 16b, 18a; 18c) in at least one detection area (20a-20j) around the machining tool (12a-12j), and having at least one open-loop and/or closed-loop control unit (22a-22j) which is configured to trigger at least one action on the basis of at least one signal from the sensor unit (14a-14j), wherein the sensor unit (14a-14j) comprises at least one antenna (24a-24j, 26a, 28a, 30a) which is configured to emit at least one electric and/or magnetic field which defines the at least one detection area (20a-20j), and/or to sense the at least one foreign body (16a; 16b, 18a; 18c) on the basis of at least one change in at least one electric and/or magnetic field, **characterized in that** the open-loop and/or closed-loop control unit (22a; 22b; 22d-22j) is configured to determine at least one movement characteristic of the at least one foreign body (16a; 16b, 18a; 18c) and/or at least one distance (32a; 32b, 34a; 34b, 36a; 36c) of the at least one foreign body (16a; 16b, 18a; 18b) from the machining tool (12a-12j) on the basis of the at least one signal from the sensor unit (14a-14j), and to determine a probability of contact of the at least one foreign body (16a; 16b, 18a; 18c) with the moving machining tool (12a; 12b; 12d-12j) on the basis of the at least one movement characteristic of the at least one foreign body (16a; 16b, 18a; 18c) and/or of the at least one distance (32a; 32b, 34a; 34b, 36a; 36c) of the at least one foreign body (16a; 16b, 18a; 18b) from the machining tool (12a; 12b; 12d-12j) and on the basis of a minimum time for braking the machining tool (12a; 12b; 12d-12j) to a standstill.

2. Power tool device according to Claim 1, **characterized in that** the sensor unit (14a-14j) comprises at least one field shielding element (148a-148j) which is formed in particular integrally with the antenna (24a-24j, 26a, 28a, 30a) and is configured to shield an electric and/or magnetic field, emitted by the antenna (24a-24j, 26a, 28a, 30a), in at least one emission direction (150a-150j).

3. Power tool device according to Claim 1 or 2, **characterized in that** the sensor unit (14a-14j) comprises at least one electrical or electronic shielding circuit (154a-154j) which is configured to shield an electric and/or magnetic field, emitted by the antenna (24a-24j, 26a, 28a, 30a), in at least one emission direction.

4. Power tool device according to one of the preceding claims, **characterized in that** the open-loop and/or closed-loop control unit (22a-22j) is configured to trigger different actions on the basis of different determined movement characteristics of the at least one foreign body (16a; 16b, 18a; 18c) and/or on the basis of different determined distances (32a; 32b, 34a; 34b, 36a; 36c) of the at least one foreign body (16a; 16b, 18a; 18b) from the machining tool (12a-12j).

5. Power tool device according to Claim 1, **characterized in that** the open-loop and/or closed-loop control unit (22a; 22b; 22d-22j) is configured to trigger a different action on the basis of the probability of contact being below a probability threshold value than on the basis of the probability of contact being above the probability threshold value.

6. Power tool device according to one of the preceding claims, **characterized in that** the open-loop and/or closed-loop control unit (22a-22j) is configured to classify different foreign bodies (16a; 16b, 18a; 18c) sensed by the sensor unit (14a-14j) and to trigger different actions on the basis of different classifications.

7. Power tool device according to one of the preceding claims, **characterized in that** the open-loop and/or closed-loop control unit (22c) is configured to trigger the at least one action on the basis of at least one parameter, in particular on the basis of at least one dimension (38c), of the machining tool (12c).

8. Power tool device according to one of the preceding claims, **characterized by** at least one further sensor unit (40a; 40b), which has at least one contact sensor element (44a; 44b), arranged in the vicinity (42a; 42b), in the form of a guide region, of the machining tool (12a; 12b), for sensing at least one body part (46a; 46b) of an operator (48a; 48b).

9. Power tool device according to Claim 8, **characterized in that** the open-loop and/or closed-loop control unit (22a; 22b) is configured to adapt at least one parameter, in particular the at least one detection area (20a; 20b), at least partially autonomously on the basis of at least one signal from the further sensor unit (40a; 40b).

10. Power tool device according to one of the preceding claims, **characterized in that** the at least one antenna (24a, 26a, 28a, 30a) is arranged in the form of a ring about a longitudinal axis (50a) of the machining tool (12a).

11. Power tool device according to one of the preceding claims, **characterized in that** the at least one antenna (24b) is arranged parallel to a longitudinal axis (50b) of the machining tool (12b).

12. Power tool device according to one of the preceding claims, **characterized in that** the at least one antenna (24d; 24h) is integrated in at least one mechanical protective element (52d; 52h) in the vicinity (42d; 42h) of the machining tool (12d; 12h), and/or **in that** the at least one antenna (24d; 24h) is configured to replace the mechanical protective element (52d; 52h).

13. Power tool device according to one of the preceding claims, **characterized by** at least one housing (54f) from which the sensor unit (14f) is able to be uncoupled, wherein the sensor unit (14f) has at least one, in particular wireless, communications unit (56f) for providing the at least one signal to the open-loop and/or closed-loop control unit (22f).

14. Power tool device according to one of the preceding claims, **characterized by** at least one dispensing unit (58c) for dispensing the at least one machining tool (12c), wherein the open-loop and/or closed-loop control unit (22c) is configured to control the dispensing unit (58c) to prevent or to enable the dispensing of the at least one machining tool (12c) on the basis of the at least one signal from the sensor unit (14c).

15. Power tool device according to one of the preceding claims, **characterized by** at least one mechanical brake unit (60e) that is controllable by the open-loop and/or closed-loop control unit (22e), is intended to brake the machining tool (12e) and is at least partially in the form of at least one self-locking gear (62e), in particular of a worm gear.

16. Power tool device according to one of the preceding claims, **characterized by** at least one protective unit (64a) which has at least one shielding element (66a), wherein the open-loop and/or closed-loop control unit (22a) is configured to control the protective unit (64a) to move the at least one shielding element (66a) around the machining tool (12a) on the basis of the at least one signal from the sensor unit (14a).

17. Power tool device according to one of the preceding claims, **characterized by** at least one retraction unit (68a), wherein the open-loop and/or closed-loop control unit (22a) is configured to control the retraction unit (68a) to move the machining tool (12a) out of a machining area (70a) on the basis of the at least one signal from the sensor unit (14a).

18. Method for operating a power tool device according to one of the preceding claims, **characterized in that**, in at least one method step, by means of at least one antenna (24a-24j, 26a, 28a, 30a), at least one electric and/or magnetic field is emitted, said field defining at least one detection area (20a-20j) about at least one machining tool (12a-12j) of the power tool device, and/or **in that**, by means of the at least one antenna (24a-24j, 26a, 28a, 30a), at least one foreign body (16a; 16b, 18a; 18c) is sensed on the basis of at least one change in at least one electric and/or magnetic field.

19. Power tool having at least one power tool device according to one of Claims 1 to 17.

## Revendications

1. Dispositif de machine-outil comportant au moins un outil d'usinage (12a-12j) pouvant être entraîné par un moteur, au moins une unité de détection (14a-14j), notamment capacitive, conçue pour détecter au moins un corps étranger (16a; 16b, 18a; 18c) dans au moins une zone de détection (20a-20j) autour de l'outil d'usinage (12a-12j), et au moins une unité de commande et/ou de régulation (22a-22j) conçue pour déclencher au moins une action en fonction d'au moins un signal de l'unité de détection (14a-14j), dans lequel l'unité de détection (14a-14j) comprend au moins une antenne (24a-24j, 26a, 28a, 30a) conçue pour émettre au moins un champ électrique et/ou magnétique qui définit ladite au moins une zone de détection (20a-20j), et/ou pour détecter ledit au moins un corps étranger (16a; 16b, 18a; 18c) en fonction d'au moins une variation d'au moins un champ électrique et/ou magnétique, **caractérisé en ce que** l'unité de commande et/ou de régulation (22a; 22b; 22d-22j) est conçue pour déterminer, en fonction dudit au moins un signal de l'unité de détection (14a-14j), au moins une grandeur caractéristique de mouvement dudit au moins un corps étranger (16a; 16b, 18a; 18c) et/ou au moins une distance (32a; 32b, 34a; 34b, 36a; 36c) entre ledit au moins un corps étranger (16a; 16b, 18a; 18b) et l'outil d'usinage (12a-12j), et pour déterminer, en fonction de ladite au moins une grandeur caractéristique de mouvement dudit au moins un corps étranger (16a; 16b, 18a; 18c) et/ou de ladite au moins une distance (32a; 32b, 34a; 34b, 36a; 36c) entre ledit au moins un corps étranger (16a; 16b, 18a; 18b) et l'outil d'usinage (12a; 12b; 12d-12j), et en fonction d'un temps minimal de freinage jusqu'à l'arrêt de l'outil d'usinage (12a; 12b; 12d-12j), une probabilité de contact dudit au moins un corps étranger (16a; 16b, 18a; 18c) avec l'outil d'usinage (12a; 12b; 12d-12j) en mouvement.

2. Dispositif de machine-outil selon la revendication 1, **caractérisé en ce que** l'unité de détection (14a-14j) comprend au moins un élément de blindage de champ (148a-148j), notamment réalisé d'un seul tenant avec l'antenne (24a-24j, 26a, 28a, 30a), conçu pour faire écran à un champ électrique et/ou magnétique émis par l'antenne (24a-24j, 26a, 28a, 30a) suivant au moins une direction d'émission (150a-150j).

3. Dispositif de machine-outil selon la revendication 1 ou 2, **caractérisé en ce que** l'unité de détection (14a-14j) comprend au moins un circuit de blindage électrique ou électronique (154a-154j) conçu pour faire écran à un champ électrique et/ou magnétique émis par l'antenne (24a-24j, 26a, 28a, 30a) suivant au moins une direction d'émission.

4. Dispositif de machine-outil selon l'une des revendications précédentes, **caractérisé en ce que** l'unité de commande et/ou de régulation (22a-22j) est conçue pour déclencher différentes actions en fonction de différentes grandeurs caractéristiques de mouvement déterminées dudit au moins un corps étranger (16a; 16b, 18a; 18c) et/ou en fonction de différentes distances déterminées (32a; 32b, 34a; 34b, 36a; 36c) entre ledit au moins un corps étranger (16a; 16b, 18a; 18b) et l'outil d'usinage (12a-12j).

5. Dispositif de machine-outil selon la revendication 1, **caractérisé en ce que** l'unité de commande et/ou de régulation (22a; 22b; 22d-22j) est conçue pour déclencher une action différente lorsque la probabilité de contact est inférieure à un seuil de probabilité de celle déclenchée lorsque la probabilité de contact est supérieure audit seuil de probabilité.

6. Dispositif de machine-outil selon l'une des revendications précédentes, **caractérisé en ce que** l'unité de commande et/ou de régulation (22a-22j) est conçue pour classifier différents corps étrangers (16a; 16b, 18a; 18c) détectés par l'unité de détection (14a-14j) et pour déclencher différentes actions en fonction de différentes classifications.

7. Dispositif de machine-outil selon l'une des revendications précédentes, **caractérisé en ce que** l'unité de commande et/ou de régulation (22c) est conçue pour déclencher ladite au moins une action en fonction d'au moins un paramètre, notamment d'au moins une dimension (38c), de l'outil d'usinage (12c).

8. Dispositif de machine-outil selon l'une des revendications précédentes, **caractérisé par** au moins une unité de détection supplémentaire (40a; 40b) comportant au moins un élément de détection de contact (44a; 44b) disposé dans une zone de proximité (42a; 42b) de l'outil d'usinage (12a; 12b), réalisée sous forme de zone de guidage, pour détecter au moins une partie du corps (46a; 46b) d'un opérateur (48a; 48b).

9. Dispositif de machine-outil selon la revendication 8, **caractérisé en ce que** l'unité de commande et/ou de régulation (22a; 22b) est conçue pour adapter au moins partiellement de manière autonome au moins un paramètre, notamment ladite au moins une zone de détection (20a; 20b), en fonction d'au moins un signal de l'unité de détection supplémentaire (40a; 40b).

10. Dispositif de machine-outil selon l'une des revendications précédentes, **caractérisé en ce que** ladite au moins une antenne (24a, 26a, 28a, 30a) est disposée en anneau autour d'un axe longitudinal (50a) de l'outil d'usinage (12a).

11. Dispositif de machine-outil selon l'une des revendications précédentes, **caractérisé en ce que** ladite au moins une antenne (24b) est disposée parallèlement à un axe longitudinal (50b) de l'outil d'usinage (12b).

12. Dispositif de machine-outil selon l'une des revendications précédentes, **caractérisé en ce que** ladite au moins une antenne (24d; 24h) est intégrée dans au moins un élément de protection mécanique (52d; 52h) dans une zone de proximité (42d; 42h) de l'outil d'usinage (12d; 12h) et/ou **en ce que** ladite au moins une antenne (24d; 24h) est conçue pour remplacer l'élément de protection mécanique (52d; 52h).

13. Dispositif de machine-outil selon l'une des revendications précédentes, **caractérisé par** au moins un boîtier (54f) duquel l'unité de détection (14f) peut être désaccouplée, dans lequel l'unité de détection (14f) comporte au moins une unité de communication (56f), notamment sans fil, destinée à fournir ledit au moins un signal à l'unité de commande et/ou de régulation (22f).

14. Dispositif de machine-outil selon l'une des revendications précédentes, **caractérisé par** au moins une unité de délivrance (58c) destinée à délivrer ledit au moins un outil d'usinage (12c), dans lequel l'unité de commande et/ou de régulation (22c) est conçue pour commander, en fonction dudit au moins un signal de l'unité de détection (14c), l'unité de délivrance (58c) afin d'empêcher ou d'autoriser la délivrance dudit au moins un outil d'usinage (12c).

15. Dispositif de machine-outil selon l'une des revendications précédentes, **caractérisé par** au moins une unité de freinage mécanique (60e) pouvant être commandée par l'unité de commande et/ou de régulation (22e), destinée à freiner l'outil d'usinage (12e) et constituée au moins partiellement d'au moins un mécanisme de transmission autobloquant (62e), notamment d'un mécanisme de transmission à vis sans fin.

16. Dispositif de machine-outil selon l'une des revendications précédentes, **caractérisé par** au moins une unité de protection (64a) comportant au moins un élément de protection (66a), dans lequel l'unité de commande et/ou de régulation (22a) est conçue pour commander, en fonction dudit au moins un signal de l'unité de détection (14a), l'unité de protection (64a) afin de déplacer ledit au moins un élément de protection (66a) autour de l'outil d'usinage (12a).

17. Dispositif de machine-outil selon l'une des revendications précédentes, **caractérisé par** au moins une unité de rétraction (68a), dans lequel l'unité de commande et/ou de régulation (22a) est conçue pour commander, en fonction dudit au moins un signal de l'unité de détection (14a), l'unité de rétraction (68a) afin de déplacer l'outil d'usinage (12a) hors d'une zone d'usinage (70a).

18. Procédé de fonctionnement d'un dispositif de machine-outil selon l'une des revendications précédentes, **caractérisé en ce que**, dans au moins une étape du procédé, au moins un champ électrique et/ou magnétique est émis au moyen d'au moins une antenne (24a-24j, 26a, 28a, 30a), ledit champ définissant au moins une zone de détection (20a-20j) autour d'au moins un outil d'usinage (12a-12j) du dispositif de machine-outil, et/ou **en ce qu'**au moins un corps étranger (16a; 16b, 18a; 18c) est détecté au moyen de ladite au moins une antenne (24a-24j, 26a, 28a, 30a) en fonction d'au moins une variation d'au moins un champ électrique et/ou magnétique.

19. Machine-outil comportant au moins un dispositif de machine-outil selon l'une des revendications 1 à 17.
